# EUROPÄISCHE PATENTSCHRIFT

(11) **EP 3 230 336 B1**
(45) Veröffentlichungstag und Bekanntmachung des Hinweises auf die Patenterteilung: **05.01.2022**
(21) Anmeldenummer: 15797955.0
(22) Anmeldetag: 16.11.2015
(51) Int. Cl.: C08G 18/66, C08G 18/75, C08G 18/76, C08G 18/08, C09D 175/04, C08G 18/42

(54) **WÄSSRIGE POLYURETAHN-POLYHARNSTOFF-DISPERSION UND WÄSSRIGER BASISLACK ENTHALTEND DIE DISPERSION**
AQUEOUS POLYURETHANE-POLYUREA DISPERSION AND AQUEOUS BASE COAT CONTAINING THE DISPERSION
DISPERSION DE POLYURÉTHANE-POLYURÉE AQUEUSE ET APPRÊT EN BASE AQUEUSE COMPRENANT LADITE DISPERSION

(30) Priorität: 09.12.2014 EP 14196881
(43) Veröffentlichungstag der Anmeldung: 18.10.2017
(73) Patentinhaber: BASF Coatings GmbH, 48165 Münster (DE)
(72) Erfinder: REUTER, Hardy, 48167 Münster (DE); BLOHM, Matthias, 48165 Münster (DE); STEINMETZ, Bernhard, 97535 Rütschenhausen (DE); JANKOWSKI, Peggy, 97261 Güntersleben (DE); EIERHOFF, Dirk, 48163 Münster (DE); ZIHANG, Thomas, 48324 Sendenhorst (DE)
(74) Vertreter: BASF IP Association
(86) Internationale Anmeldenummer: PCT/EP2015/076683
(87) Internationale Veröffentlichungsnummer: WO 2016/091539

(56) Entgegenhaltungen:
- DE-A1- 3 513 248
- DE-A1- 19 719 925
- DE-A1- 19 922 377
- None

## Beschreibung

Die vorliegende Erfindung betrifft eine wässrige Polyurethan-Polyharnstoff-Dispersion (PD) sowie einen pigmentierten wässrigen Basislack enthaltend die Dispersion (PD). Die wässrige Dispersion (PD) ist erhältlich durch (I) Herstellung einer speziellen Zusammensetzung (Z) enthaltend ein spezielles Isocyanatgruppen-haltiges Intermediat sowie ein spezielles Lösemittel, (II) Dispergierung der Zusammensetzung (Z) in wässriger Phase sowie (III) zumindest teilweise Entfernung des organischen Lösemittels aus der unter (II) erhaltenen Dispersion. Die vorliegende Erfindung betrifft auch ein Verfahren zur Herstellung der genannten Dispersion sowie die Verwendung der Dispersion beziehungsweise eines wässrigen Basislacks enthaltend die Dispersion zur Verbesserung der anwendungstechnischen Eigenschaften von Basislacken beziehungsweise Beschichtungen, die unter Einsatz des Basislacks hergestellt wurden. Insbesondere im Zusammenhang mit dem Aufbau von Mehrschichtlackierungen besitzen die Dispersion (PD) sowie der wässrige Basislack enthaltend diese Dispersion hervorragende anwendungstechnische Eigenschaften.

### Stand der Technik

Mehrschichtlackierungen auf unterschiedlichsten Substraten, beispielsweise Mehrschichtlackierungen auf metallischen Substraten im Bereich der Automobilindustrie, sind bekannt. In der Regel umfassen solche Mehrschichtlackierungen, vom metallischen Substrat aus betrachtet, eine Elektrotauchlackschicht, eine direkt auf die Elektrotauchlackschicht aufgebrachte, meist als Füllerschicht bezeichnete Schicht, mindestens eine Farb- und/oder Effektpigmente enthaltende und in der Regel als Basislackschicht bezeichnete Schicht sowie eine Klarlackschicht. Die grundsätzlichen Zusammensetzungen und Funktionen der genannten Schichten und der zum Aufbau diese Schichten notwendigen Beschichtungsmittel, das heißt Elektrotauchlacke, so genannte Füller, als Basislacke bekannte Farb- und/oder Effektpigmente enthaltende Beschichtungsmittel und Klarlacke, sind bekannt. So dient beispielsweise die Elektrotauchlackschicht grundsätzlich dem Korrosionsschutz des Substrats. Die so genannte Füllerschicht dient hauptsächlich dem Schutz vor mechanischer Beanspruchung wie beispielsweise Steinschlag und zudem dem Ausfüllen von Unebenheiten des Substrats. Die nächste, als Basislackschicht bezeichnete Schicht ist hauptverantwortlich für die Erzeugung von ästhetischen Eigenschaften wie der Farbe und/oder Effekten wie dem Flop, während die dann folgende Klarlackschicht insbesondere der Kratzfestigkeit sowie dem Glanz der Mehrschichtlackierung dient.

Solche Mehrschichtlackierungen sowie Verfahren zu deren Herstellung werden beispielsweise in DE 199 48 004 A1, Seite 17, Zeile 37, bis Seite 19, Zeile 22, oder auch in DE 100 43 405 C1, Spalte 3, Absatz [0018], und Spalte 8, Absatz [0052] bis Spalte 9, Absatz [0057], in Verbindung mit Spalte 6, Absatz [0039] bis Spalte 8, Absatz [0050] beschrieben.

Die bekannten Mehrschichtlackierungen wissen bereits viele der von der Automobilindustrie geforderten anwendungstechnischen Eigenschaften zu erfüllen. Auch hinsichtlich des ökologischen Profils solcher Lackierungen wurden in der näheren Vergangenheit insbesondere durch den vermehrten Einsatz von wässrigen Lacken, beispielsweise wässrigen Basislacken, Fortschritte erzielt.

Ein jedoch immer wieder auftretendes Problem im Zusammenhang mit der Herstellung von Mehrschichtlackierungen liegt in der Ausbildung von ungewünschten Luft-, Lösemittel- und/oder Feuchtigkeitseinschlüssen, die sich in Form von Blasen unterhalb der Oberfläche der Gesamtlackierung bemerkbar machen können und bei der abschließenden Härtung aufbrechen können. Die dadurch entstehenden Löcher in der Lackierung, auch Nadelstiche und Kocher genannt, führen zu einem nachteilhaften optischen Erscheinungsbild. Die anfallenden Mengen an organischen Lösemitteln beziehungsweise Wasser sowie die durch die Applikation eingetragene Luftmenge ist zu groß, als dass die gesamte Menge bei der Härtung ohne die Erzeugung von Fehlstellen aus der Mehrschichtlackierung entweichen kann.

Eine weitere wichtige Eigenschaft von Beschichtungsmitteln ist ein angemessenes rheologisches Verhalten (Applikationsverhalten), nämlich eine ausgeprägte Strukturviskosität. Letztere ist dann gegeben, wenn das Beschichtungsmittel zum einen beim Applikationsvorgang (in der Regel Spritzapplikation) bei der dann gegebenen hohen Scherung eine so niedrige Viskosität hat, dass es vernünftig zerstäubt werden kann, anderseits nach der Applikation auf das Substrat und dann gegebener niedriger Scherung eine so hohe Viskosität aufweist, dass es ausreichend standfest ist und nicht vom Substrat läuft beziehungsweise Läufer ausbildet.

Auch das ökologische Profil von Mehrschichtlackierungen ist noch verbesserungswürdig. Zwar erzielt man durch den Ersatz eines signifikanten Anteils organischer Lösemittel durch Wasser in wässrigen Lacken bereits einen entsprechenden Beitrag. Eine deutliche Verbesserung wäre allerdings durch die Erhöhung des Festkörpergehalts solcher Lacke zu erreichen. Jedoch ist gerade in wässrigen Basislacken, welche Farb- und/oder Effektpigmente enthalten, die Erhöhung des Festkörpergehalts unter gleichzeitiger Wahrung einer annehmbaren Lagerstabilität (Absetzverhalten) und angemessener rheologischer Eigenschaften beziehungsweise ausgeprägter Strukturviskosität sehr schwierig. So wird im Stand der Technik die Strukturviskosität oft durch den Einsatz von anorganischen Schichtsilikaten erreicht. Auch wenn der Einsatz solcher Silikate zu sehr guten strukturviskosen Eigenschaften führen kann, sind die entsprechenden Lacke hinsichtlich ihres Festkörpergehalts verbesserungswürdig.

Die Eigenschaften von Beschichtungsmitteln beziehungsweise Lacken, beispielsweise wässrigen Basislacken, werden maßgeblich von den darin enthaltenen Komponenten, beispielsweise von als Bindemittel eingesetzten Polymeren, bestimmt.

So werden im Stand der Technik verschiedenste spezielle Polymere, deren Einsatz in Beschichtungsmitteln sowie deren vorteilhafter Einfluss auf unterschiedliche anwendungstechnische Eigenschaften von Lackierungen beziehungsweise Beschichtungen beschrieben.

DE 197 19 924 A1 beschreibt ein Verfahren zur Herstellung einer lagerstabilen Dispersion Aminogruppen-haltiger Polyurethane, bei deren Herstellung Isocyanatgruppen-haltige Polyurethan-Präpolymere mit speziellen Polyaminen, welche keine primären Aminogruppen aufweisen, umgesetzt werden und vor oder nach der Umsetzung in Wasser dispergiert werden. Ein möglicher Anwendungsbereich ist die Bereitstellung von Beschichtungsmitteln.

DE 31 37 748 A1 beschreibt lagerstabile wässrige Dispersionen von PolyurethanPolyharnstoffen, bei deren Herstellung ebenfalls ein Isocyanatgruppen-haltiges Polyurethan-Präpolymer mit einen speziellen Polyamin umgesetzt wird. Ein möglicher Anwendungsbereich ist die Bereitstellung von Überzügen von metallischen Substraten.

WO 2014/007915 A1 offenbart ein Verfahren zur Herstellung einer Automobilmehrschichtlackierung, bei dem ein wässriger Basislack eingesetzt wird, der eine wässrige Dispersion eines Polyurethan-Polyharnstoff-Harzes enthält. Durch den Einsatz des Basislacks werden positive Einflüsse auf die optischen Eigenschaften, insbesondere eine Minimierung von Stippen, erreicht.

WO 2012/160053 A1 beschreibt hydrophile Schichtverbunde für medizinische Geräte, wobei bei der Herstellung des Verbunds auch wässrige Dispersionen von Polyurethan-Polyharnstoff-Harzen eingesetzt werden.

Ebenfalls beschrieben wird der Einsatz von Mikrogelen beziehungsweise Dispersionen solcher Mikrogele in unterschiedlichen Lacken, um auf diese Weise verschiedene anwendungstechnische Eigenschaften von Lackierungen zu optimieren. Eine Mikrogel-Dispersion ist bekanntermaßen eine Polymer-Dispersion, in welcher zum einen das Polymer in Form von vergleichsweise kleinen Partikeln mit Teilchengrößen von beispielsweise 0,02 bis 10 Mikrometern vorliegt ("Mikro"-gel). Zum anderen aber sind die Polymer-Partikel zumindest teilweise intramolekular vernetzt, die innere Struktur gleicht also einem typischen polymeren Netzwerk. Aufgrund der molekularen Natur sind diese aber in geeigneten organischen Lösungsmitteln gelöst, makroskopische Netzwerke wären hingegen nur gequollen. Die physikalischen Eigenschaften solcher Systeme mit vernetzten Partikeln in dieser Größenordnung, in der Literatur auch oft mesoskopisch bezeichnet, bewegen sich zwischen den Eigenschaften makroskopischer und mikroskopischer Strukturen molekularer Flüssigkeiten (vergleiche beispielsweise G. Nimtz, P. Marquardt, D. Stauffer, W. Weiss, Science 1988, 242, 1671). Eine genauere Beschreibung von Mikrogelen erfolgt weiter unten.

DE 35 13 248 A1 beschreibt eine Dispersion polymerer Mikropolymerteilchen, wobei als Dispersionsmedium ein flüssiger Kohlenwasserstoff dient. Die Herstellung umfasst die Umsetzung eines Isocyanatgruppen-haltigen Präpolymers mit einem Polyamin wie Diethylentriamin. Als Vorteil wird die Verbesserung des Widerstands gegen das Absacken von Beschichtungen, die die Mikropolymerteilchen enthalten, genannt.

US 4,408,008 beschreibt stabile, kolloidale wässrige Dispersionen von vernetzten Harnstoff-Urethanen, bei deren Herstellung ein in wässriger Lösung dispergiertes Isocyanatgruppen-haltiges Präpolymer enthaltend hydrophile Ethylenoxideinheiten mit polyfunktionellen Amin-Kettenverlängerern umgesetzt wird. Die daraus hergestellten Filme besitzen beispielsweise eine gute Härte und Reißfestigkeit.

EP 1 736 246 A1 beschreibt wässrige Basislacke zur Anwendung im Bereich der Automobillackierung, die ein in Wasser dispergiertes Polyurethan-Harnstoff-Harz enthalten, welches einen vernetzen Anteil von 20 bis 95 % besitzt. Dieses wässrige vernetzte Harz wird in einem zweistufigen Verfahren hergestellt, nämlich durch Herstellung eines Isocyanatgruppen-haltigen Polyurethanpräpolymers und anschließende Umsetzung dieses Präpolymers mit Polyaminen. Das Präpolymer wird in einer Lösung in Aceton mit einem Festkörper von etwa 80 % in Wasser dispergiert und dann mit dem Polyamin umgesetzt. Der Einsatz dieses vernetzten Harzes führt zu vorteilhaften optischen Eigenschaften von Mehrschichtlackierungen.

DE 102 38 349 A1 beschreibt Polyurethan-Mikrogele in Wasser, wobei ein explizit hergestelltes Mikrogel einen vernetzten Gelanteil von 60 % aufweist. Die Mikrogele werden in Wasserbasislacken eingesetzt und führen dort zu vorteilhaften rheologischen Eigenschaften. Zudem werden durch den Einsatz der Wasserbasislacke bei der Herstellung von Mehrschichtlackierungen Vorteile hinsichtlich dekorativer Eigenschaften und Haftungseigenschaften erzielt.

Die vielversprechenden anwendungstechnischen Eigenschaften von Mikrogel-Dispersionen, insbesondere wässrigen Mikrogel-Dispersionen, haben dazu geführt, dass diese Klasse von Polymer-Dispersionen als besonders vielversprechend für den Einsatz in wässrigen Beschichtungsmitteln angesehen wird.

Zu beachten ist jedoch, dass die Herstellung solcher Mikrogel-Dispersionen beziehungsweise Dispersionen von Polymeren mit wie oben beschriebenem vernetztem Gelanteil so gelingen muss, dass nicht nur die genannten vorteilhaften Eigenschaften resultieren, sondern zudem auch keine negativen Einflüsse auf andere wichtige Eigenschaften von wässrigen Beschichtungsmitteln auftreten. So ist es beispielsweise schwierig, Mikrogel-Dispersionen mit Polymerpartikeln bereitzustellen, die zum einen den beschriebenen vernetzten Charakter aufweisen, andererseits aber Partikelgrößen aufweisen, die eine angemessene Lagerstabilität zulassen. Bekanntermaßen besitzen Dispersionen mit vergleichsweise größeren Partikeln im Bereich von beispielsweise größer als 2 Mikrometern (mittlere Teilchengröße) eine erhöhtes Absetzverhalten und damit eine verschlechterte Lagerstabilität.

### Aufgabe

Aufgabe der vorliegenden Erfindung war es demnach zunächst, eine wässrige Polymer-Dispersion bereitzustellen, über die es gelingt, vorteilhafte anwendungstechnische Eigenschaften in wässrigen Beschichtungsmitteln, insbesondere Basislacken zu erzielen. Hierunter zu verstehen sind insbesondere Eigenschaften, die letztlich in Lackierungen, insbesondere Mehrschichtlackierungen, bei deren Herstellung ein solcher wässriger Basislack eingesetzt wurde, zum Ausdruck kommen. Erzielt werden sollten vor allen Dingen gute optische Eigenschaften, insbesondere ein gutes Nadelstichverhalten und eine gute Läuferstabilität. Aber auch die mechanischen Eigenschaften wie die Haftung oder die Steinschlagbeständigkeit sollten hervorragend sein. Dabei war allerdings ebenfalls darauf zu achten, dass die wässrige Polymer-Dispersion und daraus hergestellte Basislacke eine gute Lagerstabilität besitzen und die mit der Dispersion formulierten Lacke auf ökologisch vorteilhafte Weise, insbesondere mit einem hohen Festkörpergehalt, hergestellt werden können. Trotz der hohen Festkörpergehalte sollte das rheologische Verhalten der Basislacke hervorragend sein.

### Technische Lösung

Gefunden wurde, dass die genannten Aufgaben gelöst werden konnten durch eine wässrige Polyurethan-Polyharnstoff-Dispersion (PD) mit in der Dispersion enthaltenen Polyurethan-Polyharnstoff-Partikeln mit einer mittleren Teilchengröße von 40 bis 2000 nm und einem Gelanteil von mindestens 50 % erhältlich durch
(I) Herstellung einer Zusammensetzung (Z) enthaltend, jeweils bezogen auf die Gesamtmenge der Zusammensetzung (Z),
   (Z.1) 15 bis 65 Gew.-% mindestens eines Isocyanatgruppen-haltigen Intermediats mit maskierten primären Aminogruppen, dessen Herstellung die Umsetzung
      (Z.1.1) mindestens eines Isocyanatgruppen-haltigen Polyurethan-Präpolymers enthaltend anionische und/oder in anionische Gruppen überführbare Gruppen mit
      (Z.1.2) mindestens einem Polyamin enthaltend mindestens zwei maskierte primäre Aminogruppen und mindestens eine freie sekundäre Aminogruppe
         durch Additionsreaktion von Isocyanatgruppen aus (Z.1.1) mit freien sekundären Aminogruppen aus (Z.1.2) umfasst,
   (Z.2) 35 bis 85 Gew.-% mindestens eines organischen Lösemittels, welches bei einer Temperatur von 20°C eine Löslichkeit in Wasser von höchstens 38 Gew.-% besitzt,
(II) Dispergierung der Zusammensetzung (Z) in wässriger Phase und
(III) zumindest teilweise Entfernung des mindestens einen organischen Lösemittels (Z.2) aus der unter (II) erhaltenen Dispersion.

Die neue wässrige Dispersion (PD) wird in der Folge auch als erfindungsgemäße wässrige Dispersion bezeichnet. Bevorzugte Ausführungsformen der erfindungsgemäßen wässrigen Dispersion (PD) gehen aus der folgenden Beschreibung sowie den Unteransprüchen hervor.

Ebenfalls Gegenstand der vorliegenden Erfindung ist ein Verfahren zur Herstellung der erfindungsgemäßen wässrigen Dispersion (PD) sowie ein pigmentierter wässriger Basislack enthaltend die wässrige Dispersion (PD).

Gegenstand der vorliegenden Erfindung ist auch ein Verfahren zur Herstellung von Mehrschichtlackierungen unter Einsatz des pigmentierten wässrigen Basislacks sowie die mit Hilfe des besagten Verfahrens herstellbaren Mehrschichtlackierungen. Zudem betrifft die vorliegende Erfindung die Verwendung des pigmentierten wässrigen Basislacks zur Verbesserung anwendungstechnischer Eigenschaften von Mehrschichtlackierungen.

Es hat sich gezeigt, dass durch den Einsatz der erfindungsgemäßen Dispersion (PD) in wässrigen Basislacken hervorragende anwendungstechnische Eigenschaften von Mehrschichtlackierungen, die unter Einsatz der Basislacke hergestellt worden sind, erzielt werden können. Vor allen Dingen zu nennen sind gute optische Eigenschaften, insbesondere ein gutes Nadelstichverhalten und eine gute Läuferstabilität. Aber auch die mechanischen Eigenschaften wie die Haftung oder die Steinschlagbeständigkeit sind hervorragend. Gleichzeitig weisen die wässrigen Dispersionen (PD) und daraus hergestellte Basislacke eine gute Lagerstabilität auf. Zudem können die mit der Dispersion formulierten Lacke auf ökologisch vorteilhafte Weise, insbesondere mit einem hohen Festkörpergehalt, hergestellt werden.

### Beschreibung

Die erfindungsgemäße wässrige Dispersion (PD) ist eine Polyurethan-Polyharnstoff-Dispersion. Dies bedeutet also, dass die in der Dispersion vorhandenen Polymer-Partikel Polyurethan-Polyharnstoff-basiert sind. Solche Polymere sind grundsätzlich durch an sich bekannte Polyaddition von beispielsweise Polyisocyanaten mit Polyolen sowie Polyaminen herstellbar. Im Hinblick auf die erfindungsgemäße Dispersion (PD) beziehungsweise die in ihr enthaltenen Polymer-Partikel sind jedoch spezielle, in der Folge erläuterte Bedingungen zu beachten.

Die in der wässrigen Polyurethan-Polyharnstoff-Dispersion (PD) enthaltenen Polyurethan-Polyharnstoff-Partikel besitzen einen Gelanteil von mindestens 50 % (Messmethode siehe Beispielteil). Zudem besitzen die in der Dispersion (PD) enthaltenen Polyurethan-Polyharnstoff-Partikel eine mittlere Teilchengröße (auch mittlere Partikelgröße genannt) von 40 bis 2000 Nanometern (nm) (Messmethode siehe Beispielteil).

Bei den erfindungsgemäßen Dispersionen (PD) handelt es sich also um Mikrogel-Dispersionen. Denn wie bereits oben beschrieben, handelt es sich bei einer Mikrogel-Dispersion um Polymer-Dispersionen, in welchen zum einen das Polymer in Form von vergleichsweise kleinen Partikeln beziehungsweise Mikro-Partikeln vorliegt, zum anderen die Polymer-Partikel zumindest teilweise intramolekular vernetzt sind. Letzteres bedeutet, dass die innerhalb eines Partikels vorhandenen Polymerstrukturen einem typischen makroskopischen Netzwerk gleichen mit dreidimensionaler Netzwerkstruktur. Makroskopisch betrachtet handelt es sich bei einer solchen Mikrogel-Dispersion aber nach wie vor um eine Dispersion von Polymerpartikeln in einem Dispersionsmedium, beispielsweise Wasser. Zwar können die Partikel auch untereinander zum Teil Vernetzungsbrücken aufweisen (dies ist rein herstellungsbedingt kaum auszuschließen), jedoch ist das System jedenfalls eine Dispersion mit darin enthaltenen diskreten Partikeln, die eine messbare mittlere Teilchengröße aufweisen.

Da die Mikrogele Strukturen repräsentieren, welche zwischen verzweigten und makroskopisch vernetzten Systemen liegen, sie folglich die Charakteristika von in geeigneten organischen Lösungsmitteln löslichen Makromolekülen mit Netzwerkstruktur und unlöslichen makroskopischen Netzwerken kombinieren, kann der Anteil der vernetzten Polymeren beispielsweise erst nach Isolation des festen Polymeren nach Entfernung von Wasser und gegebenenfalls organischen Lösungsmitteln und nachfolgender Extraktion ermittelt werden. Dabei macht man sich zunutze, dass die ursprünglich in geeigneten organischen Lösungsmitteln löslichen Mikrogel-Partikel nach Isolation ihre innere Netzwerkstruktur behalten und sich im Feststoff wie ein makroskopisches Netzwerk verhalten. Die Vernetzung kann über den experimentell zugänglichen Gelanteil überprüft werden. Letztlich handelt es sich beim Gelanteil um den Anteil des Polymers aus der Dispersion, der sich als isolierter Feststoff nicht molekular dispers in einem Lösemittel lösen lässt. Dabei muss ausgeschlossen werden, dass bei der Isolierung des polymeren Feststoffs nachgeschaltete Vernetzungsreaktionen den Gelanteil weiter erhöhen. Dieser unlösliche Anteil entspricht wiederum dem Anteil des in der Dispersion in Form von intramolekular vernetzen Partikeln beziehungsweise Partikelanteilen vorliegenden Polymers.

Im Rahmen der vorliegenden Erfindung hat sich gezeigt, dass lediglich Mikrogel-Dispersionen mit Polymerpartikeln mit Teilchengrößen im erfindungswesentlichen Bereich alle der geforderten anwendungstechnischen Eigenschaften aufweisen. Es kommt also insbesondere auf die Kombination von eher geringen Teilchengrößen und einem trotzdem vorhandenen signifikanten vernetzten Anteil beziehungsweise Gelanteil an. Nur auf diese Weise sind die vorteilhaften Eigenschaften, insbesondere die Kombination von guten optischen und mechanischen Eigenschaften von Mehrschichtlackierungen einerseits und ein hoher Festkörper sowie eine gute Lagerstabilität von wässrigen Basislacken andererseits, zu erreichen.

Die in der wässrigen Polyurethan-Polyharnstoff-Dispersion (PD) enthaltenen Polyurethan-Polyharnstoff-Partikel besitzen vorzugsweise einen Gelanteil von mindestens 60 %, besonders bevorzugt von mindestens 70 %, insbesondere bevorzugt von mindestens 80 %. Der Gelanteil kann also bis zu 100 % beziehungsweise annähernd 100 %, beispielsweise 99 % oder 98 % betragen. In einem solchen Fall liegt also das gesamte beziehungsweise annähernd das gesamte Polyurethan-Polyharnstoff-Polymer in Form von vernetzten Partikeln vor.

Die in der Dispersion (PD) enthaltenen Polyurethan-Polyharnstoff-Partikel besitzen vorzugsweise eine mittlere Teilchengröße von 40 bis 1500 nm, nochmals bevorzugt von 100 bis 1000 nm, darunter bevorzugt 110 bis 500 nm und nochmals bevorzugt 120 bis 300 nm. Ein ganz besonders bevorzugter Bereich liegt von 130 bis 250 nm.

Die erhaltene Polyurethan-Polyharnstoff-Dispersion (PD) ist wässrig.

Der Ausdruck "wässrig" ist dem Fachmann in diesem Zusammenhang bekannt. Gemeint ist grundsätzlich ein System, das als Dispersionsmedium nicht ausschließlich oder hauptsächlich organische Lösemittel (auch Lösungsmittel genannt) enthält, sondern das im Gegenteil als Dispersionsmedium einen signifikanten Anteil Wasser enthält. Bevorzugte Ausführungsformen des wässrigen Charakters, die anhand des Maximalgehalts organischer Lösemittel und/oder anhand des Gehalts an Wasser definiert sind, werden weiter unten beschrieben.

Die wässrige Dispersion (PD) kann durch ein spezielles dreistufiges Verfahren, nämlich durch das ebenfalls erfindungsgemäße Verfahren zur Herstellung einer wässrigen Dispersion (PD), erhalten werden.

In einem ersten Schritt (I) wird eine spezielle Zusammensetzung (Z) hergestellt.

Die Zusammensetzung (Z) enthält mindestens ein, bevorzugt genau ein spezielles Isocyanatgruppen-haltiges Intermediat (Z.1) mit maskierten primären Aminogruppen.

Die Herstellung des Intermediats (Z.1) umfasst die Umsetzung mindestens eines Isocyanatgruppen-haltigen Polyurethan-Präpolymers (Z.1.1) enthaltend anionische und/oder in anionische Gruppen überführbare Gruppen mit mindestens einem Polyamin (Z.1.2) enthaltend mindestens zwei maskierte primäre Aminogruppen und mindestens eine freie sekundäre Aminogruppe. Das Intermediat ist also herstellbar durch Umsetzung der Komponenten (Z.1.1) und (Z.1.2).

Isocyanatgruppen-haltige Polyurethan-Polymere enthaltend anionische und/oder in anionische Gruppen überführbare Gruppen sind grundsätzlich bekannt. Im Rahmen der vorliegenden Erfindung wird die Komponente (Z.1.1) der besseren Übersichtlichkeit halber als Präpolymer bezeichnet. Es handelt sich nämlich um ein als Vorstufe zu bezeichnendes Polymer, da es als Ausgangskomponente zur Herstellung einer anderen Komponente, nämlich dem Intermediat (Z.1), eingesetzt wird.

Für die Herstellung der Isocyanatgruppen-haltigen Polyurethan-Präpolymere (Z.1.1) enthaltend anionische und/oder in anionische Gruppen überführbare Gruppen können die dem Fachmann bekannten aliphatischen, cycloaliphatischen, aliphatischcycloaliphatischen, aromatischen, aliphatisch-aromatischen und/oder cycloaliphatisch-aromatischen Polyisocyanate eingesetzt werden. Bevorzugt werden Diisocyanate eingesetzt. Beispielhaft seien folgende Diisocyanate genannt: 1,3-oder 1,4-Phenylendiisocyanat, 2,4- oder 2,6-Toluylendiisocyanat, 4,4'- oder 2,4'-Diphenylmethandiisocyanat, 1,4- oder 1,5-Naphthylendiisocyanat, Diisocyanatodiphenylether, Trimethylendiisocyanat, Tetramethylendiisocyanat, Ethylethylendiisocyanat, 2,3-Dimethylethylendiisocyanat, 1-Methyltrimethylendiisocyanat, Pentamethylendiisocyanat, 1,3-Cyclopentylendiisocyanat, Hexamethylendiisocyanat, Cyclohexylendiisocyanat, 1,2-Cyclohexylendiisocyanat, Octamethylendiisocyanat, Trimethylhexandiisocyanat, Tetramethylhexandiisocyanat, Decamethylendiisocyanat, Dodecamethylendiisocyanat, Tetradecamethylendiisocyanat, Isophorondiisocyanat (IPDI), 2-Isocyanato-propylcyclohexyl-isocyanat, Dicyclohexylmethan-2,4'-diisocyanat, Dicyclohexylmethan-4,4'-diisocyanat, 1,4- oder 1,3-Bis(isocyanatomethyl)cyclohexan, 1,4- oder 1,3- oder 1,2-Diisocyanatocyclohexan, 2,4- oder 2,6-Diisocyanato-1-methylcyclohexan, 1-Isocyanatomrthyl-5-isocyanato-1,3,3-trimethylcyclohexan, 2,3-Bis(8-isocyanatooctyl)-4-octyl-5-hexyl-cyclohexen, Tetramethylxylylendiisocyanate (TMXDI) wie m-Tetramethylxylylendiisocyanat oder Mischungen aus diesen Polyisocyanaten. Auch der Einsatz unterschiedlicher Dimere und Trimere der genannten Diisocyanate wie Uretdione und Isocyanurate ist natürlich möglich. Es können auch Polyisocyanate von höherer Isocyanatfunktionalität verwendet werden. Beispiele dafür sind Tris(4-Isocyanatophenyl)methan, 1,3,4-Triisocyanatobenzol, 2,4,6-Triisocyanatotoluol, 1,3,5-Tris(6-Isocyanatohexylbiuret), Bis-(2,5-Diisocyanato-4-methylphenyl)methan. Gegebenenfalls kann die Funktionalität durch Reaktion mit Monoalkoholen bzw. sekundären Aminen herabgesetzt werden. Bevorzugt ist aber der Einsatz von Diisocyanaten, insbesondere bevorzugt der Einsatz von aliphatischen Diisocyanaten, wie Hexamethylendiisocyanat, Isophorondiisocyanat (IPDI), Dicyclohexylmethan-4,4'-diisocyanat, 2,4- oder 2,6-Diisocyanato-1-methylcyclohexan, m-Tetramethylxylylendiisocyanat (m-TMXDI). Als aliphatisch wird ein Isocyanat dann bezeichnet, wenn die Isocyantgruppen an aliphatische Gruppen angebunden sind, das heißt in alpha-Position zu einer Isocyanatgruppe kein aromatischer Kohlenstoff vorhanden ist.

Zur Herstellung der Präpolymere (Z.1.1) werden die genannten Polyisocyanate in der Regel unter Bildung von Urethanen mit Polyolen, insbesondere Diolen, umgesetzt.

Beispiele geeigneter Polyole sind gesättigte oder olefinisch ungesättigte Polyesterpolyole und/oder Polyetherpolyole. Insbesondere werden als Polyole Polyesterpolyole, insbesondere solche mit einem zahlenmittleren Molekulargewicht von 400 bis 5000 g/mol (Messmethode siehe Beispielteil), eingesetzt. Solche Polyesterpolyole, bevorzugt Polyesterdiole, können auf bekannte Weise durch Umsetzung von entsprechenden Polycarbonsäuren, bevorzugt Dicarbonsäuren, und/oder deren Anhydriden mit entsprechenden Polyolen, bevorzugt Diolen, durch Veresterung hergestellt werden. Natürlich können gegebenenfalls zusätzlich auch anteilig Monocarbonsäuren und/oder Monoalkohole zur Herstellung eingesetzt werden. Die Polyesterdiole sind bevorzugt gesättigt, insbesondere gesättigt und linear.

Beispiele für geeignete aromatische Polycarbonsäuren zur Herstellung solcher Polyesterpolyole, bevorzugt Polyesterdiole, sind Phthalsäure, Isophthalsäure und Terephthalsäure, von denen Isophthalsäure vorteilhaft ist und deshalb bevorzugt verwendet wird. Beispiele für geeignete aliphatische Polycarbonsäuren sind Oxalsäure, Malonsäure, Bernsteinsäure, Glutarsäure, Adipinsäure, Pimelinsäure, Korksäure, Azelainsäure, Sebacinsäure, Undecandicarbonsäure und Dodecandicarbonsäure oder auch Hexahydrophthalsäure, 1,3-Cyclohexandicarbonsäure, 1,4-Cyclohexandicarbonsäure, 4-Methylhexahydrophthalsäure, Tricyclodecandicarbonsäure sowie Tetrahydrophthalsäure. Ebenfalls eingesetzt werden können als Dicarbonsäuren Dimerfettsäuren beziehungsweise dimerisierte Fettsäuren, bei denen es sich bekanntermaßen um Gemische handelt, die durch Dimerisierung von ungesättigten Fettsäuren hergestellt werden und beispielsweise unter den Handelsbezeichnungen Radiacid (Firma Oleon) oder Pripol (Firma Croda) zu erhalten sind. Der Einsatz solcher Dimerfettsäuren zur Herstellung von Polyesterdiolen ist im Rahmen der vorliegenden bevorzugt. Bevorzugt eingesetzte Polyole zur Herstellung der Präpolymere (Z.1.1) sind also Polyesterdiole, die unter Einsatz von Dimerfettsäuren hergestellt wurden. Insbesondere bevorzugt sind Polyesterdiole, bei deren Herstellung mindestens 50 Gew.-%, bevorzugt 55 bis 75 Gew.-%, der eingesetzten Dicarbonsäuren Dimerfettsäuren sind.

Beispiele für entsprechende Polyole zur Herstellung von Polyesterpolyolen, bevorzugt Polyesterdiolen, sind Ethylenglykol, 1,2- oder 1,3-Propandiol, 1,2-, 1,3-oder 1,4- Butandiol, 1,2-, 1,3-, 1,4- oder 1,5-Pentandiol, 1,2-, 1,3-, 1,4-, 1,5- oder 1,6-Hexandiol, Hydroxypivalinsäureneopentylester, Neopentylglykol, Diethylenglykol, 1,2-, 1,3- oder 1,4-Cyclohexandiol, 1,2-, 1,3- oder 1,4-Cyclohexandimethanol und Trimethylpentandiol. Bevorzugt werden also Diole eingesetzt. Solche Polyole beziehungsweise Diole können natürlich auch direkt zur Herstellung des Präpolymers (Z.1.1) eingesetzt werden, das heißt direkt mit Polyisocyanaten umgesetzt werden.

Weiterhin zur Herstellung der Präpolymere (Z.1.1) eingesetzt werden können auch Polyamine wie Diamine und/oder Aminoakohole. Beispielhaft seien als Diamine Hydrazin, Alkyl- oder Cycloalkyldiamine wie Propylendiamin und 1-Amino-3-aminomethyl-3,5,5-trimethylcyclohexan und als Aminoalkohole Ethanolamin oder Diethanolamin genannt.

Die Präpolymere (Z.1.1) enthalten anionische und/oder in anionische Gruppen überführbare Gruppen (das heißt Gruppen, die durch den Einsatz bekannter und auch weiter unten genannter Neutralisationsmittel wie Basen in anionische Gruppen überführt werden können). Wie der Fachmann weiß, handelt es sich hierbei um beispielsweise Carbonsäure-, Sulfonsäure- und/oder Phosphonsäuregruppen, insbesondere bevorzugt Carbonsäuregruppen (funktionelle Gruppen, die durch Neutralisationsmittel in anionische Gruppen überführt werden können) sowie aus den vorgenannten funktionellen Gruppen abgeleitete anionische Gruppen wie insbesondere Carboxylat-, Sulfonat- und/oder Phosphonatgruppen, bevorzugt Carboxylatgruppen. Durch die Einführung solcher Gruppen wird bekanntermaßen die Wasserdispergierbarkeit erhöht. Je nach gewählten Bedingungen können die genannten Gruppen anteilig oder nahezu vollständig in der einen Form (beispielsweise Carbonsäure) oder anderen Form (Carboxylat) vorliegen. Ein bestimmender Einflussfaktor liegt beispielsweise im Einsatz der schon angesprochenen und weiter unten noch genauer beschriebenen Neutralisationsmittel. Wird das Präpolymer (Z.1.1) mit solchen Neutralisationsmitteln vermischt, so wird, je nach Menge des Neutralisationsmittels, eine entsprechende Menge der Carbonsäuregruppen in Carboxylatgruppen überführt. Unabhängig davon, in welcher Form die genannten Gruppen vorliegen, wird im Rahmen der vorliegenden Erfindung der besseren Übersichtlichkeit halber aber häufig eine einheitliche Benennung gewählt. Wird beispielsweise für ein Polymer wie für ein Präpolymer (Z.1.1) eine bestimmte Säurezahl angegeben oder wird ein solches Polymer als carboxyfunktionell bezeichnet, sind hiermit immer sowohl die Carbonsäuregruppen als auch die Carboxylatgruppen umfasst. Soll in dieser Hinsicht eine Differenzierung stattfinden, wird dies beispielsweise anhand des Neutralisierungsgrads getan.

Zur Einführung der genannten Gruppen können bei der Herstellung der Präpolymere (Z.1.1) Ausgangsverbindungen eingesetzt werden, die neben bei der Herstellung von Urethanbindungen umzusetzenden Gruppen, bevorzugt Hydroxylgruppen, noch die oben genannten Gruppen, beispielsweise Carbonsäuregruppen, enthalten. Auf diese Weise werden die entsprechenden Gruppen ins Präpolymer eingeführt.

Als entsprechende Verbindungen zur Einführung der bevorzugten Carbonsäuregruppen kommen, sofern Carboxylgruppen-haltig, Polyetherpolyole und/oder Polyesterpolyole in Betracht. Bevorzugt eingesetzt werden allerdings jedenfalls niedermolekulare Verbindungen, die mindestens eine Carbonsäuregruppe und mindestens eine gegenüber Isocyanatgruppen reaktive funktionelle Gruppe, bevorzugt Hydroxylgruppen, aufweisen. Der Ausdruck "niedermolekulare Verbindung" ist im Rahmen der vorliegenden Erfindung so zu verstehen, dass es sich im Gegensatz zu höhermolekularen Verbindungen, insbesondere Polymeren, um solche handelt, denen als vorzugsweise monomeren Verbindungen ein diskretes Molekulargewicht zugeordnet werden kann. Eine niedermolekulare Verbindung ist also insbesondere kein Polymer, denn letztere stellen sich immer als Mischung von Molekülen dar und müssen über mittlere Molekulargewichte beschrieben werden. Vorzugsweise ist unter dem Begriff niedermolekulare Verbindung zu verstehen, dass die entsprechenden Verbindungen ein Molekulargewicht von weniger als 300 g/mol aufweisen. Bevorzugt ist der Bereich von 100 bis 200 g/mol.

In diesem Sinne bevorzugte Verbindungen sind beispielsweise Monocarbonsäuren enthaltend zwei Hydroxylgruppen wie beispielsweise Dihydroxypropionsäure, Dihydroxybernsteinsäure und Dihydroxybenzoesäure. Ganz besonders sind alpha, alpha Dimethylolalkansäuren wie 2,2-Dimethylolessigsäure, 2,2-Dimethylolpropionsäure, 2,2-Dimethylolbuttersäure und 2,2-Dimethylolpentansäure, insbesondere die 2,2-Dimethylolpropionsäure.

Die Präpolymere (Z.1.1) sind also bevorzugt carboxyfunktionell. Sie besitzen, bezogen auf den Festkörper, bevorzugt eine Säurezahl von 10 bis 35 mg KOH/g, insbesondere 15 bis 23 mg KOH/g (Messmethode siehe Beispielteil).

Das zahlenmittlere Molekulargewicht der Präpolymere kann breit variieren und liegt beispielsweise im Bereich von 2000 bis 20000 g/mol, bevorzugt von 3500 bis 6000 g/mol (Messmethode siehe Beispielteil).

Das Präpolymer (Z.1.1) ist Isocyanatgruppen-haltig. Bevorzugt besitzt es, bezogen auf den Festkörper, einen Isocyanatgehalt von 0,5 bis 6,0 Gew.-%, bevorzugt 1,0 bis 5,0 Gew.-%, insbesondere bevorzugt 1,5 bis 4,0 Gew.-% (Messmethode sie Beispielteil).

Da das Präpolymer (Z.1.1) Isocyanatgruppen-haltig ist, wird die Hydroxylzahl des Präpolymers augenscheinlich in der Regel sehr niedrig sein. Bevorzugt ist die Hydroxylzahl des Präpolymers, bezogen auf den Festkörper, kleiner als 15 mg KOH/g, insbesondere kleiner 10 mg KOH/g, nochmals bevorzugt kleiner 5 mg KOH/g (Messmethode siehe Beispielteil).

Die Herstellung der Präpolymere (Z.1.1) kann nach bekannten und etablierten Methoden in Masse oder Lösung erfolgen, insbesondere bevorzugt durch Umsetzung der Ausgangsverbindungen in organischen Lösemitteln, wie bevorzugt Methylethylketon bei Temperaturen von beispielsweise 60 bis 120°C, und gegebenenfalls unter Einsatz von zur Polyurethanherstellung typischen Katalysatoren. Solche Katalysatoren sind dem Fachmann bekannt, ein Beispiel ist Dibutylzinnlaurat. Dabei ist selbstverständlich so vorzugehen, dass das Verhältnis der Ausgangskomponenten so gewählt wird, dass das Produkt, das heißt das Präpolymer (Z.1.1) Isocyanatgruppen enthält. Ebenfalls unmittelbar ersichtlich ist, dass die Lösemittel so ausgewählt werden sollten, dass diese keine unerwünschten Reaktionen mit den funktionellen Gruppen der Ausgangsverbindungen eingehen, gegenüber diesen Gruppen also insoweit inert sind, dass sie nicht die Umsetzung dieser funktionellen Gruppen behindern. Bevorzugt wird die Herstellung bereits in einem wie weiter unten beschriebenen organischen Lösemittel (Z.2) durchgeführt, da dieses ohnehin in der in Stufe (I) des erfindungsgemäßen Verfahrens herzustellenden Zusammensetzung (Z) vorhanden sein muss.

Wie bereits oben angegeben, können die im Präpolymer (Z.1.1) vorhandenen in anionische Gruppen überführbare Gruppen anteilig auch als entsprechend anionische Gruppen vorliegen, beispielsweise durch den Einsatz eines Neutralisationsmittels. Auf diese Weise kann die Wasserdispergierbarkeit der Präpolymere (Z.1.1) und damit auch des Intermediats (Z.1) eingestellt werden.

Als Neutralisationsmittel kommen insbesondere die bekannten basischen Neutralisationsmittel wie beispielsweise Carbonate, Hydrogencarbonate oder Hydroxide von Alkali- und Erdalkalimetallen wie beispielsweise LiOH, NaOH, KOH oder Ca(OH)₂ in Betracht. Ebenso zur Neutralisation geeignet sind und im Rahmen der vorliegenden Erfindung bevorzugt eingesetzt werden organische, stickstoffhaltige Basen wie Amine wie Ammoniak, Trimethylamin, Triethylamin, Tributylamine, Dimethylanilin, Triphenylamin, Dimethylethanolamin, Methyldiethanolamin oder Triethanolamin sowie deren Mischungen.

Die Neutralisation des Präpolymers (Z.1.1) mit den Neutralisationsmitteln, insbesondere mit den stickstoffhaltigen, organischen Basen, kann nach der Herstellung des Präpolymers in organischer Phase, das heißt in Lösung mit einem organischen Lösemittel, insbesondere einem wie unten beschriebenen Lösemittel (Z.2) erfolgen. Natürlich kann das Neutralisationsmittel auch bereits während beziehungsweise vor Beginn der eigentlichen Polymerisation zugegeben werden, wobei dann beispielsweise die Carbonsäuregruppen-haltigen Ausgangsverbindungen neutralisiert werden.

Wenn eine Neutralisation der in anionische Gruppen überführbaren Gruppen, insbesondere der Carbonsäuregruppen, gewünscht wird, kann das Neutralisationsmittel beispielsweise in einer solchen Menge zugesetzt werden, dass ein Anteil von 35 bis 65 % der Gruppen neutralisiert ist (Neutralisationsgrad). Bevorzugt ist ein Bereich von 40 bis 60 % (Berechnungsmethode siehe Beispielteil).

Bevorzugt ist, dass das Präpolymer (Z.1.1) nach seiner Herstellung und vor seinem Einsatz zur Herstellung des Intermediats (Z.1) wie beschrieben neutralisiert wird.

Die Herstellung des Intermediats (Z.1) umfasst die Umsetzung des beschriebenen Präpolymers (Z.1.1) mit mindestens einem, bevorzugt genau einem speziellen Polyamin (Z.1.2).

Das Polyamin (Z.1.2) enthält mindestens zwei maskierte primäre Aminogruppen und mindestens eine freie sekundäre Aminogruppe.

Unter maskierten Aminogruppen sind bekanntermaßen solche zu verstehen, in denen die an sich in freien Aminogruppen vorhandenen Wasserstoffreste am Stickstoff durch reversible Umsetzung mit einem Maskierungsmittel subsituiert sind. Aufgrund der Maskierung können die Aminogruppen nicht wie freie Aminogruppen über Kondensations- oder Additionsreaktionen umgesetzt werden, sind also in dieser Hinsicht nicht reaktiv und unterscheiden sich damit von freien Aminogruppen. Erst die Wiederentfernung des reversibel angelagerten Maskierungsmittels, wodurch wiederum die freien Aminogruppen entstehen, ermöglicht dann augenscheinlich die an sich bekannten Reaktionen der Aminogruppen. Das Prinzip ähnelt damit dem Prinzip der auf dem Gebiet der Polymerchemie ebenfalls bekannten blockierten beziehungsweise maskierten Isocyanate.

Die primären Aminogruppen des Polyamins (Z.1.2) können mit den an sich bekannten Maskierungsmitteln maskiert sein, beispielsweise mit Ketonen und/oder Aldehyden. Bei einer solchen Maskierung entstehen dann also unter Freisetzung von Wasser Ketimine und/oder Aldimine, welche keine Stickstoff-Wasserstoff-Bindungen mehr enthalten, sodass keine typischen Kondensations- oder Additionsreaktionen einer Aminogruppen mit einer weiteren funktionellen Gruppe wie einer Isocyanatgruppe stattfinden können.

Reaktionsbedingungen zur Herstellung eines solchen maskierten primären Amins, beispielsweise eines Ketimins, sind bekannt. So kann beispielsweise unter Zuführung von Wärme zu einer Mischung eines primären Amins mit einem Überschuss eines Ketons, welches gleichzeitig als Lösemittel für das Amin fungiert, eine entsprechende Maskierung realisiert werden. Bevorzugt wird das anfallende Reaktionswasser während der Reaktion entfernt, um die ansonsten mögliche Rückreaktion (Demaskierung) der reversiblen Maskierung zu verhindern.

Auch die Reaktionsbedingungen für eine Demaskierung von maskierten primären Aminogruppen sind an sich bekannt. So ist beispielsweise bereits die Überführung eines maskierten Amins in die wässrige Phase ausreichend, um durch den dann bestehenden Konzentrationsdruck des Wassers das Gleichgewicht wieder auf die Seite der Demaskierung zu verschieben und dadurch unter Verbrauch von Wasser freie primäre Aminogruppen sowie ein freies Keton zu erzeugen.

Aus oben Gesagtem folgt, dass im Rahmen der vorliegenden Erfindung eindeutig zwischen maskierten und freien Aminogruppen unterschieden wird. Wird allerdings eine Aminogruppe im Einzelfall weder als maskiert noch als frei spezifiziert, ist hierunter eine freie Aminogruppe zu verstehen.

Bevorzugte Maskierungsmittel zur Maskierung der primären Aminogruppen des Polyamins (Z.1.2) sind Ketone. Unter den Ketonen sind solche besonders bevorzugt, bei denen es sich um ein wie weiter unten beschriebenes organisches Lösemittel (Z.2) handelt. Denn diese Lösemittel (Z.2) müssen ohnehin in der in Stufe (I) des erfindungsgemäßen Verfahrens herzustellenden Zusammensetzung (Z) vorhanden sein. Bereits oben angegeben ist, dass die Herstellung entsprechender mit einem Keton maskierter primärer Amine besonders gut in einem Überschuss des Ketons gelingt. Durch den Einsatz von Ketonen (Z.2) zur Maskierung kann also der entsprechend bevorzugte Herstellungsprozess von maskierten Aminen zur Anwendung kommen, ohne dass das gegebenenfalls ungewünschte Maskierungsmittel aufwendig abgetrennt werden muss. Stattdessen kann die Lösung des maskierten Amins direkt eingesetzt werden, um das Intermediat (Z.1) herzustellen. Bevorzugte Maskierungsmittel sind Aceton, Methylethylketon, Methylisobutylketon, Diisopropylketon, Cyclopentanon oder Cyclohexanon, besonders bevorzugt sind die Ketone (Z.2) Methylethylketon und Methylisobutylketon.

Die bevorzugte Maskierung mit Ketonen und/oder Aldehyden, insbesondere Ketonen und die dabei erfolgende Herstellung von Ketiminen und/oder Aldiminen hat zudem den Vorteil, dass selektiv primäre Aminogruppen maskiert werden. Vorhandene sekundäre Aminogruppen können augenscheinlich nicht maskiert werden und bleiben damit frei. Daher kann ein Polyamin (Z.1.2), welches neben den mindestens zwei maskierten primären Aminogruppen auch mindestens eine freie sekundäre Aminogruppen enthält, problemlos über die genannten bevorzugten Maskierungsreaktionen aus einem Polyamin, welches ausschließlich freie sekundäre und primäre Aminogruppen enthält, hergestellt werden.

Die Polyamine (Z.1.2) können durch Maskierung der primären Aminogruppen von an sich bekannten Polyaminen enthaltend mindestens zwei primäre Aminogruppen und mindestens eine sekundäre Aminogruppe hergestellt werden. In Frage kommen letztlich alle an sich bekannten aliphatischen, aromatischen oder araliphatischen (gemischt aliphatisch-aromatischen) Polyamine mit mindestens zwei primären Aminogruppen und mindestens einer sekundären Aminogruppe. Dies bedeutet, dass neben den genannten Aminogruppen an sich beliebige aliphatische, aromatische oder araliphatische Gruppen vorhanden sein können. Beispielsweise möglich sind einbindige Gruppen, die als endständige Gruppen an einer sekundären Aminogruppe angeordnet sind, oder zweibindige Gruppen, die zwischen zwei Aminogruppen angeordnet sind.

Als aliphatisch werden im Rahmen der vorliegenden Erfindung alle organischen Gruppen bezeichnet, die nicht aromatisch sind. Beispielsweise kann es sich bei den neben den genannten Aminogruppen vorhandenen Gruppen um aliphatische Kohlenwasserstoffgruppen handeln, das heißt Gruppen, die ausschließlich aus Kohlenstoff und Wasserstoff bestehen und nicht aromatisch sind. Diese aliphatischen Kohlenwasserstoffgruppen können linear, verzweigt oder cyclisch sein, wobei sie gesättigt oder ungesättigt sein können. Natürlich können diese Gruppen auch sowohl cyclische und lineare oder verzweigte Anteile enthalten. Möglich ist auch, dass aliphatische Gruppen Heteroatome enthalten, insbesondere in Form von verbrückenden Gruppen wie Ether-, Ester-, Amid- und/oder Urethangruppen. Mögliche aromatische Gruppen sind ebenfalls bekannt und bedürfen keiner weiteren Erläuterung.

Bevorzugt ist, dass die Polyamine (Z.1.2) aus mindestens zwei maskierten primären Aminogruppen, mindestens einer freien sekundären Aminogruppe sowie aliphatisch-gesättigten Kohlenwasserstoffgruppen bestehen.

Ebenfalls bevorzugt ist, dass die Polyamine (Z.1.2) zwei maskierte primäre Aminogruppen und ein oder zwei freie sekundäre Aminogruppen besitzen und sie als primäre Aminogruppen ausschließlich maskierte primäre Aminogruppen und als sekundäre Aminogruppen ausschließlich freie sekundäre Aminogruppen besitzen.

Bevorzugt besitzen die Polyamine insgesamt drei oder vier Aminogruppen, wobei diese ausgewählt sind aus der Gruppe der maskierten primären Aminogruppen und der freien sekundären Aminogruppen.

Ganz besonders bevorzugte Polyamine (Z.1.2) sind also solche, die aus zwei maskierten primären Aminogruppen, ein oder zwei freien sekundären Aminogruppen sowie aliphatisch-gesättigten Kohlenwasserstoffgruppen bestehen.

Beispiele von bevorzugten Polyaminen, aus denen durch Maskierung der primären Aminogruppen Polyamine (Z.1.2) hergestellt werden können, sind Diethylentriamin, 3-(2-Aminoethyl)aminopropylamin, Dipropylentriamin sowie N1-(2-(4-(2-Aminoethyl)piperazin-1-yl)ethyl)ethane-1,2-diamin (eine sekundäre Aminogruppe, zwei zu blockierende primäre Aminogruppen) und Triethylentetramin sowie N,N'-Bis(3-aminopropyl)-ethylendiamin (zwei sekundäre Aminogruppen, zwei zu blockierende primäre Aminogruppen).

Dem Fachmann ist klar, dass schon aus rein synthesetechnischen Gründen nicht immer ein theoretisch-idealisierter quantitativer Umsatz bei der Maskierung von primären Aminogruppen stattfinden kann. Wird beispielweise eine bestimmte Menge eines Polyamins maskiert, kann bei der Maskierung beispielsweise ein Anteil von 95 mol-% oder mehr der primären Aminogruppen maskiert werden (IRspektroskopisch bestimmbar, vergleiche Beispielteil). Besitzt ein Polyamin im nicht maskierten Zustand beispielsweise zwei freie primäre Aminogruppen und werden die primären Aminogruppen einer bestimmten Menge dieses Amins dann maskiert, so wird im Rahmen der vorliegenden Erfindung angegeben, dass dieses Amin zwei maskierte primäre Aminogruppen aufweist, wenn ein Anteil von mehr als 95 mol-% der in der eingesetzten Menge vorhandenen primären Aminogruppen maskiert sind. Dies ist einerseits der schon genannten Tatsache, dass synthesetechnisch nicht immer ein quantitativer Umsatz realisiert werden kann, geschuldet. Andererseits bedeutet die Tatsache, dass mehr als 95 mol-% der primären Aminogruppen maskiert sind, dass der größte Anteil der Gesamtmenge der zur Maskierung eingesetzten Amine tatsächlich ausschließlich maskierte primäre Aminogruppen, nämlich genau zwei maskierte primäre Aminogruppen, enthält.

Die Herstellung des Intermediats (Z.1) umfasst die Umsetzung des Präpolymers (Z.1.1) mit dem Polyamin (Z.1.2) durch Additionsreaktion von Isocyanatgruppen aus (Z.1.1) mit freien sekundären Aminogruppen aus (Z.1.2). Diese an sich bekannte Umsetzung führt dann zur Anbindung des Polyamins (Z.1.2) an das Präpolymer (Z.1.1) unter Ausbildung von Harnstoffbindungen, wodurch letztlich das Intermediat (Z.1) gebildet wird. Es versteht sich von selbst, dass bei der Herstellung des Intermediats (Z.1) bevorzugt keine anderen Amine mit freien oder maskierten sekundären oder freien oder maskierten primären Aminogruppen eingesetzt werden.

Die Herstellung des Intermediats (Z.1) kann nach bekannten und etablierten Methoden in Masse oder Lösung erfolgen, insbesondere bevorzugt durch Umsetzung von (Z.1.1) mit (Z.1.2) in organischen Lösemitteln. Unmittelbar ersichtlich ist, dass die Lösemittel so ausgewählt werden sollten, dass diese keine unerwünschten Reaktionen mit den funktionellen Gruppen der Ausgangsverbindungen eingehen, sich gegenüber diesen Gruppen also inert oder weitgehend inert verhalten. Bevorzugt wird als Lösemittel bei der Herstellung zumindest anteilig bereits ein wie weiter unten beschriebenes organisches Lösemittel (Z.2), insbesondere Methylethylketon, eingesetzt, da dieses ohnehin in der in Stufe (I) des erfindungsgemäßen Verfahrens herzustellenden Zusammensetzung (Z) vorhanden sein muss. Dabei wird bevorzugt eine Lösung eines Präpolymers (Z.1.1) in einem Lösemittel (Z.2) mit einer Lösung eines Polyamins (Z.1.2) in einem Lösemittel (Z.2), vermischt, wobei die beschriebene Umsetzung stattfinden kann.

Natürlich kann das so hergestellte Intermediat (Z.1) bei oder nach der Herstellung mit schon oben beschriebenen Neutralisationsmitteln auf die ebenfalls oben für das Präpolymer (Z.1.1) beschriebene Weise neutralisiert werden. Bevorzugt ist aber, dass das Präpolymer (Z.1.1) bereits in wie oben beschriebener Art vor seinem Einsatz zur Herstellung des Intermediats (Z.1) neutralisiert wird, sodass eine Neutralisierung bei oder nach der Herstellung von (Z.1) nicht mehr relevant ist. In einem solchen Fall ist also der Neutralisationsgrad des Präpolymers (Z.1.1) mit dem Neutralisationsgrad des Intermediats (Z.1) gleichzusetzen. Erfolgt im Rahmen des erfindungsgemäßen Verfahrens überhaupt keine weitere Zugabe von Neutralisationsmitteln, so ist demnach auch der Neutralisationsgrad der in den schließlich hergestellten erfindungsgemäßen Dispersionen (PD) enthaltenen Polymeren mit dem Neutralisationsgrad des Präpolymers (Z.1.1) gleichzusetzen.

Das Intermediat (Z.1) besitzt maskierte primäre Aminogruppen. Dies ist augenscheinlich dadurch zu erreichen, dass bei der Umsetzung des Präpolymers (Z.1.1) und des Polyamins (Z.1.2) die freien sekundären Aminogruppen zur Reaktion gebracht werden, jedoch die maskierten primären Aminogruppen nicht umgesetzt werden. Denn wie schon oben beschrieben wird durch die Maskierung erreicht, dass keine typischen Kondensations- oder Additionsreaktionen mit weiteren funktionellen Gruppen wie Isocyanatgruppen stattfinden können. Selbstverständlich bedeutet dies, dass die Bedingungen bei der Umsetzung so zu wählen sind, dass die maskierten Aminogruppen auch maskiert bleiben, um hierdurch ein Intermediat (Z.1) bereitzustellen. Entsprechende Bedingungen weiß der Fachmann einzustellen und werden beispielsweise durch die ohnehin bevorzugte Reaktion in organischen Lösemitteln realisiert.

Das Intermediat (Z.1) ist Isocyanatgruppen-haltig. Demnach muss bei der Umsetzung von (Z.1.1) und (Z.1.2) das Verhältnis dieser Komponenten selbstverständlich so gewählt werden, dass das Produkt, das heißt das Intermediat (Z.1), Isocyanatgruppen enthält.

Da wie oben beschrieben bei der Umsetzung von (Z.1.1) mit (Z.1.2) freie sekundäre Aminogruppen mit Isocyanatgruppen umgesetzt werden, die primären Aminogruppen aber aufgrund der Maskierung nicht umgesetzt werden, ist damit zunächst unmittelbar klar, dass bei dieser Umsetzung das molare Verhältnis von Isocyanatgruppen von (Z.1.1) zu freien sekundären Aminogruppen von (Z.1.2) größer 1 sein muss. Dieses Merkmal ergibt sich implizit, nichtsdestotrotz eindeutig und unmittelbar aus dem erfindungswesentlichen Merkmal, dass das Intermediat (Z.1) Isocyanatgruppen-haltig ist.

Bevorzugt ist allerdings, dass bei der Umsetzung ein wie folgt definierter Überschuss an Isocyanatgruppen vorliegt. Die molaren Mengen (n) von Isocyanatgruppen, freien sekundären Aminogruppen und maskierten primären Aminogruppen genügen in dieser bevorzugten Ausführungsform der folgenden Bedingung: [ n (Isocyanatgruppen von (Z.1.1)) - n (freie sekundäre Aminogruppen von (Z.1.2)) ] / n (maskierte primäre Aminogruppen von (Z.1.2)) = 1,2/1 bis 4/1, bevorzugt 1,5/1 bis 3/1, ganz besonders bevorzugt 1,8/1 bis 2,2/1, nochmals bevorzugt 2/1.

In diesen bevorzugten Ausführungsformen besitzt das Intermediat (Z.1), welches durch Umsetzung von Isocyanatgruppen von (Z.1.1) mit den freien sekundären Aminogruppen von (Z.1.2) entsteht, im Verhältnis zu den maskierten primären Aminogruppen einen Überschuss von Isocyanatgruppen. Dies wird letztlich dadurch erreicht, dass das molare Verhältnis von Isocyanatgruppen von (Z.1.1) zu der Gesamtmenge von freien sekundären Aminogruppen und maskierten primären Aminogruppen von (Z.1.2) so groß gewählt wird, dass auch nach der Herstellung von (Z.1) und dem entsprechenden Verbrauch von Isocyanatgruppen durch die Umsetzung mit den freien sekundären Aminogruppen ein entsprechender Überschuss der Isocyanatgruppen verbleibt.

Hat beispielsweise das Polyamin (Z.1.2) eine freie sekundäre Aminogruppe und zwei maskierte primäre Aminogruppen, so wird das molare Verhältnis zwischen den Isocyanatgruppen von (Z.1.1) zu dem Polyamin (Z.1.2) in der ganz besonders bevorzugten Ausführungsform mit 5/1 eingestellt. Der Verbrauch von einer Isocyanatgruppe bei der Umsetzung mit der freien sekundären Aminogruppe würde dann bedeuten, dass für die oben genannte Bedingung 4/2 (beziehungsweise 2/1) realisiert ist.

Der Anteil des Intermediats (Z.1) beträgt von 15 bis 65 Gew.-%, bevorzugt von 25 bis 60 Gew.-%, nochmals bevorzugt von 30 bis 55 Gew.-%, insbesondere bevorzugt von 35 bis 52,5 Gew.-% und in einer ganz besonderen Ausführungsform von 40 bis 50 Gew.-%, jeweils bezogen auf die Gesamtmenge der Zusammensetzung (Z).

Die Bestimmung des Anteils eines Intermediats (Z.1) kann wie folgt durchgeführt werden: Es wird der Festkörper einer Mischung, die neben dem Intermediat (Z.1) lediglich organische Lösemittel enthält, bestimmt (Messmethode zur Bestimmung des Festkörpers (auch Festkörpergehalt oder Feststoffgehalt genannt) siehe Beispielteil). Der Festkörper entspricht dann der Menge des Intermediats (Z.1). Durch Berücksichtigung des Festkörpers der Mischung kann damit der Anteil des Intermediats (Z.1) an der Zusammensetzung (Z) ermittelt beziehungsweise festgelegt werden. Da das Intermediat (Z.1) bevorzugt ohnehin in einem organischen Lösemittel hergestellt wird, nach der Herstellung also ohnehin in einer Mischung vorliegt, die neben dem Intermediat lediglich organische Lösemittel enthält, ist dies die Methode der Wahl.

Die Zusammensetzung (Z) enthält zudem mindestens ein spezielles organisches Lösemittel (Z.2).

Die Lösemittel (Z.2) besitzen bei einer Temperatur von 20°C eine Löslichkeit in Wasser von höchstens 38 Gew.-% (Messmethode siehe Beispielteil). Bevorzugt ist die Löslichkeit in Wasser bei einer Temperatur von 20°C kleiner 30 Gew.-%. Ein bevorzugter Bereich ist von 1 bis 30 Gew.-%.

Demzufolge besitzt das Lösemittel (Z.2) eine eher moderate Löslichkeit in Wasser, ist insbesondere nicht vollständig mischbar mit Wasser beziehungsweise besitzt keine unbegrenzte Löslichkeit in Wasser. Vollständig mischbar mit Wasser ist ein Lösemittel dann, wenn es in beliebigen Verhältnissen mit Wasser vermischt werden kann, ohne dass es zu einer Entmischung, das heißt Zweiphasenbildung kommt.

Beispiele von Lösemitteln (Z.2) sind Methylethylketon, Methylisobutylketon, Diisobutylketon, Diethylether, Dibutylether, Dipropylenglykoldimethylether, Ethylenglykoldiethylether, Toluol, Methylacetat, Ethylacetat, Butylacetat, Propylencarbonat, Cyclohexanon oder Gemische dieser Lösemittel. Bevorzugt ist Methylethylketon, welches bei 20°C eine Löslichkeit in Wasser von 24 Gew.-% aufweist.

Keine Lösemittel (Z.2) sind damit Lösemittel wie Aceton, N-Methyl-2-pyrrolidon, N-Ethyl-2-pyrrolidon, Tetrahydrofuran, Dioxan, N-Formylmorpholin, Dimethylformamid oder Dimethylsulfoxid.

Durch die Auswahl der speziellen Lösemittel (Z.2) mit nur begrenzter Wasserlöslichkeit wird insbesondere erreicht, dass bei der in Schritt (II) des erfindungsgemäßen Verfahrens erfolgenden Dispergierung der Zusammensetzung (Z) in wässriger Phase nicht direkt eine homogene Lösung gebildet werden kann. Es wird angenommen, dass die stattdessen vorliegende Dispersion ermöglicht, dass die unter Schritt (II) stattfindenden Vernetzungsreaktionen (Additionsreaktionen von freien primären Aminogruppen und Isocyanatgruppen unter Bildung von Harnstoffbindungen) in eingeschränkten Volumen ablaufen, wodurch letztlich die Bildung der wie oben definierten Mikropartikel ermöglicht wird.

Bevorzugte Lösemittel (Z.2) besitzen neben der beschriebenen Wasserlöslichkeit einen Siedepunkt von höchstens 120°C, besonders bevorzugt von höchstens 90°C (bei Normaldruck, das heißt 1,013 bar). Dies hat Vorteile bei dem weiter unten beschriebenen Schritt (III) des erfindungsgemäßen Verfahrens, das heißt der zumindest teilweisen Entfernung des mindestens einen organischen Lösemittels (Z.2) aus der Dispersion, die in Schritt (II) des erfindungsgemäßen Verfahrens hergestellt wird. Denn augenscheinlich können bei Einsatz der in diesem Sinne bevorzugten Lösemittel (Z.2) diese Lösemittel beispielsweise destillativ entfernt werden, ohne das gleichzeitig signifikante Mengen des in Schritt (II) des erfindungsgemäßen Verfahrens eingebrachten Wassers entfernt werden. Somit entfällt beispielsweise das aufwendige Nachgeben von Wasser zum Erhalt des wässrigen Charakters der Dispersion (PD).

Der Anteil des mindestens einen organischen Lösemittels (Z.2) beträgt von 35 bis 85 Gew.-%, bevorzugt von 40 bis 75 Gew.-%, nochmals bevorzugt von 45 bis 70 Gew.-%, insbesondere bevorzugt von 47,5 bis 65 Gew.-% und in einer ganz besonderen Ausführungsform von 50 bis 60 Gew.-%, jeweils bezogen auf die Gesamtmenge der Zusammensetzung (Z).

Im Rahmen der vorliegenden Erfindung hat sich gezeigt, dass durch die gezielte Kombination eines wie oben spezifizierten Anteils des Intermediats (Z.1) an der Zusammensetzung (Z) und der Auswahl der speziellen Lösemittel (Z.2) nach den in der Folge beschriebenen Schritten (II) und (III) Polyurethan-Polyharnstoff-Dispersionen bereitgestellt werden können, die Polyurethan-Polyharnstoff-Partikel mit der erforderlichen Teilchengröße enthalten, die zudem den erforderlichen Gelanteil aufweisen.

Die beschriebenen Komponenten (Z.1) und (Z.2) machen in Summe bevorzugt mindestens 90 Gew.-% der Zusammensetzung (Z) aus. Bevorzugt machen die beiden Komponenten mindestens 95 Gew.-%, insbesondere mindestens 97,5 Gew.-% der Zusammensetzung (Z) aus. Ganz besonders bevorzugt besteht die Zusammensetzung (Z) aus diesen beiden Komponenten. In diesem Zusammenhang sei darauf hingewiesen, dass im Falle des Einsatzes von wie oben beschriebenen Neutralisationsmitteln diese Neutralisationsmittel bei der Berechnung der Menge eines Intermediats (Z.1) dem Intermediat zugerechnet werden. Denn in diesem Fall besitzt das Intermediat (Z.1) jedenfalls anionische Gruppen, die auf den Einsatz des Neutralisationsmittels zurückgehen. Das nach der Bildung dieser anionischen Gruppen vorhandene Kation wird demzufolge ebenfalls dem Intermediat zugerechnet.

Sofern die Zusammensetzung (Z) neben den Komponenten (Z.1) und (Z.2) noch andere Komponenten enthält, handelt es sich hierbei bevorzugt lediglich um organische Lösemittel. Bevorzugt entspricht der Festkörper der Zusammensetzung (Z) damit dem Anteil des Intermediats (Z.1) an der Zusammensetzung (Z). Die Zusammensetzung (Z) besitzt somit bevorzugt einen Festkörpergehalt von 15 bis 65 Gew.-%, bevorzugt von 25 bis 60 Gew.-%, nochmals bevorzugt von 30 bis 55 Gew.-%, insbesondere bevorzugt von 35 bis 52,5 Gew.-% und in einer ganz besonderen Ausführungsform von 40 bis 50 Gew.-%.

Eine besonders bevorzugte Zusammensetzung (Z) enthält also in Summe mindestens 90 Gew.-% der Komponenten (Z.1) und (Z.2) und enthält neben dem Intermediat (Z.1) ausschließlich organische Lösemittel.

Ein Vorteil der Zusammensetzung (Z) liegt darin, dass sie ohne den Einsatz von umweit- und gesundheitsschädlichen organischen Lösemitteln wie N-Methyl-2-pyrrolidon, Dimethylformamid, Dioxan, Tetrahydrofuran und N-Ethyl-2-pyrrolidon hergestellt werden kann. Demzufolge enthält die Zusammensetzung (Z) bevorzugt weniger als 10 Gew.-%, bevorzugt weniger als 5 Gew.-%, nochmals bevorzugt weniger als 2,5 Gew.-% an organischen Lösemitteln ausgewählt aus der Gruppe bestehend aus N-Methyl-2-pyrrolidon, Dimethylformamid, Dioxan, Tetrahydrofuran und N-Ethyl-2-pyrrolidon. Bevorzugt ist die Zusammensetzung (Z) vollständig frei von diesen organischen Lösemitteln.

In einem zweiten Schritt (II) des erfindungsgemäßen Verfahrens wird die Zusammensetzung (Z) in wässriger Phase dispergiert.

Bekannt ist und auch aus bereits oben Gesagtem folgt, dass damit im Schritt (II) eine Demaskierung der maskierten primären Aminogruppen des Intermediats (Z.1) realisiert wird. Denn durch die Überführung eines maskierten Amins in die wässrige Phase wird unter Verbrauch von Wasser das reversibel angelagerte Maskierungsmittel freigesetzt und es werden freie primäre Aminogruppen gebildet.

Ebenfalls klar ist damit, dass die so entstandenen freien primären Aminogruppen dann mit ebenfalls vorhandenen Isocyanatgruppen des Intermediats (Z.1) beziehungsweise des aus dem Intermediat (Z.1) entstanden demaskierten Intermediats durch Additionsreaktion unter Bildung von Harnstoffbindungen umgesetzt werden.

Bekannt ist auch, dass die Überführung in die wässrige Phase bedeutet, dass grundsätzlich die Möglichkeit besteht, dass Isocyanatgruppen des Intermediats (Z.1) beziehungsweise des aus dem Intermediat (Z.1) entstanden demaskierten Intermediats mit dem Wasser unter Abspaltung von Kohlenstoffdioxid zu freien primären Aminogruppen reagieren, welche dann wiederum mit noch vorhandenen Isocyanatgruppen umgesetzt werden können.

Die oben genannten Reaktionen und Umsetzungen verlaufen selbstverständlich parallel zueinander. Letztlich entsteht dabei durch beispielsweise intermolekulare und intramolekulare Umsetzung beziehungsweise Vernetzung eine Dispersion enthaltend Polyurethan-Polyharnstoff-Partikel mit definierter mittlerer Teilchengröße und definiertem Vernetzungsgrad beziehungsweise Gelanteil.

In Schritt (II) des erfindungsgemäßen Verfahrens wird also die Zusammensetzung (Z) in Wasser dispergiert, wobei eine Demaskierung der maskierten primären Aminogruppen des Intermediats (Z.1) und eine Umsetzung der so entstandenen freien primären Aminogruppen mit den Isocyanatgruppen des Intermediats (Z.1) sowie den Isocyanatgruppen des aus dem Intermediat (Z.1) entstandenen demaskierten Intermediats durch Additionsreaktion erfolgt.

Schritt (II) des erfindungsgemäßen Verfahrens, das heißt die Dispergierung in wässriger Phase, kann auf an sich beliebige Weise erfolgen. Das heißt, es kommt letztlich nur darauf an, dass die Zusammensetzung (Z) mit Wasser beziehungsweise einer wässrigen Phase gemischt wird. Bevorzugt kann die Zusammensetzung (Z), welche nach der Herstellung beispielsweise bei Raumtemperatur, das heißt 20 bis 25°C, oder bei gegenüber Raumtemperatur erhöhter Temperatur von beispielsweise 30 bis 60°C vorliegen kann, in Wasser eingerührt werden, wodurch eine Dispersion entsteht. Das vorgelegte Wasser hat dabei beispielsweise Raumtemperatur. Es kann in reinem Wasser (deionisiertem Wasser) dispergiert werden, das heißt die wässrige Phase besteht lediglich aus Wasser, was bevorzugt ist. Natürlich kann die wässrige Phase neben Wasser auch anteilig typische Hilfsstoffe wie typische Emulgatoren und Schutzkolloide enthalten. Eine Zusammenstellung geeigneter Emulgatoren und Schutzkolloide findet sich beispielsweise in Houben Weyl, Methoden der organischen Chemie, Band XIV/1 Makromolekulare Stoffe, Georg Thieme Verlag, Stuttgart 1961, S 411 ff.

Von Vorteil ist es, wenn in Stufe (II) des erfindungsgemäßen Verfahrens, das heißt bei der Dispergierung der Zusammensetzung (Z) in wässriger Phase, das Gewichtsverhältnis von organischen Lösemitteln und Wasser so gewählt wird, dass die resultierende Dispersion ein Gewichtsverhältnis von Wasser zu organischen Lösemitteln von größer 1, bevorzugt von 1,05 bis 2/1, insbesondere bevorzugt von 1,1 bis 1,5/1 aufweist.

In Schritt (III) des erfindungsgemäßen Verfahrens erfolgt die zumindest teilweise Entfernung des mindestens einen organischen Lösemittels (Z.2) aus der in Schritt (II) erhaltenen Dispersion. Natürlich können in Schritt (III) des Verfahrens auch weitere Lösemittel, die beispielsweise gegebenenfalls in der Zusammensetzung (Z) vorhanden waren, entfernt werden.

Die Entfernung des mindestens einen organischen Lösemittels (Z.2) und gegebenenfalls weiterer organischer Lösemittel kann auf beliebige bekannte Weise, beispielsweise durch Vakuumdestillation bei gegenüber Raumtemperatur leicht erhöhten Temperaturen von beispielsweise 30 bis 60°C erfolgen.

Die erhaltene Polyurethan-Polyharnstoff-Dispersion (PD) ist wässrig (zur grundsätzlichen Definition von "wässrig" siehe weiter oben).

Ein besonderer Vorteil der erfindungsgemäßen Dispersion (PD) ist, dass sie mit nur sehr geringen Anteilen an organischen Lösemitteln formuliert werden kann, trotzdem aber die eingangs beschriebenen erfindungsgemäßen Vorteile ermöglicht. Die erfindungsgemäße Dispersion (PD) enthält bevorzugt weniger als 10 Gew.-%, insbesondere bevorzugt weniger als 5 Gew.-%, ganz besonders bevorzugt weniger als 2,5 Gew.-% organische Lösemittel (Messmethode siehe Beispielteil).

Der Anteil des Polyurethan-Polyharnstoff-Polymers in der Dispersion (PD) beträgt bevorzugt 25 bis 55 Gew.-%, bevorzugt 30 bis 50 Gew.-%, nochmals bevorzugt 35 bis 45 Gew.-%, jeweils bezogen auf die Gesamtmenge der Dispersion (Bestimmung analog der oben für das Intermediat (Z.1) beschriebenen Bestimmung über den Festkörpergehalt).

Der Anteil von Wasser in der Dispersion (PD) beträgt bevorzugt 45 bis 75 Gew.-%, bevorzugt 50 bis 70 Gew.-%, nochmals bevorzugt 55 bis 65 Gew.-%, jeweils bezogen auf die Gesamtmenge der Dispersion.

Bevorzugt besteht die erfindungsgemäße Dispersion (PD) zu mindestens 90 Gew.-%, bevorzugt mindestens 95 Gew.-%, ganz besonders bevorzugt zu mindestens 97,5 Gew.-% aus dem Polyurethan-Polyharnstoff-Polymer und Wasser.

Nochmals bevorzugter ist, dass die Dispersion neben dem Polymer lediglich Wasser und gegebenenfalls organische Lösemittel, beispielsweise in Form von Restanteilen, die in Stufe (III) des erfindungsgemäßen Verfahrens nicht vollständig abgetrennt worden sind, enthält. Demzufolge beträgt der Festkörper der Dispersion (PD) bevorzugt 25 bis 55 %, bevorzugt 30 bis 50 %, nochmals bevorzugt 35 bis 45 % und stimmt darunter nochmals bevorzugt mit dem Anteil des Polymers an der Dispersion überein.

Ein Vorteil der Dispersion (PD) liegt darin, dass sie ohne den Einsatz von umwelt-und gesundheitsschädlichen organischen Lösemitteln wie N-Methyl-2-pyrrolidon, Dimethylformamid, Dioxan, Tetrahydrofuran und N-Ethyl-2-pyrrolidon hergestellt werden kann. Demzufolge enthält die Dispersion (PD) bevorzugt weniger als 10 Gew.-%, bevorzugt weniger als 5 Gew.-%, nochmals bevorzugt weniger als 2,5 Gew.-% an organischen Lösemitteln ausgewählt aus der Gruppe bestehend aus N-Methyl-2-pyrrolidon, Dimethylformamid, Dioxan, Tetrahydrofuran und N-Ethyl-2-pyrrolidon. Bevorzugt ist die Dispersion (PD) vollständig frei von diesen organischen Lösemitteln.

Das in der Dispersion vorhandene Polyurethan-Polyharnstoff-Polymer besitzt, bezogen auf den Festkörper, bevorzugt eine Säurezahl von 10 bis 35 mg KOH/g, insbesondere von 15 bis 23 mg KOH/g (Messmethode siehe Beispielteil).

Das in der Dispersion vorhandene Polyurethan-Polyharnstoff-Polymer besitzt bevorzugt kaum oder keine Hydroxylgruppen. Die OH-Zahl des Polymers liegt, bezogen auf den Festkörper, bevorzugt kleiner als 15 mg KOH/g, insbesondere kleiner 10 mg KOH/g, nochmals bevorzugt kleiner 5 mg KOH/g (Messmethode siehe Beispielteil).

Ein weiterer Gegenstand der vorliegenden Erfindung ist ein pigmentierter wässriger Basislack (Wasserbasislack) enthaltend mindestens eine, bevorzugt genau eine wässrige Dispersion (PD). Alle oben genannten bevorzugten Ausführungsformen hinsichtlich der Dispersion (PD) gelten selbstverständlich auch in Bezug auf den Basislack enthaltend eine Dispersion (PD).

Unter einem Basislack ist ein in der Automobillackierung und allgemeinen Industrielackierung eingesetzter farbgebender Zwischenbeschichtungsstoff zu verstehen. Dieser wird im Allgemeinen auf einem mit einem eingebrannten (vollständig gehärteten) Füller vorbehandelten Untergrund beziehungsweise Substrat aufgebracht. Auch Altlackierungen, welche gegebenenfalls noch vorbehandelt werden müssen (beispielsweise durch Anschleifen), können als Untergründe dienen. Um eine Basislackschicht insbesondere gegen Umwelteinflüsse zu schützen, wird auf dieser in der Regel mindestens noch eine zusätzliche Klarlackschicht appliziert. Dies erfolgt in der Regel im nass-in-nass-Verfahren, das heißt der Klarlack wird appliziert, ohne dass die Basislackschicht gehärtet wird. Die Härtung erfolgt dann abschließend gemeinsam mit dem Klarlack.

Der Anteil der erfindungsgemäßen Dispersionen (PD), bezogen auf das Gesamtgewicht des pigmentierten wässrigen Basislacks, beträgt bevorzugt 2,5 bis 60 Gew.-%, besonders bevorzugt 10 bis 50 Gew.-% und ganz besonders bevorzugt 15 bis 40 Gew.-% oder sogar 10 bis 30 Gew.-%.

Der Anteil der aus den erfindungsgemäßen Dispersionen stammenden Polyurethan-Polyharnstoff-Polymere, bezogen auf das Gesamtgewicht des pigmentierten wässrigen Basislacks, beträgt vorzugsweise 1 bis 30 Gew.-%, besonders bevorzugt 4 bis 25 Gew.-% und ganz besonders bevorzugt 6 bis 20 Gew.-% oder sogar 8 bis 15 Gew.-%.

Die Bestimmung beziehungsweise Festlegung des Anteils der aus den erfindungsgemäßen Dispersionen stammenden Polyurethan-Polyharnstoff-Polymere am Basislack kann über die Bestimmung des Festkörpers einer erfindungsgemäßen Dispersion (PD) erfolgen, die in dem Basislack eingesetzt werden soll.

Im Falle einer möglichen Spezifizierung auf Basislacke enthaltend bevorzugte Dispersionen (PD) in einem speziellen Anteilsbereich gilt folgendes. Die Dispersionen (PD), die nicht in die bevorzugte Gruppe fallen, können selbstverständlich weiterhin im Basislack enthalten sein. Der spezielle Anteilsbereich gilt dann nur für die bevorzugte Gruppe von Dispersionen (PD). Bevorzugt ist allerdings, dass für den Gesamtanteil von Dispersionen (PD) bestehend aus Dispersionen aus der bevorzugten Gruppe und Dispersionen, die nicht in die bevorzugte Gruppe fallen, ebenfalls der spezielle Anteilsbereich gilt.

Würde also eine Beschränkung auf einen Anteilsbereich von 4 bis 25 Gew.-% und eine bevorzugte Gruppe von Dispersionen (PD) durchgeführt werden, so gilt dieser Anteilsbereich augenscheinlich zunächst nur für die bevorzugte Gruppe an Dispersionen (PD). Bevorzugt wäre dann aber, dass insgesamt von allen ursprünglich umfassten Dispersionen bestehend aus Dispersionen aus der bevorzugten Gruppe und Dispersionen, die nicht in die bevorzugte Gruppe fallen, ebenfalls von 4 bis 25 Gew.-% enthalten sind. Werden also 15 Gew.-% von Dispersionen (PD) der bevorzugten Gruppe eingesetzt, so können höchstens 10 Gew.-% der Dispersionen der nicht bevorzugten Gruppe eingesetzt werden.

Das genannte Prinzip gilt im Rahmen der vorliegenden Erfindung für alle genannten Komponenten des Basislacks und deren Anteilsbereiche, beispielsweise die weiter unten genannten Pigmente oder auch die weiter unten genannten Vernetzungsmittel wie Melaminharze.

Der erfindungsgemäße wässrige Basislack ist pigmentiert, enthält also mindestens ein Pigment. Solche Farbpigmente und Effektpigmente sind dem Fachmann bekannt und werden beispielsweise in Römpp-Lexikon Lacke und Druckfarben, Georg Thieme Verlag, Stuttgart, New York, 1998, Seite 176 und 451, beschrieben. Die Begriffe farbgebendes Pigment und Farbpigment sind ebenso wie die Begriffe optisch effektgebendes Pigment und Effektpigment austauschbar.

Einsetzbare Effektpigmente sind beispielsweise plättchenförmige Metalleffektpigmente wie blättchenförmige Aluminiumpigmente, Goldbronzen, feuergefärbte Bronzen und/oder Eisenoxid-Aluminiumpigmente, Perglanzpigmente wie Fischsilber, basisches Bleicarbonat, Bismutoxidchlorid und/oder Metalloxid-Glimmer-Pigmente und/oder sonstige Effektpigmente wie plättchenförmiges Graphit, plättchenförmiges Eisenoxid, Mehrschicht-Effekt-Pigmente aus PVD-Filmen und/oder Liquid Crystal Polymer-Pigmente. Besonders bevorzugt werden jedenfalls, wenn auch nicht zwingend ausschließlich, plättchenförmige Metalleffektpigmente, insbesondere plättchenförmige Aluminiumpigmente, eingesetzt.

Als typische Farbpigmente zu nennen sind insbesondere anorganische farbgebende Pigmente wie Weißpigmente wie Titandioxid, Zink-Weiß, Zinksulfid oder Lithopone; Schwarzpigmente wie Ruß, Eisen-Mangan-Schwarz oder Spinellschwarz; Buntpigmente wie Chromoxid, Chromoxidhydratgrün, Kobaltgrün oder Ultramaringrün, Kobaltblau, Ultramarinblau oder Manganblau, Ultramarinviolett oder Kobalt- und Manganviolett, Eisenoxidrot, Cadmiumsulfoselenid, Molybdatrot oder Ultramarinrot; Eisenoxidbraun, Mischbraun, Spinell- und Korundphasen oder Chromorange; oder Eisenoxidgelb, Nickeltitangelb, Chromtitangelb, Cadmiumsulfid, Cadmiumzinksulfid, Chromgelb oder Bismutvanadat.

Der Anteil der Pigmente kann beispielsweise im Bereich von 1 bis 30 Gew.-%, bevorzugt 1,5 bis 20 Gew.-%, besonders bevorzugt 2,0 bis 15 Gew.-%, bezogen auf das Gesamtgewicht des pigmentierten wässrigen Basislacks, liegen.

Der erfindungsgemäße Basislack enthält durch den Einsatz der Dispersion (PD) und des darin enthaltenen Polymers härtbare Bindemittel. Als Bindemittel wird im Rahmen der vorliegenden Erfindung gemäß einschlägiger DIN EN ISO 4618 der nichtflüchtige Anteil eines Beschichtungsmittels ohne Pigmente und Füllstoffe verstanden. Spezielle Bindemittel sind demnach beispielsweise auch lacktypische Additive, das in der Dispersion (PD) enthaltene Polymer oder weitere wie unten beschriebene einsetzbare Polymere und wie unten beschriebene typische Vernetzungsmittel. Im Folgenden wird der Ausdruck allerdings, schon der besseren Übersichtlichkeit halber, hauptsächlich in Bezug auf bestimmte physikalisch und gegebenenfalls auch thermisch härtbare Polymere, beispielsweise die Polymere in den Dispersionen (PD) oder auch davon verschiedene Polyurethane, Polyester, Polyacrylate und/oder Mischpolymerisate der genannten Polymere, verwendet.

Im Rahmen der vorliegenden Erfindung bedeutet der Begriff "physikalische Härtung" die Bildung eines Films durch Abgabe von Lösemitteln aus Polymerlösungen oder Polymerdispersionen. Üblicherweise sind hierfür keine Vernetzungsmittel notwendig.

Im Rahmen der vorliegenden Erfindung bedeutet der Begriff "thermische Härtung" die durch Wärme initiierte Vernetzung einer Lackschicht, bei der in dem zugrunde liegenden Lack entweder selbstvernetzende Bindemittel oder aber ein separat vorliegendes Vernetzungsmittel in Kombination mit einem Polymer als Bindemittel eingesetzt wird (Fremdvernetzung). Das Vernetzungsmittel enthält reaktive funktionelle Gruppen, die zu den in den Bindemitteln vorhandenen reaktiven funktionellen Gruppen komplementär sind. Durch die Reaktion der Gruppen erfolgt dann eine Vernetzung und damit schließlich die Bildung eines makroskopisch vernetzen Lackfilms.

Klar ist, dass die in einem Lack enthaltenen Bindemittelkomponenten immer zumindest anteilig physikalisch härten werden. Wird also angegeben, dass ein Lack Bindemittelkomponenten enthält, die thermisch härtbar sind, wird hierdurch selbstverständlich nicht ausgeschlossen, dass bei der Härtung auch eine anteilige physikalische Härtung auftritt.

Der erfindungsgemäße Basislack enthält bevorzugt noch mindestens ein von dem in der Dispersion (PD) enthaltenen Polyurethan-Polyharnstoff-Polymer verschiedenes Polymer als Bindemittel, insbesondere mindestens ein Polymer ausgewählt aus der Gruppe bestehend aus Polyurethanen, Polyestern, Polyacrylaten und/oder Mischpolymerisaten der genannten Polymere, insbesondere Polyester und/oder Polyurethan-Polyacrylate. Bevorzugte Polyester werden beispielsweise in DE 4009858 A1 in Spalte 6, Zeile 53 bis Spalte 7, Zeile 61 und Spalte 10, Zeile 24 bis Spalte 13, Zeile 3 beschrieben. Bevorzugte Polyurethan-Polyacrylat-Mischpolymerisate (acrylierte Polyurethane) und deren Herstellung werden beispielsweise in WO 91/15528 A1, Seite 3, Zeile 21 bis Seite 20, Zeile 33 sowie in DE 4437535 A1, Seite 2, Zeile 27 bis Seite 6, Zeile 22 beschrieben. Die beschriebenen Polymere als Bindemittel sind bevorzugt hydroxyfunktionell und besitzen insbesondere bevorzugt eine OH-Zahl im Bereich von 20 bis 200 mg KOH/g, besonders bevorzugt von 50 bis 150 mg KOH/g. Besonders bevorzugt enthalten die erfindungsgemäßen Basislacke mindestens ein hydroxyfunktionelles Polyurethan-Polyacrylat-Mischpolymerisat, nochmals bevorzugt mindestens ein hydroxyfunktionelles Polyurethan-Polyacrylat-Mischpolymerisat sowie mindestens einen hydroxyfunktionellen Polyester.

Der Anteil der weiteren Polymere als Bindemittel kann breit variieren und liegt vorzugsweise im Bereich von 0,5 bis 20,0 Gew.-%, bevorzugt 1,0 bis 15,0 Gew.-%, besonders bevorzugt 1,5 bis 10,0 Gew.-%, jeweils bezogen auf das Gesamtgewicht des erfindungsgemäßen Basislacks.

Zudem enthält der erfindungsgemäße Basislack bevorzugt mindestens ein an sich bekanntes typisches Vernetzungsmittel. Bevorzugt enthält es als Vernetzungsmittel mindestens ein Aminoplastharz und/oder ein blockiertes Polyisocyanat, bevorzugt ein Aminoplastharz. Unter den Aminoplastharzen sind insbesondere Melaminharze bevorzugt.

Der Anteil der Vernetzungsmittel, insbesondere Aminoplastharze und/oder blockierte Polyisocyanate, besonders bevorzugt Aminoplastharze, darunter bevorzugt Melaminharze, liegt vorzugsweise im Bereich von 0,5 bis 20,0 Gew.-%, bevorzugt 1,0 bis 15,0 Gew.-%, besonders bevorzugt 1,5 bis 10,0 Gew.-%, jeweils bezogen auf das Gesamtgewicht des erfindungsgemäßen Basislacks.

Bevorzugt enthält das erfindungsgemäße Beschichtungsmittel zudem mindestens einen Verdicker.

Als Verdicker eignen sich anorganische Verdicker aus der Gruppe der Schichtsilikate wie Lithium-Aluminium-Magnesium Silikate. Bekannt ist allerdings, dass Lacke, deren rheologisches Eigenschaftsprofil über den hauptsächlichen oder überwiegenden Einsatz entsprechender anorganischer Verdicker bestimmt wird, hinsichtlich ihres Festkörpergehalts verbesserungswürdig sind, das heißt lediglich mit recht geringen Festkörpergehalten von beispielsweise kleiner 20 % formuliert werden können, ohne dass wichtige anwendungstechnische Eigenschaften verschlechtert werden. Ein besonderer Vorteil des erfindungsgemäßen Basislacks liegt darin, dass er ohne beziehungsweise ohne großen Anteil solcher als Verdicker eingesetzter anorganischen Schichtsilikate formuliert werden kann. Demzufolge ist der Anteil von als Verdicker eingesetzten anorganischen Schichtsilikaten, bezogen auf das Gesamtgewicht des Basislacks, bevorzugt kleiner als 0,5 Gew.-%, insbesondere bevorzugt kleiner 0,1 Gew.-% und nochmals bevorzugt kleiner 0,05 Gew.-%. Ganz besonders bevorzugt ist der Basislack vollständig frei von solchen als Verdicker eingesetzten anorganischen Schichtsilikaten.

Stattdessen enthält der Basislack bevorzugt mindestens einen organischen Verdicker, beispielsweise einen (Meth)acrylsäure-(Meth)acrylat-Copolymerisat-Verdicker oder einen Polyurethan-Verdicker. Bevorzugt eingesetzt werden Assoziativverdicker, wie beispielsweise die an sich bekannten Polyurethan-Assoziativverdicker. Als Assoziativverdicker werden bekanntermaßen wasserlösliche Polymere bezeichnet, welche an den Kettenenden oder in Seitenketten stark hydrophobe Gruppen aufweisen und/oder deren hydrophile Ketten im Inneren hydrophobe Blöcke oder Bündelungen enthalten. Dadurch besitzen diese Polymere einen Tensid-Charakter und sind in wässriger Phase zur Bildung von Mizellen fähig. Ähnlich wie bei den Tensiden verbleiben die hydrophilen Bereiche in der wässrigen Phase, während sich die hydrophoben Bereiche in die Teilchen von Polymerdispersionen einlagern, auf der Oberfläche von weiteren festen Teilchen wie Pigmenten und/oder Füllstoffen adsorbieren und/oder Mizellen in der wässrigen Phase ausbilden. Letztlich wird eine verdickende Wirkung erzielt, ohne dass es zu einem erhöhten Absetzverhalten kommt. Entsprechende Verdicker sind kommerziell erhältlich, beispielsweise unter der Handelsbezeichnung Adekanol (Fa. Adeka Corporation).

Der Anteil der organischen Verdicker liegt vorzugsweise im Bereich von 0,01 bis 5,0 Gew.-%, bevorzugt 0,02 bis 3,0 Gew.-%, besonders bevorzugt 0,05 bis 3,0 Gew.-%, jeweils bezogen auf das Gesamtgewicht des erfindungsgemäßen Basislacks. Darüber hinaus kann der erfindungsgemäße Basislack noch mindestens einen weiteren Zusatzstoff enthalten. Beispiele für derartige Zusatzstoffe sind rückstandsfrei oder im Wesentlichen rückstandsfrei thermisch zersetzbare Salze, von den bereits genannten Polymeren als Bindemittel verschiedene physikalisch, thermisch und/oder mit aktinischer Strahlung härtbare Polymere als Bindemittel, weitere Vernetzungsmittel, organische Lösemittel, Reaktivverdünner, transparente Pigmente, Füllstoffe, molekulardispers lösliche Farbstoffe, Nanopartikel, Lichtschutzmittel, Antioxidantien, Entlüftungsmittel, Emulgatoren, Slipadditive, Polymerisationsinhibitoren, Initiatoren für radikalische Polymerisationen, Haftvermittler, Verlaufsmittel, filmbildende Hilfsmittel, Sag-Control-Agents (SCAs), Flammschutzmittel, Korrosionsinhibitoren, Wachse, Sikkative, Biozide und Mattierungsmittel. Solche Zusatzstoffe werden in den üblichen und bekannten Mengen eingesetzt.

Der Festkörpergehalt des erfindungsgemäßen Basislacks kann je nach den Erfordernissen des Einzelfalls variieren. In erster Linie richtet sich der Festkörpergehalt nach der für die Applikation, insbesondere Spritzapplikation, erforderlichen Viskosität. Es ist von besonderem Vorteil, dass der erfindungsgemäße Basislack bei vergleichsweise hohen Festkörpern trotzdem eine Viskosität aufweisen kann, die eine angemessene Applikation zulässt.

Vorzugsweise liegt der Festkörpergehalt des erfindungsgemäßen Basislacks bei mindestens 25 %, bevorzugt mindestens 30 %, insbesondere bevorzugt von 30 bis 50 %.

Bei den genannten Bedingungen, das heißt bei den genannten Festkörpergehalten, weisen bevorzugte erfindungsgemäße Basislacke bei 23°C und einer Scherbelastung von 1000 1/s eine Viskosität von 40 bis 150 mPa·s, insbesondere 70 bis 85 mPa·s auf (genaueres zur Messmethode siehe Beispielteil). Im Rahmen der vorliegenden Erfindung wird eine Viskosität in diesem Bereich bei der angegebenen Scherbelastung als Spritzviskosität (Verarbeitungsviskosität) bezeichnet. Bekanntermaßen werden Beschichtungsmittel bei Spritzviskosität appliziert, das heißt sie besitzen unter den dann vorliegenden Bedingungen (hohe Scherbelastung) eine Viskosität, die insbesondere nicht zu hoch ist, um eine effektive Applikation zu ermöglichen. Dies bedeutet, dass die Einstellung der Spritzviskosität wichtig ist, um einen Lack überhaupt durch Spritzverfahren applizieren zu können und um zu gewährleisten, dass sich auf dem zu beschichtenden Substrat ein vollständiger, gleichmäßiger Beschichtungsfilm ausbilden kann. Es ist von besonderem Vorteil, dass auch ein auf Spritzviskosität eingestellter erfindungsgemäßer Basislack einen hohen Festkörper besitzt. Die bevorzugten Bereiche des Festköpergehalts, insbesondere die Untergrenzen, lassen also erkennen, dass der erfindungsgemäße Basislack im applikationsfähigem Zustand bevorzugt vergleichsweise hohe Festkörpergehalte aufweist.

Der erfindungsgemäße Basislack ist wässrig (zur Definition von "wässrig" siehe oben).

Der Anteil von Wasser am erfindungsgemäßen Basislack beträgt bevorzugt mindestens 35 Gew.-%, bevorzugt mindestens 40 Gew.-% und nochmals bevorzugt von 45 bis 60 Gew.-%.

Nochmals bevorzugt ist, dass die prozentuale Summe aus dem Festkörper des Basislacks und dem Anteil von Wasser am Basislack bei mindestens 70 Gew.-%, bevorzugt bei mindestens 80 Gew.-% liegt. Darunter bevorzugt sind Bereiche von 70 bis 90 Gew.-%, insbesondere 80 bis 90 Gew.-%. In dieser Angabe wird der Festkörper, der traditionell nur die Einheit "%" besitzt, in "Gew.-%" angegeben. Da der Festkörper letztlich auch eine prozentuale Gewichtsangabe darstellt, ist diese Form der Darstellung gerechtfertigt. Hat also beispielsweise ein Basislack einen Festkörper von 35 % und einen Wassergehalt von 50 Gew.-%, so beträgt die oben definierte prozentuale Summe aus dem Festkörper des Basislacks und dem Anteil von Wasser am Basislack 85 Gew.-%.

Dies bedeutet, dass bevorzugte erfindungsgemäße Basislacke grundsätzlich umweltbelastende Komponenten wie insbesondere organische Lösemittel in einem vergleichsweise niedrigen Anteil von beispielsweise weniger als 30 Gew.-%, bevorzugt weniger als 20 Gew.-% enthalten. Bevorzugte Bereiche sind von 10 bis 30 Gew.-%, insbesondere 10 bis 20 Gew.-%.

Ein weiterer Vorteil des erfindungsgemäßen Basislacks liegt darin, dass er ohne den Einsatz von umweit- und gesundheitsschädlichen organischen Lösemitteln wie N-Methyl-2-pyrrolidon, Dimethylformamid, Dioxan, Tetrahydrofuran und N-Ethyl-2-pyrrolidon hergestellt werden kann. Demzufolge enthält der Basislack bevorzugt weniger als 10 Gew.-%, bevorzugt weniger als 5 Gew.-%, nochmals bevorzugt weniger als 2,5 Gew.-% an organischen Lösemitteln ausgewählt aus der Gruppe bestehend aus N-Methyl-2-pyrrolidon, Dimethylformamid, Dioxan, Tetrahydrofuran und N-Ethyl-2-pyrrolidon. Bevorzugt ist der Basislack vollständig frei von diesen organischen Lösemitteln.

Die Herstellung der erfindungsgemäßen Beschichtungsmittel kann unter Einsatz der für die Herstellung von Basislacken üblichen und bekannten Mischverfahren und Mischaggregaten erfolgen.

Gegenstand der vorliegenden Erfindung ist auch ein Verfahren zur Herstellung von Mehrschichtlackierungen, bei dem
(1) ein wässriger Basislack auf ein Substrat aufgebracht wird,
(2) aus dem in Stufe (1) aufgebrachten Lack ein Polymerfilm gebildet wird,
(3) auf die so erhaltene Basislackschicht ein Klarlack aufgebracht wird und anschließend
(4) die Basislackschicht zusammen mit der Klarlackschicht gehärtet wird,
welches dadurch gekennzeichnet ist, dass der in Stufe (1) eingesetzte wässrige Basislack ein erfindungsgemäßer Basislack ist.

Alle vorstehend genannten Ausführungen hinsichtlich des erfindungsgemäßen Basislacks gelten auch für das erfindungsgemäße Verfahren.

Das besagte Verfahren wird zur Herstellung von farbgebenden Mehrschichtlackierungen, effektgebenden Mehrschichtlackierungen und farb- und effektgebenden Mehrschichtlackierungen eingesetzt.

Die Applikation des erfindungsgemäß einzusetzenden wässrigen Basislacks erfolgt üblicherweise auf mit einem gehärteten Füller vorbeschichteten Metallsubstrat.

Soll ein Metallsubstrat beschichtet werden, so wird dieses vor der Applikation des Füllers bevorzugt noch mit einer Elektrotauchlackierung beschichtet.

Die Applikation des erfindungsgemäßen pigmentierten wässrigen Basislacks auf ein Metallsubstrat kann in den im Rahmen der Automobilindustrie üblichen Schichtdicken im Bereich von beispielsweise 5 bis 100 Mikrometer, bevorzugt 5 bis 60 Mikrometer erfolgen. Dabei werden in der Regel Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heissspritzapplikation wie zum Beispiel Hot-Air-Heissspritzen.

Nach der Applikation des pigmentierten wässrigen Basislacks kann dieser nach bekannten Methoden getrocknet werden. Beispielsweise können (1-Komponenten)-Basislacke, welche bevorzugt sind, bei Raumtemperatur für 1 bis 60 Minuten abgelüftet werden und darauf folgend bevorzugt bei gegebenenfalls leicht erhöhten Temperaturen von 30 bis 90°C getrocknet werden. Unter Ablüften und Trocknung ist im Rahmen der vorliegenden Erfindung ein Abdunsten von organischen Lösemitteln und/oder Wasser zu verstehen, wodurch der Lack trockener, aber noch nicht gehärtet wird beziehungsweise noch kein vollständig vernetzter Lackfilm gebildet wird.

Dann wird ein handelsüblicher Klarlack nach ebenfalls gängigen Methoden appliziert, wobei die Schichtdicken wiederum in den gängigen Bereichen, beispielsweise 5 bis 100 Mikrometer, liegen. Bevorzugt sind Zweikomponentenklarlacke.

Nach der Applikation des Klarlacks kann dieser bei Raumtemperatur für beispielsweise 1 bis 60 Minuten abgelüftet und gegebenenfalls getrocknet werden. Dann wird der Klarlack zusammen mit dem applizierten Basislack gehärtet. Dabei finden beispielsweise Vernetzungsreaktionen statt, wodurch eine erfindungsgemäße farb- und/oder effektgebende mehrschichtige Lackierung auf einem Substrat hergestellt wird. Die Härtung erfolgt bevorzugt thermisch bei Temperaturen von 60 bis 200°C.

Alle im Rahmen der vorliegenden Erfindung angegebenen Schichtdicken verstehen sich als Trockenschichtdicken. Es handelt sich also um die Schichtdicke der jeweils gehärteten Schicht. Ist also angegeben, dass ein Lack in einer bestimmten Schichtdicke aufgetragen wird, so ist darunter zu verstehen, dass der Lack so aufgetragen wird, dass die genannte Schichtdicke nach der Härtung resultiert.

Mit Hilfe des erfindungsgemäßen Verfahrens können also insbesondere metallische Substrate, vorzugsweise Automobilkarosserien oder Teile davon, lackiert werden.

Das erfindungsgemäße Verfahren kann ferner zur Doppellackierung in der OEM-Lackierung eingesetzt werden. Darunter ist zu verstehen, dass ein Substrat, welches mit Hilfe des erfindungsgemäßen Verfahrens beschichtet wurde, ein zweites Mal, ebenfalls mit Hilfe des erfindungsgemäßen Verfahrens, lackiert wird.

Die Erfindung betrifft ferner Mehrschichtlackierungen, welche nach dem oben beschriebenen Verfahren herstellbar sind. Diese Mehrschichtlackierungen sollen im Folgenden als erfindungsgemäße Mehrschichtlackierungen bezeichnet werden.

Alle vorstehend genannten Ausführungen hinsichtlich des erfindungsgemäßen wässrigen Basislacks und des erfindungsgemäßen Verfahrens gelten entsprechend auch für die besagte Mehrschichtlackierung.

Ein weiterer Aspekt der Erfindung betrifft das erfindungsgemäße Verfahren, wobei es sich bei dem besagten Substrat aus Stufe (1) um eine Mehrschichtlackierung handelt, welche Fehlstellen besitzt. Bei dieser Substrat-Mehrschichtlackierung, welche Fehlstellen besitzt, handelt es sich also um eine Originallackierung, welche ausgebessert ("Spot Repair") oder komplett überlackiert (Doppellackierung) wird.

Das erfindungsgemäße Verfahren eignet sich demnach auch zur Ausbesserung von Fehlstellen auf Mehrschichtlackierungen. Als Fehlstellen beziehungsweise Filmfehler werden im Allgemeinen Störungen an und in der Beschichtung, die meist nach ihrer Form oder ihrem Aussehen benannt werden, bezeichnet. Dem Fachmann ist eine Vielzahl von möglichen Arten von solchen Filmfehlern bekannt.

Zudem betrifft die vorliegende Erfindung die Verwendung der erfindungsgemäßen Dispersion (PD) beziehungsweise des erfindungsgemäßen Basislacks zur Verbesserung der anwendungstechnischen Eigenschaften von Basislacken beziehungsweise Mehrschichtlackierungen, die unter Einsatz des Basislacks hergestellt wurden. Insbesondere betrifft die Erfindung die genannte Verwendung zur Verbesserung der optischen Eigenschaften von Mehrschichtlackierungen, insbesondere der Stabilität gegen Nadelstiche und Läufer sowie zur Verbesserung der mechanischen Eigenschaften, insbesondere der Haftung und der Steinschlagbeständigkeit.

Im Folgenden wird die Erfindung anhand von Beispielen erläutert.

### Beispiele

### Bestimmungsmethoden

### 1. Feststoffgehalt

Soweit nicht anders angegeben, wurde der Feststoffgehalt, im Folgenden auch als Festanteil bezeichnet, nach DIN EN ISO 3251 bei 130°C; 60 min, Einwaage 1,0 g, bestimmt. Wird im Rahmen der vorliegenden Erfindung auf eine offizielle Norm verwiesen, ist hiermit selbstverständlich die zum Anmeldetag geltende Fassung der Norm oder, falls zu diesem Zeitpunkt keine geltende Fassung besteht, die letzte geltende Fassung gemeint.

### 2. Isocyanatgehalt

Die Ermittlung des Isocyanat-Gehalts, im Folgenden auch als NCO-Gehalt bezeichnet, wurde durch Zugabe eines Überschusses einer 2%igen N,N-Dibutylamin-Lösung in Xylol zu einer homogenen Lösung der Proben in Aceton / N-Ethylpyrrolidon (1:1 Vol.-%) durch potentiometrische Rücktitration des Amin-Überschusses mit einer 0,1N Salzsäure in Anlehnung an die DIN EN ISO 3251, DIN EN ISO 11909 und DIN EN ISO 14896 bestimmt. Über den Anteil eines Polymers (Festkörper) in Lösung kann auf den NCO-Gehalt des Polymers bezogen auf Festkörper zurückgerechnet werden.

### 3. Hydroxylzahl

Die Hydroxylzahl wurde in Anlehnung an R.-P. Krüger, R. Gnauck und R. Algeier, Plaste und Kautschuk, 20, 274 (1982), mittels Essigsäureanhydrid in Gegenwart von 4-Dimethylaminopyridin als Katalysator in einer Tetrahydrofuran (THF) / Dimethylformamid (DMF)-Lösung bei Raumtemperatur ermittelt, wobei der verbliebene Überschuss an Essigsäureanhydrid nach Acetylierung vollständig hydrolysiert wurde und die Essigsäure mit alkoholischer Kaliumhydroxid-Lösung potentiometrisch zurücktitriert wurde. Acetylierungszeiten von 60 min reichten in allen Fällen aus, um einen vollständigen Umsatz zu garantieren.

### 4. Säurezahl

Die Säurezahl wurde in Anlehnung an die DIN EN ISO 2114 in homogener Lösung aus Tetrahydrofuran (THF) / Wasser (9 Vol.-Teile THF und 1 Vol.-Teil destilliertes Wasser) mit ethanolischer Kaliumhydroxid-Lösung bestimmt.

### 5. Neutralisationsgrad

Der Neutralisationsgrad einer Komponente x wurde berechnet aus der Stoffmenge der in der Komponente enthaltenen Carbonsäuregruppen (bestimmt über die Säurezahl) und der Stoffmenge des eingesetzten Neutralisationsmittels.

### 6. Aminäquivalentmasse

Die Aminäquivalentmasse (Lösung) dient der Ermittlung des Amingehalts einer Lösung und wurde wie folgt bestimmt. Es wurde die zu untersuchende Probe bei Raumtemperatur in Eisessig gelöst und gegen 0,1N Perchlorsäure in Eisessig in Gegenwart von Kristallviolett titriert. Aus der Einwaage der Probe und dem Verbrauch an Perchlorsäure erhielt man die Aminäquivalentmasse (Lösung), die Masse der Lösung des basischen Amins, die nötig ist, ein Mol Perchlorsäure zu neutralisieren.

### 7. Maskierungsgrad der primären Aminogruppen

Der Maskierungsgrad der primären Aminogruppen wurde mittels IR-Spektrometrie mit einem FT-IR-Spektrometer Nexus (Fa. Nicolet) unter Zuhilfenahme einer IR-Küvette (d=25m, KBr-Fenster) am Absorptionsmaximum bei 3310 cm⁻¹ anhand von Konzentrationsreihen der verwendeten Amine und Normierung auf das Absorptionsmaximum bei 1166 cm⁻¹ (interner Standard) bei 25°C ermittelt.

### 8. Lösungsmittelgehalt

Der Gehalt eines organischen Lösungsmittels an einer Mischung, beispielsweise einer wässrigen Dispersion, wurde mittels Gaschromatographie (Agilent 7890A, 50m Silica-Kapillarsäule mit Polyethylenglykol-Phase bzw. 50m Silica-Kapillarsäule mit Polydimethylsiloxan-Phase, Trägergas Helium, Splitinjektor 250°C, Ofentemperatur 40 - 220°C, Flammionisationsdetektor, Detektortemperatur 275°C, interner Standard n-Propylglykol) ermittelt.

### 9. Zahlenmittlere Molmasse

Die zahlenmittlere Molmasse (Mₙ) wurde, soweit nicht anders angegeben, mittels eines Dampfdruckosmometers Typ 10.00 (Fa. Knauer) an Konzentrationsreihen in Toluol bei 50°C mit Benzophenon als Eichsubstanz zur Bestimmung der experimentellen Eichkonstante des eingesetzten Messgeräts nach E. Schröder, G. Müller, K.-F. Arndt, "Leitfaden der Polymercharakterisierung", Akademie-Verlag, Berlin, S. 47 - 54, 1982, ermittelt.

### 10. Mittlere Partikelgröße

Die mittlere Partikelgröße (Volumenmittel) der in den erfindungsgemäßen Dispersionen (PD) enthaltenen Polyurethan-Polyharnstoff-Partikel werden im Rahmen der vorliegenden Erfindung durch Photonenkorrelationsspektroskopie (PCS) bestimmt.

Konkret zur Messung eingesetzt wurde ein "Malvern Nano S90" (Fa. Malvern Instruments) bei 25 ± 1 °C. Das Gerät deckt einen Größenbereich von 3 bis 3000 nm ab und war ausgestattet mit einem 4mW He-Ne Laser bei 633 nm. Die Dispersionen (PD) wurden soweit mit partikelfreiem, deionisierten Wasser als Dispergiermedium verdünnt, um sie anschließend in einer 1 ml Polystyrol-Küvette bei geeigneter Streuintensität zu vermessen. Die Auswertung erfolgte mittels digitalem Korrelator unter Zuhilfenahme der Auswertungssoftware Zetasizer Vers. 6.32 (Fa. Malvern Instruments). Es wurde fünf Mal gemessen und die Messungen an einer zweiten, frisch präparierten Probe wiederholt. Die Standardabweichung einer 5-fach Bestimmung betrug ≦ 4 %. Die maximale Abweichung des arithmetischen Mittels des Volumenmittels (V-average mean) von fünf Einzelmessungen betrug ± 15 %. Die angegebene mittlere Partikelgröße (Volumenmittel) ist das arithmetische Mittel aus der mittleren Partikelgröße (Volumenmittel) der Einzelpräparationen. Die Überprüfung erfolgte mit Polystyrol-Standards mit zertifizierten Partikelgrößen zwischen 50 bis 3000 nm.

Im weiter unten beschriebenen Beispiel D3 konnte aufgrund der Größe der Partikel keine Bestimmung mittels Photonenkorrelationsspektroskopie vorgenommen werden. Stattdessen wurde der Volumenmittelwert der Partikelgröße (D[4,3]) in Anlehnung an ISO 13220 mit einem Partikelgrößenmessgerät vom Typ "Mastersizer 2000" (Fa. Malvern Instruments) mittels Laserbeugung ermittelt. Das Messgerät arbeitet mit einer roten (max. 4 mW He-Ne, 633 nm) und einer blauen Lichtquelle (max. 0,3 mW LED, 470 nm) und erfasst Partikel der vorliegenden Dispersionen im Bereich von ca. 0,1 µm bis ca. 2000 µm. Zur Einstellung des für die Messung geeigneten Konzentrationsbereichs wurde die Probe mit partikelfreiem, deionisierten Wasser als Dispergiermedium (Brechungsindex: 1,33) verdünnt, die Lichtabschattung probenabhängig zwischen 3% und 15% eingestellt und in der Dispergiereinheit "Hydro 2000G" (Fa. Malvern Instruments) vermessen. Dabei wurden jeweils sechs Messungen bei Rührgeschwindigkeiten von 2000 1/min und 3000 1/min vorgenommen und die Messungen an einer zweiten, frisch präparierten Probe wiederholt. Die Berechnung der volumengewichteten Größenverteilung erfolgte mit der Malvern Instruments Software (Version 5.60) mittels Fraunhofer Näherung. Der angegebene Volumenmittelwert der Partikelgröße (D[4,3]) ist der arithmetische Mittelwert aus den Volumenmittelwerten der Einzelpräparationen. Das Partikelgrößenmessgerät wurde mit Partikelgrößenstandards im Bereich von 0,2 bis 190 µm überprüft.

### 11. Gelanteil

Der Gelanteil der in den erfindungsgemäßen Dispersionen (PD) enthaltenen Polyurethan-Polyharnstoff-Partikel (Mikrogel-Partikel) wird im Rahmen der vorliegenden Erfindung gravimetrisch bestimmt. Dabei wurde zunächst aus einer Probe einer wässrigen Dispersion (PD) (Einwaage 1,0 g) das enthaltene Polymer über Gefriertrocknung isoliert. Nach Bestimmung der Erstarrungstemperatur, der Temperatur, ab der sich der elektrische Widerstand der Probe bei weiterer Absenkung der Temperatur nicht mehr verändert, erfolgte die Haupttrocknung der vollständig eingefrorenen Probe üblicherweise im Druckbereich des Trocknungsvakuums zwischen 5 mbar und 0,05 mbar, bei einer um 10°C niedrigeren Trocknungstemperatur als der Erstarrungstemperatur. Durch schrittweise Erhöhung der Temperatur der beheizten Stellflächen auf 25°C wurde eine rasche Gefriertrocknung der Polymeren erreicht, wobei nach einer Trocknungsdauer von üblicherweise 12 Stunden die Menge an isoliertem Polymer (Festanteil, ermittelt über die Gefriertrocknung) konstant war und sich auch bei noch längerer Gefriertrocknung nicht mehr änderte. Durch Nachtrocknung bei einer Stellflächentemperatur von 30°C und maximal reduziertem Umgebungsdruck (üblicherweise zwischen 0,05 und 0,03 mbar) wurde eine optimale Trocknung des Polymeren erzielt.

Anschließend wurde das isolierte Polymer für eine Minute bei 130°C im Umluftofen gesintert und danach für 24 Stunden bei 25°C in einem Überschuss Tetrahydrofuran (Verhältnis Tetrahydrofuran zu Festanteil = 300 : 1) extrahiert. Dann wurde der unlösliche Anteil des isolierten Polymers (Gelanteil) über eine geeignete Fritte abgetrennt, 4 Stunden bei 50°C im Umluftofen getrocknet, und anschließend zurückgewogen.

Es wurde ferner sichergestellt, dass bei der Sintertemperatur von 130°C und Variation der Sinterzeiten zwischen einer Minute und zwanzig Minuten der ermittelte Gelanteil der Mikrogel-Partikel unabhängig von der Sinterzeit ist. Es ist also ausgeschlossen, dass bei der Isolierung des polymeren Feststoffs nachgeschaltete Vernetzungsreaktionen den Gelanteil weiter erhöhen.

Der auf diese Weise erfindungsgemäß bestimmte Gelanteil wird auch Gelanteil (gefriergetrocknet) genannt.

Parallel wurde ein Gelanteil, im Folgenden auch als Gelanteil (130°C) bezeichnet, gravimetrisch bestimmt, indem aus wässriger Dispersion (Einwaage 1,0 g) eine Polymerprobe bei 130°C, 60 min (Festkörper) isoliert wurde. Die Masse des Polymeren wurde bestimmt, um das Polymer anschließend analog zur oben beschriebenen Prozedur 24 Stunden bei 25°C in einem Überschuss an Tetrahydrofuran zu extrahieren, den unlöslichen Anteil (Gelanteil) abzutrennen, zu trocknen und zurück zu wiegen.

### 12. Löslichkeit in Wasser

Die Löslichkeit eines organischen Lösemittels in Wasser wurde bei 20°C wie folgt bestimmt. Das jeweilige organische Lösemittel und Wasser wurden in einem geeigneten Glasgefäß zusammengeben, vermischt und das Gemisch anschließend äquilibriert. Dabei wurden die Mengen von Wasser und dem Lösemittel so gewählt, dass sich nach der Äquilibrierung zwei voneinander getrennte Phasen ergaben. Nach der Äquilibrierung wird über eine Spritze eine Probe aus der wässrigen Phase (das heißt der Phase, die mehr Wasser als organisches Lösemittel enthält) entnommen, im Verhältnis 1/10 mit Tetrahydrofuran verdünnt und mittels Gaschromatographie der Anteil des Lösemittels bestimmt (Bedingungen siehe Punkt 8. Lösungsmittelgehalt).

Sofern sich unabhängig von den Mengen von Wasser und dem Lösemittel keine zwei Phasen ausbilden, ist das Lösemittel in jeglichem Gewichtsverhältnis mit Wasser mischbar. Dieses somit unbegrenzt in Wasser lösliche Lösemittel (beispielsweise Aceton), ist daher jedenfalls kein Lösemittel (Z.2).

### Mikrogel-Polyurethan-Polyharnstoff-Dispersionen

### Beispiel D1

### Herstellung einer erfindungsgemäßen Mikrogel-Dispersion eines Polyesterurethanharnstoffs durch Zugabe von Diethylentriamindiketimin zum Überschuss eines teilneutralisierten, Dicyclohexylmethan-4,4'-diisocyanat-basierenden Polyurethan-Präpolymeren in Methylethylketon und nachfolgender Vernetzung über endständige, primäre Aminogruppen nach Dispergierung in Wasser

Eine Mikrogel-Dispersion eines Polyesterurethanharnstoffs wurde folgendermaßen hergestellt:

### a) Herstellung einer teilneutralisierten Präpolymerlösung

In einem Reaktionsgefäß, ausgerüstet mit Rührer, Innenthermometer, Rückflußkühler und elektrischer Heizung, wurden 559,7 Gewichtsteile eines linearen Polyesterpolyols und 27,2 Gewichtsteile Dimethylolpropionsäure (Fa. GEO Speciality Chemicals) in 344,5 Gewichtsteilen Methylethylketon unter Stickstoff gelöst. Das lineare Polyesterdiol wurde zuvor aus dimerisierter Fettsäure (Pripol^{®} 1012, Fa. Croda), Isophthalsäure (Fa. BP Chemicals) und Hexan-1,6-diol (Fa. BASF SE) hergestellt (Gewichtsverhältnis der Ausgangsstoffe: dimere Fettsäure zu Isophthalsäure zu Hexan-1,6-diol = 54,00 : 30,02 : 15,98) und wies eine Hydroxylzahl von 73 mg KOH / g Festanteil, eine Säurezahl von 3,5 mg KOH / g Festanteil und eine berechnete, zahlenmittlere Molmasse von 1379 g/mol und eine über Dampfdruckosmometrie bestimmte zahlenmittlere Molmasse von 1350 g/mol auf. Zu der resultierenden Lösung wurden bei 30°C hintereinander 213,2 Gewichtsteile Dicyclohexylmethan-4,4'-diisocyanat (Desmodur^{®} W, Fa. Bayer MaterialScience) mit einem Isocyanatgehalt von 32,0 Gew.-% und 3,8 Gewichtsteile Dibutylzinndilaurat (Fa. Merck) hinzugegeben. Anschließend wurde unter Rühren auf 80°C erwärmt. Es wurde bei dieser Temperatur weiter gerührt, bis der Isocyanatgehalt der Lösung 1,49 Gew.-% betrug und konstant war. Danach wurden 626,2 Gewichtsteile Methylethylketon zum Präpolymer gegeben und das Reaktionsgemisch auf 40°C abgekühlt. Nach Erreichen von 40°C wurden 11,8 Gewichtsteile Triethylamin (Fa. BASF SE) innerhalb von zwei Minuten zugetropft und weitere 5 Minuten der Ansatz gerührt.

### b) Umsetzung des Präpolymeren mit Diethylentriamindiketimin

Anschließend wurden 30,2 Gewichtsteile einer 71,9 Gew.-% Anlösung von Diethylentriamindiketimin in Methylisobutylketon (Verhältnis Isocyanatgruppen des Präpolymeren zu Diethylentriamindiketimin (mit einer sekundären Aminogruppe): 5 : 1 mol/mol, entspricht zwei NCO-Gruppen pro blockierter, primärer Aminogruppe) innerhalb einer Minute zugemischt, wobei die Reaktionstemperatur nach Zugabe zur Präpolymerlösung kurzzeitig um 1°C anstieg. Die Anlösung von Diethylentriamindiketimin in Methylisobutylketon wurde zuvor durch azeotropes Auskreisen von Reaktionswasser bei der Reaktion von Diethylentriamin (Fa. BASF SE) mit Methylisobutylketon in Methylisobutylketon bei 110 - 140°C hergestellt. Durch Verdünnen mit Methylisobutylketon wurde auf eine Aminäquivalentmasse (Lösung) von 124,0 g/eq eingestellt. Mittels IR-Spektroskopie wurde anhand der Restabsorption bei 3310 cm⁻¹ eine Blockierung der primären Aminogruppen von 98,5% ermittelt.

Der Feststoffgehalt der Isocyanatgruppen-haltigen Polymerlösung wurde mit 45,3 % bestimmt.

### c) Dispergierung und Vakuumdestillation

Nach 30 Minuten Rühren bei 40°C wurde der Inhalt des Reaktors innerhalb von 7 Minuten in 1206 Gewichtsteile deionisiertes Wasser (23°C) dispergiert. Aus der resultierenden Dispersion wurde Methylethylketon bei 45°C unter Vakuum abdestilliert und eventuelle Lösemittel- und Wasserverluste mit deionisiertem Wasser ausgeglichen, so dass ein Feststoffgehalt von 40 Gew.-% resultierte.

Es wurde eine weiße, stabile, feststoffgehaltreiche, niedrigviskose Dispersion mit vernetzten Partikeln erhalten, die auch nach 3 Monaten keinerlei Absetzen aufwies. Die so erhaltene Mikrogel-Dispersion wies folgende Kennzahlen auf:

| | |
|---|---|
| Feststoffgehalt (130°C, 60min, 1g): | 40,2 Gew.-% |
| Methylethylketon-Gehalt (GC): | 0,2 Gew.-% |
| Methylisobutylketon-Gehalt (GC): | 0,1 Gew.-% |
| Viskosität (23°C, Rotationsviskosimeter, Scherrate= 1000/s): | 15 mPas |
| Säurezahl | 17,1 mg KOH/g Feststoffgehalt |
| Neutralisationsgrad (berechnet) | 49 % |
| pH (23°C) | 7,4 |
| Partikelgröße (Photonenkorrelationsspektroskopie, Volumenmittel) | 167 nm |
| Gelanteil (gefriergetrocknet) | 85,1 Gew.-% |
| Gelanteil (130°C) | 87,3 Gew.-% |

### Beispiel D2

### Herstellung einer erfindungsgemäßen Mikrogel-Dispersion eines Polyesterurethanharnstoffs durch Zugabe von N,N'-Bis-(3-Aminopropyl)-ethylendiamindiketimin zum Überschuss eines teilneutralisierten, Dicyclohexylmethan-4,4'-diisocyanat-basierenden Polyurethan-Präpolymer in Methylethylketon und nachfolgender Vernetzung über mittelständige, primäre Aminogruppen nach Dispergierung in Wasser

Eine Mikrogel-Dispersion eines Polyesterurethanharnstoffs wurde folgendermaßen hergestellt:
Die im erfindungsgemäßen Beispiel D1 hergestellte Menge teilneutralisierte Präpolymerlösung (D1, Abschnitt a, 1786,4 Gewichtsteile) wurde auf 40°C temperiert und anschließend 35,7 Gewichtsteile einer 77,0 Gew.-% Anlösung von N,N'-Bis-(3-Aminopropyl)-ethylendiamindiketimin in Methylisobutylketon (Verhältnis Isocyanatgruppen des Präpolymeren zu N,N'-Bis-(3-Aminopropyl)-ethylendiamin diketimin (mit zwei sekundären Aminogruppen): 6 : 1 mol/mol; entspricht zwei NCO-Gruppen pro blockierter, primärer Aminogruppe) innerhalb einer Minute zugemischt, wobei die Reaktionstemperatur nach Zugabe zur Präpolymerlösung kurzzeitig um 1°C anstieg und auch die Viskosität zunahm. Die Anlösung von N,N'-Bis-(3-Aminopropyl)-ethylendiamindiketimin in Methylisobutylketon wurde zuvor durch azeotropes Auskreisen von Reaktionswasser bei der Reaktion von N,N'-Bis-(3-Aminopropyl)-ethylendiamin (Fa. BASF SE) mit Methylisobutylketon in Methylisobutylketon bei 110 - 140°C hergestellt. Durch Verdünnen mit Methylisobutylketon wurde auf eine Aminäquivalentmasse (Lösung) von 110,0 g/eq eingestellt. Mittels IR-Spektroskopie wurde anhand der Restabsorption bei 3310 cm⁻¹ eine Blockierung der primären Aminogruppen von 99,0 % ermittelt.

Der Feststoffgehalt der Isocyanatgruppen-haltigen Polymerlösung wurde mit 45,1 % bestimmt.

Nach 30 Minuten Rühren bei 40°C wurde der Inhalt des Reaktors innerhalb von 7 Minuten in 1214 Gewichtsteile deionisiertes Wasser (23°C) dispergiert. Aus der resultierenden Dispersion wurde Methylethylketon bei 45°C unter Vakuum abdestilliert und eventuelle Lösemittel- und Wasserverluste mit deionisiertem Wasser ausgeglichen, so dass ein Feststoffgehalt von 40 Gew.-% resultierte.

Es wurde eine weiße, stabile, feststoffgehaltreiche, niedrigviskose Dispersion mit vernetzten Partikeln erhalten, die auch nach 3 Monaten keinerlei Absetzen aufwies.

Die so erhaltene Mikrogel-Dispersion wies folgende Kennzahlen auf:

| | |
|---|---|
| Feststoffgehalt (130°C, 60min, 1g): | 39,8 Gew.-% |
| Methylethylketon-Gehalt (GC): | 0,2 Gew.-% |
| Methylisobutylketon-Gehalt (GC): | 0,1 Gew.-% |
| Viskosität (23°C, Rotationsviskosimeter, Scherrate= 1000/s): | 35 mPas |
| Säurezahl | 17,2 mg KOH / g Feststoffgehalt |
| Neutralisationsgrad (berechnet) | 49 % |
| pH (23°C) | 7,5 |
| Partikelgröße (Photonenkorrelationsspektroskopie, Volumenmittel) | 172 nm |
| Gelanteil (gefriergetrocknet) | 96,1 Gew.-% |
| Gelanteil (130°C) | 96,8 Gew.-% |

### Beispiel D3

### Herstellung einer nicht-erfindungsgemäßen Mikrogel-Dispersion eines Polyesterurethanharnstoffs durch Zugabe von Diethylentriamindiketimin zum Überschuss eines teilneutralisierten, Dicyclohexylmethan-4,4'-diisocyanat-basierenden Polyurethan-Präpolymeren in Aceton und nachfolgender Vernetzung über endständige, primäre Aminogruppen nach Dispergierung in Wasser

Die nicht-erfindungsgemäße Mikrogel-Dispersion eines Polyesterurethanharnstoffs D3 wurde wie im erfindungsgemäßen Beispiel D1 hergestellt; einzig das Lösungsmittel Methylethylketon zur Herstellung einer teilneutralisierten Präpolymerlösung wurde durch Aceton ersetzt und die Reaktionstemperatur von ursprünglich 80°C bei Verwendung von Methylethylketon auf 58°C bei Verwendung von Aceton begrenzt. Es wurde bei dieser Temperatur gerührt, bis der Isocyanatgehalt der Lösung wie im Beispiel D1 1,49 Gew.-% betrug und konstant war, einzig die Reaktionszeit hatte sich verlängert. Danach wurden analog zum Beispiel D1 das Präpolymer nun mit Aceton verdünnt, auf 40°C abgekühlt, teilneutralisiert, und anschließend mit der in Beispiel D1 angegebenen Menge Diethylentriamindiketimin in Methylisobutylketon (Verhältnis Isocyanatgruppen des Präpolymeren zu Diethylentriamindiketimin (mit einer sekundären Aminogruppe): 5 : 1 mol/mol, entspricht zwei NCO-Gruppen pro blockierter, primärer Aminogruppe) umgesetzt, wobei der Feststoffgehalt der isocyanatgruppenhaltigen Polymerlösung mit 45,4 % bestimmt wurde, bevor nach Dispergierung in Wasser, Entfernung des Lösungsmittels bei 35 - 40°C unter Vakuum und Ausgleich der Wasserverluste mit deionisiertem Wasser eine weiße, feststoffgehaltreiche, niedrigviskose Dispersion mit vernetzten Partikeln erhalten wurde.

Die Mikrogel-Dispersion ist nicht stabil und bildete innerhalb von zwei Tagen einen Bodensatz von 3 Gew.-% der Gesamtmasse des enthaltenen Polymeren.

Die so erhaltene Mikrogel-Dispersion wies folgende Kennzahlen auf:

| | |
|---|---|
| Feststoffgehalt (130°C, 60min, 1g): | 40,5 Gew.-% |
| Aceton-Gehalt (GC): | 0,0 Gew.-% |
| Methylisobutylketon-Gehalt (GC): | 0,1 Gew.-% |
| Viskosität (23°C, Rotationsviskosimeter, Scherrate= 1000/s): | 13 mPas |
| Säurezahl | 17,0 mg KOH / g Feststoffgehalt |
| Neutralisationsgrad (berechnet) | 49 % |
| pH (23°C) | 7,4 |
| Volumenmittelwert der Partikelgröße (D[4,3]) | 9,8 µm |
| (Laserbeugung, Fraunhofer) | |
| Gelanteil (gefriergetrocknet) | 87,4 Gew.-% |
| Gelanteil (130°C) | 89,9 Gew.-% |

### Beispiel D4

### Herstellung einer erfindungsgemäßen Mikrogel-Dispersion eines Polyesterurethanharnstoffs durch Zugabe von Diethylentriamindiketimin zum Überschuss eines teilneutralisierten, Isophorondiisocyanat-basierenden Polyurethan-Präpolymeren in Methylethylketon und nachfolgender Vernetzung über endständige, primäre Aminogruppen nach Dispergierung in Wasser

Eine Mikrogel-Dispersion eines Polyesterurethanharnstoffs wurde folgendermaßen hergestellt:

### a) Herstellung einer teilneutralisierten Präpolymerlösung

In einem Reaktionsgefäß, ausgerüstet mit Rührer, Innenthermometer, Rückflußkühler und elektrischer Heizung, wurden 583,0 Gewichtsteile des linearen Polyesterpolyols aus Beispiel D1 und 28,4 Gewichtsteile Dimethylolpropionsäure (Fa. GEO Speciality Chemicals) in 344,3 Gewichtsteilen Methylethylketon unter Stickstoff gelöst. Zu der resultierenden Lösung wurden bei 30°C hintereinander 188,2 Gewichtsteile Isophorondiisocyanat (Basonat^{®} I, Fa. BASF SE) mit einem Isocyanatgehalt von 37,75 Gew.-% und 3,8 Gewichtsteile Dibutylzinndilaurat (Fa. Merck) hinzugegeben. Anschließend wurde unter Rühren auf 80°C erwärmt. Es wurde bei dieser Temperatur weiter gerührt, bis der Isocyanatgehalt der Lösung 1,55 Gew.-% betrug und konstant war. Danach wurden 626,0 Gewichtsteile Methylethylketon zum Präpolymer gegeben und das Reaktionsgemisch auf 40°C abgekühlt. Nach Erreichen von 40°C wurden 12,3 Gewichtsteile Triethylamin (Fa. BASF SE) innerhalb von zwei Minuten zugetropft und der Ansatz weitere 5 Minuten gerührt.

### b) Umsetzung des Präpolymeren mit Diethylentriamindiketimin

Anschließend wurden 31,5 Gewichtsteile einer in Beispiel D1, Abschnitt b, beschriebenen 71,9 Gew.-% Anlösung von Diethylentriamindiketimin in Methylisobutylketon (Aminäquivalentmasse (Lösung): 124,0 g/eq; Verhältnis Isocyanatgruppen des Präpolymeren zu Diethylentriamindiketimin (mit einer sekundären Aminogruppe): 5 : 1 mol/mol; entspricht zwei NCO-Gruppen pro blockierter, primärer Aminogruppe) innerhalb einer Minute zugemischt, wobei die Reaktionstemperatur nach Zugabe zur Präpolymerlösung kurzzeitig um 1°C anstieg. Der Feststoffgehalt der Isocyanatgruppen-haltigen Polymerlösung wurde mit 45,1 % bestimmt.

### c) Dispergierung und Vakuumdestillation

Nach 30 Minuten Rühren bei 40°C wurde der Inhalt des Reaktors innerhalb von 7 Minuten in 1205 Gewichtsteile deionisiertes Wasser (23°C) dispergiert. Aus der resultierenden Dispersion wurde Methylethylketon bei 45°C unter Vakuum abdestilliert und eventuelle Lösemittel- und Wasserverluste mit deionisiertem Wasser ausgeglichen, so dass ein Feststoffgehalt von 40 Gew.-% resultierte.

Es wurde eine weiße, stabile, feststoffgehaltreiche, niedrigviskose Dispersion mit vernetzten Partikeln erhalten, die auch nach 3 Monaten keinerlei Absetzen aufwies.

| | |
|---|---|
| Die so erhaltene Mikrogel-Dispersion wies folgende Kennzahlen auf: | |
| Feststoffgehalt (130°C, 60min, 1g): | 40,2 Gew.-% |
| Methylethylketon-Gehalt (GC): | 0,2 Gew.-% |
| Methylisobutylketon-Gehalt (GC): | 0,0 Gew.-% |
| Viskosität (23°C, Rotationsviskosimeter, Scherrate= 1000/s): | 19 mPas |
| Säurezahl | 17,3 mg KOH / g Feststoffgehalt |
| Neutralisationsgrad (berechnet) | 49 % |
| pH (23°C) | 7,4 |
| Partikelgröße (Photonenkorrelationsspektroskopie, Volumenmittel) | 151 nm |
| Gelanteil (gefriergetrocknet) | 84,0 Gew.-% |
| Gelanteil (130°C) | 85,2 Gew.-% |

### Beispiel D5

### Herstellung einer erfindungsgemäßen Mikrogel-Dispersion eines Polyesterurethanharnstoffs durch Zugabe von Diethylentriamindiketimin zum Überschuss eines teilneutralisierten, m-Tetramethylxyloldiisocyanatbasierenden Polyurethan-Präpolymeren in Methylethylketon und nachfolgender Vernetzung über endständige, primäre Aminogruppen nach Dispergierung in Wasser

Eine Mikrogel-Dispersion eines Polyesterurethanharnstoffs wurde folgendermaßen hergestellt:

### a) Herstellung einer teilneutralisierten Präpolymerlösung

In einem Reaktionsgefäß, ausgerüstet mit Rührer, Innenthermometer, Rückflußkühler und elektrischer Heizung, wurden 570,0 Gewichtsteile des linearen Polyesterpolyols aus Beispiel D1 und 27,7 Gewichtsteile Dimethylolpropionsäure (Fa. GEO Speciality Chemicals) in 344,4 Gewichtsteilen Methylethylketon unter Stickstoff gelöst.

Zu der resultierenden Lösung wurden bei 30°C hintereinander 202,0 Gewichtsteile m-Tetramethylxyloldiisocyanat (TMXDI^{®} (Meta) Aliphatic Isocyanate, Fa. Cytec) mit einem Isocyanatgehalt von 34,40 Gew.-% und 3,8 Gewichtsteile Dibutylzinndilaurat (Fa. Merck) hinzugegeben. Anschließend wurde unter Rühren auf 80°C erwärmt. Es wurde bei dieser Temperatur weiter gerührt, bis der Isocyanatgehalt der Lösung 1,51 Gew.-% betrug und konstant war. Danach wurden 626,4 Gewichtsteile Methylethylketon zum Präpolymer gegeben und das Reaktionsgemisch auf 40°C abgekühlt. Nach Erreichen von 40°C wurden 12,0 Gewichtsteile Triethylamin (Fa. BASF SE) innerhalb von zwei Minuten zugetropft und weitere 5 Minuten der Ansatz gerührt.

### b) Umsetzung des Präpolymeren mit Diethylentriamindiketimin

Anschließend wurden 30,8 Gewichtsteile einer in Beispiel D1, Abschnitt b, beschriebenen 71,9 Gew.-% Anlösung von Diethylentriamindiketimin in Methylisobutylketon (Aminäquivalentmasse (Lösung): 124,0 g/eq; Verhältnis Isocyanatgruppen des Präpolymeren zu Diethylentriamindiketimin (mit einer sekundären Aminogruppe): 5 : 1 mol/mol; entspricht zwei NCO-Gruppen pro blockierter, primärer Aminogruppe) innerhalb einer Minute zugemischt, wobei die Reaktionstemperatur nach Zugabe zur Präpolymerlösung kurzzeitig um 1°C anstieg. Der Feststoffgehalt der Isocyanatgruppen-haltigen Polymerlösung wurde mit 45,0 % bestimmt.

### c) Dispergierung und Vakuumdestillation

Nach 30 Minuten Rühren bei 40°C wurde der Inhalt des Reaktors innerhalb von 7 Minuten in 1206 Gewichtsteile deionisiertes Wasser (23°C) dispergiert. Aus der resultierenden Dispersion wurde Methylethylketon bei 45°C unter Vakuum abdestilliert und eventuelle Lösemittel- und Wasserverluste mit deionisiertem Wasser ausgeglichen, so dass ein Feststoffgehalt von 40 Gew.-% resultierte.

Es wurde eine weiße, stabile, feststoffgehaltreiche, niedrigviskose Dispersion mit vernetzten Partikeln erhalten, die auch nach 3 Monaten keinerlei Absetzen aufwies.

Die so erhaltene Mikrogel-Dispersion wies folgende Kennzahlen auf:

| | |
|---|---|
| Feststoffgehalt (130°C, 60min, 1g): | 39,6 Gew.-% |
| Methylethylketon-Gehalt (GC): | 0,3 Gew.-% |
| Methylisobutylketon-Gehalt (GC): | 0,1 Gew.-% |
| Viskosität (23°C, Rotationsviskosimeter, Scherrate= 1000/s): | 15 mPas |
| Säurezahl | 17,1 mg KOH/g Feststoffgehalt |
| Neutralisationsgrad (berechnet) | 49 % |
| pH (23°C) | 7,4 |
| Partikelgröße (Photonenkorrelationsspektroskopie, Volumenmittel) | 156 nm |
| Gelanteil (gefriergetrocknet) | 83,3 Gew.-% |
| Gelanteil (130°C) | 83,7 Gew.-% |

### Beispiel D6

### Herstellung einer nicht-erfindungsgemäßen Mikrogel-Dispersion eines Polyesterurethanharnstoffs durch Zugabe von Diethylentriamindiketimin zum Überschuss eines teilneutralisierten, Dicyclohexylmethan-4,4'-diisocyanat-basierenden Polyurethan-Präpolymeren in Methylethylketon bei erhöhtem Festanteil und nachfolgender Vernetzung über endständige, primäre Aminogruppen nach Dispergierung in Wasser

Die nicht-erfindungsgemäße Mikrogel-Dispersion eines Polyesterurethanharnstoffs D6 wurde wie im erfindungsgemäßen Beispiel D1 hergestellt; jedoch die Menge Methylethylketon soweit reduziert, dass ein Gehalt der Lösung (Z) am Isocyanatgruppen-haltigen Intermediat mit maskierten primären Aminogruppen (Z.1) von 70,1 % resultierte, bevor nach Dispergierung in Wasser, Entfernung des Lösungsmittels bei 45°C unter Vakuum und Ausgleich der Wasserverluste mit deionisiertem Wasser eine weiße, feststoffgehaltreiche, niedrigviskose Dispersion mit vernetzten Partikeln erhalten wurde.

Dabei blieb das Verhältnis Isocyanatgruppen des Präpolymeren zu Diethylentriamindiketimin (mit einer sekundären Aminogruppe) unverändert bei 5 : 1 mol/mol (entspricht zwei NCO-Gruppen pro blockierter, primärer Aminogruppe). Auch der Neutralisationsgrad (berechnet) blieb gleich.

Es wurde eine weiße, feststoffgehaltreiche, niedrigviskose Dispersion mit großen, vernetzten Partikeln erhalten, die nach 3 Monaten einen Bodensatz von ca. 0,2 Gew.-% der Gesamtmasse des enthaltenen Polymeren aufwies. Bei Filtration der Dispersion ergaben sich Schwierigkeiten durch schnelle Verstopfung der eingesetzten Filter.

Die so erhaltene Mikrogel-Dispersion wies folgende Kennzahlen auf:

| | |
|---|---|
| Feststoffgehalt (130°C, 60min, 1g): | 39,8 Gew.-% |
| Methylethylketon-Gehalt (GC): | 0,2 Gew.-% |
| Methylisobutylketon-Gehalt (GC): | 0,1 Gew.-% |
| Viskosität (23°C, Rotationsviskosimeter, Scherrate= 1000/s): | 14 mPas |
| Säurezahl | 17,2 mg KOH / g Feststoffgehalt |
| Neutralisationsgrad (berechnet) | 49 % |
| pH (23°C) | 7,4 |
| Partikelgröße (Photonenkorrelationsspektroskopie, Volumenmittel) | 2860 nm |
| Volumenmittelwert der Partikelgröße (D[4,3]) | 3,8 µm |
| (Laserbeugung, Fraunhofer) | |
| Gelanteil (gefriergetrocknet) | 85,9 Gew.-% |
| Gelanteil (130°C) | 87,9 Gew.-% |

### Weitere wässrige Polyurethan-basierte Dispersionen

Neben den hergestellten erfindungsgemäßen Mikrogel-Dispersionen D1, D2, D4 und D5 sowie den nicht-erfindungsgemäßen Mikrogel-Dispersionen D3 und D6 wurden weitere nicht-erfindungsgemäße Polyurethan-Dispersionen hergestellt beziehungsweise versucht herzustellen.

### Vergleichsbeispiel VD1

### Herstellung einer Dispersion eines Polyesterurethans durch Dispergierung einer Methylethylketon-Lösung eines teilneutralisierten, Dicyclohexylmethan-4,4'-diisocyanat-basierenden Polyesterurethans

Eine Standard-Polyurethandispersion VD1 wurde auf Basis Dicyclohexylmethan-4,4'-diisocyanat gemäß WO 92/15405, Seite 15, Zeile 16-20, hergestellt.

Die so erhaltene Polyurethan-Dispersion wies folgende Kennzahlen auf:

| | |
|---|---|
| Feststoffgehalt (130°C, 60min, 1g): | 27,0 Gew.-% |
| Methylethylketon-Gehalt (GC): | 0,2 Gew.-% |
| Viskosität (23°C, Rotationsviskosimeter, Scherrate= 1000/s): | 135 mPas |
| Säurezahl | 19,9 mg KOH / g Feststoffgehalt |
| pH (23°C) | 7,8 |
| Partikelgröße (Photonenkorrelationsspektroskopie, Volumenmittel) | 46 nm |
| Gelanteil (gefriergetrocknet) | -0,7 Gew.-% |
| Gelanteil (130°C) | -0,3 Gew.-% |

### Vergleichsbeispiel VD2

### Herstellung einer Dispersion eines Polyesterurethanharnstoffs durch Dispergierung einer Methylethylketon-Lösung eines teilneutralisierten, Dicyclohexylmethan-4,4'-diisocyanat-basierenden Polyurethan-Präpolymeren mit freien Isocyanatgruppen in Wasser (ohne Zusatz von Ketimin oder weiterem Amin)

Die im erfindungsgemäßen Beispiel D1 hergestellte Menge teilneutralisierte Präpolymerlösung (D1, Abschnitt a, 1786,4 Gewichtsteile) wurde auf 40°C temperiert und ohne Zusatz von Diketimin oder weiterem Amin unter Rühren innerhalb von 7 Minuten in 1193 Gewichtsteile deionisiertes Wasser (23°C) dispergiert. Aus der resultierenden Dispersion wurde das Methylethylketon bei 45°C unter Vakuum abdestilliert und eventuelle Lösemittel- und Wasserverluste mit deionisiertem Wasser ausgeglichen, so dass ein Feststoffgehalt von 40 Gew.-% resultierte.

Die Dispersion wurde anschließend 24 Stunden bei 40°C temperiert, wobei in den ersten Stunden die Bildung von Kohlendioxid beobachtet wurde. Nach 24 Stunden konnte keine weitere Kohlendioxid-Entwicklung mehr festgestellt werden.

Es wurde eine weiße, absetzstabile, feststoffgehaltreiche, niedrigviskose Dispersion erhalten, die unvernetzt war.

Die Ermittlung des Gelanteils wurde unmittelbar nach Vakuumdestillation und Einstellung des Feststoffgehalts mit deionisiertem Wasser vorgenommen, als auch an einer Dispersion, die nachträglich 24 Stunden bei 40°C temperiert wurde. Die Bestimmung wurde nach vier Wochen Temperierung bei 40°C wiederholt.

Die so erhaltene Polymer-Dispersion wies folgende Kennzahlen auf:

| | |
|---|---|
| Feststoffgehalt (130°C, 60min, 1g): | 39,6 Gew.-% |
| Methylethylketon-Gehalt (GC): | 0,2 Gew.-% |
| Viskosität (23°C, Rotationsviskosimeter, Scherrate= 1000/s): | 45 mPas |
| Säurezahl | 17,3 mg KOH / g Feststoffgehalt |
| Neutralisationsgrad (berechnet) | 49% |
| pH (23°C) | 7,6 |
| Partikelgröße (Photonenkorrelationsspektroskopie, Volumenmittel) | 172 nm |
| Gelanteil (gefriergetrocknet) | - 1,2 Gew.-% |
| Gelanteil (130°C) | 1,8 Gew.-% |
| Gelanteil (gefriergetrocknet) (Disp. nach 24 Stunden, 40°C) | 1,0 Gew.-% |
| Gelanteil (130°C) (Dispersion nach 24 Stunden, 40°C) | 3,6 Gew.-% |
| Gelanteil (gefriergetrocknet) (Disp. nach 4 Wochen, 40°C) | 1,1 Gew.-% |
| Gelanteil (130°C) (Dispersion nach 4 Wochen, 40°C) | 2,9 Gew.-% |

### Vergleichsbeispiel VD3

### Versuch der Herstellung einer Mikrogel-Dispersion eines Polyesterurethanharnstoffs durch Zugabe von Diethylentriamin zum Überschuss eines teilneutralisierten, Dicyclohexylmethan-4,4'-diisocyanat-basierenden Polyurethan-Präpolymeren in Methylethylketon und Dispergierung in Wasser

Zu der im erfindungsgemäßen Beispiel D1 hergestellten Menge teilneutralisierten Präpolymerlösung (D1, Abschnitt a, 1786,4 Gewichtsteile) wurde bei 40°C 8,4 Gewichtsteile Diethylentriamin (Fa. BASF SE) (Verhältnis Isocyanatgruppen des Präpolymeren zu Diethylentriamin: 5 : 1 mol/mol; entspricht zwei NCO-Gruppen pro primärer Aminogruppe) innerhalb einer Minute zugemischt, wobei die Reaktionstemperatur nach Zugabe zur Präpolymerlösung kurzzeitig um 2°C anstieg und sich die Viskosität erhöhte. Der Feststoffgehalt der Polymerlösung wurde mit 45,0 % bestimmt.

Zur Dispergierung in deionisierten Wasser nach 30 Minuten kam es nicht mehr, weil der Reaktionsansatz nach 21 Minuten bereits vollständig geliert war.

### Vergleichsbeispiel VD4

### Herstellung einer Dispersion eines Polyesterurethanharnstoffs durch Zugabe von Ethylendiamin zum Überschuss eines teilneutralisierten, Dicyclohexylmethan-4,4'-diisocyanat-haltigen Polyurethan-Präpolymeren in Methylethylketon und Dispergierung in Wasser

Eine Dispersion eines Polyesterurethanharnstoffs wurde folgendermaßen hergestellt: Die im erfindungsgemäßen Beispiel D1 hergestellte Menge teilneutralisierte Präpolymerlösung (D1, Abschnitt a, 1786,4 Gewichtsteile) wurde auf 40°C temperiert und anschließend 6,1 Gewichtsteile Ethylendiamin (Fa. BASF SE) (Verhältnis Isocyanatgruppen des Präpolymeren zu Ethylendiamin (ohne sekundäre Aminogruppen): 4 : 1 mol/mol; entspricht zwei NCO-Gruppen pro primärer Aminogruppe) innerhalb einer Minute zugemischt, wobei die Reaktionstemperatur nach Zugabe zur Präpolymerlösung kurzzeitig um 1°C anstieg. Der Feststoffgehalt der Polymerlösung wurde mit 45,3 % bestimmt.

Nach 30 Minuten Rühren bei 40°C wurde der Inhalt des Reaktors geteilt und die Hälfte innerhalb von 7 Minuten in 601 Gewichtsteile deionisierten Wasser (23°C) dispergiert. Die andere Hälfte verblieb im Reaktor und wurde weitere 12 Stunden bei 40°C gerührt, ohne dass eine Gelierung des Reaktionsansatzes eintrat.

Aus der resultierenden Dispersion wurde das Methylethylketon bei 45°C unter Vakuum abdestilliert und eventuelle Lösemittel- und Wasserverluste mit deionisiertem Wasser ausgeglichen, so dass ein Feststoffgehalt von 40 Gew.-% resultierte.

Es wurde eine weiße, stabile, feststoffgehaltreiche, niedrigviskose Dispersion mit unvernetzten Partikeln erhalten, die also keine Mikrogel-Partikel aufwies.

Die so erhaltene Dispersion wies folgende Kennzahlen auf:

| | |
|---|---|
| Feststoffgehalt (130°C, 60min, 1g): | 39,9 Gew.-% |
| Methylethylketon-Gehalt (GC): | 0,2 Gew.-% |
| Viskosität (23°C, Rotationsviskosimeter, Scherrate= 1000/s): | 55 mPas |
| Säurezahl | 17,2 mg KOH / g Feststoffgehalt |
| Neutralisationsgrad (berechnet) | 49% |
| pH (23°C) | 7,4 |
| Partikelgröße (Photonenkorrelationsspektroskopie, Volumenmittel) | 157 nm |
| Gelanteil (gefriergetrocknet) | - 0,3 Gew.-% |
| Gelanteil (130°C) | - 1,1 Gew.-% |

### Bewertung der Polymer-Dispersionen für den Einsatz in silberblauen Wasserbasislacken und Herstellung weiterer Polymer-Dispersionen

Für den Applikationsvergleich wurde eine in Wasserbasislacken verbreitete Polyurethandispersion VD1 (gemäß WO 92/15405, Seite 15, Zeile 16-20) hergestellt, die keine vernetzten Partikel enthielt.

Ebenfalls zu Vergleichszwecken hergestellt wurde eine festkörperreiche Polyurethanharnstoff-Dispersion VD4, die sich nach Zugabe von Ethylendiamin zum Präpolymer nach Dispergierung in Wasser bildete, die aber keine Mikrogele enthielt. Es konnte also gezeigt werden, dass die Kettenverlängerung mittels Ethylendiamin trotz hohem Isocyanat-Überschusses nicht geeignet war, vernetzte Partikel zu liefern.

Auf die Präparation eines Wasserbasislacks mit der zu Vergleichszwecken hergestellten Dispersion VD2, welche nach Dispergierung des Isocyanatgruppen-haltigen Präpolymeren direkt in Wasser erzeugt wurde, wurde verzichtet, weil zwar beobachtet werden konnte, dass eine feinteilige, stabile Dispersion nach Dispergierung und Reaktion der freien Isocyanatgruppen mit Wasser unter heftiger CO₂-Entwicklung entsteht, diese Vorgehensweise aber überraschenderweise nicht geeignet war, eine Mikrogel-Dispersionen zu erzeugen. Nach Ermittlung des Gelanteils konnten, wenn überhaupt, nur in sehr geringem Umfang vernetzte Partikel gefunden werden.

Die Umsetzung der Präpolymerlösung mit unmaskiertem Diethylentriamin führte im Vergleichsbeispiel VD3 zwar in kurzer Zeit zur vollständigen Gelierung der organischen Harzlösung trotz hoher Verdünnung noch vor der angestrebten Dispergierung in Wasser; eine Mikrogel-Dispersion konnte aber auf diese Weise nicht hergestellt werden.

Mikrogel-Dispersionen mit hohen Gelanteilen wurden in den erfindungsgemäßen Versuchen D1, D2, D4 und D5 sowie den nicht-erfindungsgemäßen Versuchen D3 und D6 erhalten.

Bei Ersatz des Lösemittels (Z.2) (hier Methylethylketon) durch ein hiervon unterschiedliches Lösemittel (hier Aceton) während der Herstellung eines Präpolymers (Z.1.1) beziehungsweise einer Zusammensetzung (Z) wurde eine Mikrogel-Dispersion D3 hergestellt, die viel zu große Partikel enthielt. Aufgrund der Stabilitätsprobleme infolge der großen Mikrogel-Partikel wurde auf die Präparation eines Wasserbasislacks verzichtet. Die Lagerstabilität solcher Systeme ist ungenügend.

Auch konnte im Herstellbeispiel D6 eine Mikrogel-Dispersion erhalten werden. Allerdings war die Partikelgröße der entstehenden Mikrogel-Partikel bei höherem Gehalt des Intermediats (Z.1) an der Zusammensetzung (Z) vor Dispergierung (70,1% gegenüber 45,3% im Herstellbeispiel D1) deutlich erhöht, was die Langzeitstabilität der Dispersion beeinträchtigte. Wiederum wurde wegen der schlechten Lagerstabilität auf die Präparation von Basislacken mit anschließender Applikation verzichtet.

Es wurden zur weiteren Analyse des Einflusses des Anteils des Intermediats (Z.1) an der Zusammensetzung (Z) weitere Mikrogel-Dispersionen hergestellt. Dabei wurde ausgehend von der Herstellung der Dispersion D1 jeweils nur der Anteil des Intermediats (Z.1) an der Zusammensetzung (Z) variiert.

Tabelle I. zeigt die hergestellten Mikrogel-Dispersionen, spezifiziert anhand der Partikelgröße. Die Dispersionen D1 und D6 sind ebenfalls aufgeführt. Der besseren Übersichtlichkeit halber wird die Dispersion D1 als Dispersion Df, die Dispersion D6 als Dispersion Dk aufgeführt. Alle Dispersionen wiesen darin enthaltene PolymerPartikel mit einem Gelanteil von über 80 % auf.

**Tabelle I.:**

| **Dispersion** | **Anteil (Z.1) an (Z) in Gew.-%** | **Mittlere Partikelgröße in nm (über PCS bestimmt)** |
|---|---|---|
| Da | 20,1 | 1360 |
| Db | 30,0 | 394 |
| Dc | 35,0 | 266 |
| Dd | 40,0 | 155 |
| De | 42,5 | 162 |
| Df (=D1) | 45,3 | 167 |
| Dg | 47,5 | 158 |
| Dh | 50,0 | 155 |
| Di | 55,2 | 970 |
| Dj | 60,0 | 1645 |
| Dk (=D6) | 70,1 | 2860 / 3800¹ |

| | | |
|---|---|---|
| ¹ Der Wert 3800 nm wurde mittels Laserbeugung gemessen. | | |

Die Ergebnisse zeigen, dass der Anteil des Intermediats (Z.1) an der Zusammensetzung (Z) und damit auch der Feststoffgehalt dieser Zusammensetzung überraschenderweise nicht zu hoch sein darf, um Mikrogel-Dispersionen zu erhalten, in denen die enthaltenen Polyurethan-Polyharnstoff-Partikel mittlere Teilchengrößen im akzeptablen Bereich aufweisen. Ebenfalls überraschenderweise werden die mittleren Teilchengrößen auch bei sehr gering werdenden Anteilen des Intermediats wieder größer. Bei zu geringen Anteilen des Intermediats und damit hohen Anteilen organischer Lösemittel ist allerdings ohnehin aufgrund der ökologischen und ökonomischen Nachteile kein Nutzen mehr gegeben.

Insgesamt zeigt sich, dass bei höher werdenden sowie sehr niedrig werdenden Anteilen des Intermediats die mittleren Teilchengrößen der Polyurethan-Polyharnstoff-Partikel rapide ansteigen.

### Herstellung von silberblauen Wasserbasislacken

Für den Applikationsvergleich wurde mit einer Polyurethandispersion VD1 (gemäß WO 92/15405, Seite 15, Zeile 16-20) ein Standard-Wasserbasislack BL-V1 hergestellt, wobei dieser im Gegensatz zu allen erfindungsgemäß hergestellten Wasserbasislacken mit einem Schichtsilikat-Verdicker ausgestattet war, so auch in der Patentanmeldung WO 92/15405, um das senkrechte Ablaufen vom Blech während der Applikation und Trocknung zu verhindern.

Ebenfalls ein Schichtsilikat-freier Wasserbasislack wurde zu Vergleichszwecken angesetzt auf Basis einer festkörperreichen Polyurethanharnstoff-Dispersion VD4, die sich nach Zugabe von Ethylendiamin zum Präpolymer nach Dispergierung in Wasser bildete, die aber keine Mikrogele enthielt.

Von den erfindungsgemäß hergestellten Mikrogel-Dispersionen D1, D2, D4 und D5 wurden Wasserbasislacke angesetzt (BL-A1 bis BL-A4), die im Gegensatz zum Standard-Wasserbasislack BL-V1 frei von Schichtsilikat-Verdickern waren.

Im Nachfolgenden wird die Herstellung der Wasserbasislacke detailliert beschrieben.

### Herstellung eines silberblauen Wasserbasislacks BL-V1 als Vergleichsbeispiel auf Basis einer Polyurethan-Dispersion VD1 mit Polyurethan-Partikeln, die nicht vernetzt sind, und direkt als farbgebende Schicht auf einen gehärteten Füller aufgetragen werden kann

Die in der Tabelle 1 unter "wässrige Phase" aufgeführten Komponenten werden in der vorgegebenen Reihenfolge zu einer wässrigen Mischung zusammengerührt. Im nächsten Schritt wird aus den unter "organische Phase" aufgeführten Komponenten eine organische Mischung hergestellt. Die organische Mischung wird zur wässrigen Mischung gegeben. Sodann wird 10 min lang gerührt und mit Hilfe von deionisiertem Wasser und N,N-Dimethylethanolamin (Fa. BASF SE) auf einen pH-Wert von 8,1 und einer Spritzviskosität von 73 mPas bei einer Scherbelastung von 1000 s⁻¹, gemessen mit einem Rotations-Viskosimeter (Gerät Rheomat RM 180 der Firma Mettler-Toledo) bei 23°C, eingestellt.

**Tabelle 1:**

| **Herstellung eines silberblauen Wasserbasislacks BL-V1** | |
|---|---|
| **Bezeichnung des Wasserbasislacks** | **BL-V1** |
| **Komponente** | **Gewichtsteile** |
| WÄSSRIGE PHASE | |
| Wässrige Lösung von 3% Natrium-Lithium-Magnesium-Schichtsilikat Laponite^{®} RD (Fa. Altana-Byk) und 3% Pluriol^{®} P900 (Fa. BASF SE) | 24,7 |
| VD-1 Polyurethandispersion, hergestellt gemäß Seite 15, Zeile 16-20 der WO 92/15405 | 18 |
| Hydroxyfunktioneller Polyester; hergestellt gemäß Beispiel D, Spalte 16, Z. 37-59 der DE-A-4009858 | 3,2 |
| Luwipal^{®} 052 (Fa. BASF SE), Melamin-Formaldehyd-Harz | 4,3 |
| TMDD 50% BG (Fa. BASF SE), 52%ige Lösung von 2,4,7,9-Tetramethyl-5-decin-4,7-diol in Butylglykol | 1,9 |
| 10%ige Lösung von N,N-Dimethylethanolamin (Fa. BASF SE) in Wasser | 0,8 |
| Butylglykol (Fa. BASF SE) | 5,7 |
| Hydroxyfunktionelles polyurethanmodifiziertes Polyacrylat; hergestellt gemäß S. 7, Z. 55 bis S.8, Z. 23 der DE 4437535 A1 | 4,7 |
| 10 Gew.-%ige Lösung Rheovis^{®} AS 1130 (BASF SE) Rheologiemittel | 4 |
| 50 Gew.-%ige Lösung Rheovis^{®} PU 1250 (BASF SE) Rheologiemittel | 0,47 |
| Isopropanol (Fa. BASF SE) | 1,9 |
| Triethylenglykol (Fa. BASF SE) | 2,4 |
| 2-Ethylhexanol (Fa. BASF SE) | 2 |
| Isopar^{®} L (Fa. ExxonMobil Chemical), Lösungsmittel (isoparaffinischer Kohlenwasserstoff) | 1 |
| Rußpaste | 4,3 |
| Blaupaste | 6,9 |
| Rotpaste | 0,23 |

| Interferenzpigment-Schlämme | |
|---|---|
| Iriodin^{®} 9119 Polarweiß SW (Fa. Merck), ein silberweißes Interferenzpigment; Glimmer, beschichtet mit Rutil (TiO₂) | 1 |
| Iriodin^{®} 9225 SQB Rutil Perlblau SW (Fa. Merck), ein blaues Interferenzpigment; Glimmer, beschichtet mit Rutil (TiO₂) | 0,06 |
| Mischlack, hergestellt gemäß Spalte 11, Zeile 1-17 der EP 1534792 - B1 | 3,2 |
| Deionisiertes Wasser | 7,98 |

| ORGANISCHE PHASE | |
|---|---|
| Mischung zweier handelsüblicher Aluminium-pigmente STAPA Hydrolux 1071 Aluminium u. STAPA Hydrolux VP Nr. 56450/G Aluminium (Fa. Eckart Effect Pigments) | 0,36 |
| Butylglykol (Fa. BASF SE) | 0,5 |
| Hydroxyfunktioneller Polyester; hergestellt gemäß Beispiel D, Spalte 16, Z. 37-59 der DE-A-4009858 | 0,3 |
| 10%ige Lösung von N,N-Dimethylethanolamin (Fa. BASF SE) in Wasser (zur Einstellung von pH-Wert und Spritzviskosität) | 0,1 |

### Herstellung der Russpaste

Die Rußpaste wurde aus 57 Gewichtsteilen einer gemäß der internationalen Patentanmeldung WO 91/15528 Bindemitteldispersion A hergestellten acrylierten Polyurethandispersion, 10 Gewichtsteilen Russ Monarch^{®} 1400, 6 Gewichtsteilen Dimethylethanolamin (10%ig in VE-Wasser), 2 Gewichtsteilen eines handelsüblichen Polyethers (Pluriol^{®} P900 der Firma BASF SE) und 25 Gewichtsteilen deionisiertem Wasser hergestellt.

### Herstellung der Blaupaste

Die Blaupaste wurde aus 59 Gewichtsteilen einer gemäß der internationalen Patentanmeldung WO 91/15528 Bindemitteldispersion A hergestellten acrylierten Polyurethandispersion, 25 Gewichtsteilen Palomar Blue^{®} 15:1, 1,3 Gewichtsteilen Dimethylethanolamin (10%ig in VE-Wasser), 0,25 Gewichtsteilen Parmetol^{®} N 20, 4 Gewichtsteilen eines handelsüblichen Polyethers (Pluriol^{®} P900 der Firma BASF SE), 2 Gewichtsteilen Butylglykol und 10,45 Gewichtsteilen deionisiertem Wasser hergestellt.

### Herstellung der Rotpaste

Die Rotpaste wurde aus 38,4 Gewichtsteilen einer gemäß der internationalen Patentanmeldung WO 91/15528 Bindemitteldispersion A hergestellten acrylierten Polyurethandispersion, 47,1 Gewichtsteilen Bayferrox^{®} 13 BM/P, 0,6 Gewichtsteilen Dimethylethanolamin (10%ig in VE-Wasser), 4,7 Gewichtsteilen eines handelsüblichen Polyethers (Pluriol^{®} P900 der Firma BASF SE), 2 Gewichtsteilen Butylglykol und 7,2 Gewichtsteilen deionisiertem Wasser hergestellt.

### Herstellung von erfindungsgemäßen, silberblauen Wasserbasislacken, die Polyurethanharnstoff-Mikrogele enthalten (BL-A1 bis BL-A4), die direkt als farbgebende Schicht auf einen gehärteten Füller aufgetragen werden können und als Vergleichsbeispiel eines silberblauen Wasserbasislacks mit Polyurethanharnstoff-Partikeln, die nicht vernetzt sind (BL-V2)

Die in der Tabelle 2 unter "wässrige Phase" aufgeführten Komponenten werden in der angegebenen Reihenfolge zu einer wässrigen Mischung zusammengerührt. Im nächsten Schritt wird aus dem unter "organische Phase" aufgeführten Komponenten eine organische Mischung hergestellt. Die organische Mischung wird zur wässrigen Mischung gegeben. Sodann wird 10 min lang gerührt und mit Hilfe von deionisiertem Wasser und N,N-Dimethylethanolamin (Fa. BASF SE) auf einen pH-Wert von 8,1 und einer Spritzviskosität von 80±5 mPas bei einer Scherbelastung von 1000 s⁻¹, gemessen mit einem Rotations-Viskosimeter (Gerät Rheomat RM 180 der Firma Mettler-Toledo) bei 23°C, eingestellt.

**Tabelle 2:**

| **Herstellung von silberblauen Wasserbasislacken BL-A1 bis BL-A4 und BL-B2** | | | | | | |
|---|---|---|---|---|---|---|
| **Bezeichnung des Wasserbasislacks** | | **BL-A1** | **BL-A2** | **BL-A3** | **BL-A4** | **BL-V2** |
| **Komponente** | | **Gewichtsteile** | | | | |
| WASSRIGE PHASE | | | | | | |
| Butylglykol | | 2,000 | 2,000 | 2,000 | 2,000 | 2,000 |
| Hydroxyfunktioneller Polyester, hergestellt gemäß | | 3,200 | 3,200 | 3,200 | 3,200 | 3,200 |
| Beispiel D, Seite 10, der DE 4009858 C2, | | | | | | |
| Luwipal^{®} 052 (Fa. BASF SE), | | 4,300 | 4,300 | 4,300 | 4,300 | 4,300 |
| Melamin-Formaldehyd-Harz | | | | | | |
| 10%ige Lösung von N,N-Dimethylethanolamin | | 0,600 | 0,600 | 0,600 | 0,600 | 0,600 |
| (Fa. BASF SE) in Wasser | | | | | | |
| Hydroxyfunktionelles polyurethanmodifiziertes | | 4,700 | 4,700 | 4,700 | 4,700 | 4,700 |
| Polyacrylat, hergestellt gemäß Beispiel D, Seite 7-8 | | | | | | |
| der DE 4437535 A1, | | | | | | |
| PU-Mikrogel-Dispersion gemäß Herstellbeispiel | **D1** | **12,400** | | | | |
| PU-Mikrogel-Dispersion gemäß Herstellbeispiel | **D2** | | **12,525** | | | |
| PU-Mikrogel-Dispersion gemäß Herstellbeispiel | **D4** | | | **12,400** | | |
| PU-Mikrogel-Dispersion gemäß Herstellbeispiel | **D5** | | | | **12,588** | |
| PU-Dispersion gemäß Herstellbeispiel | **VD4** | | | | | **12,493** |
| Butylglykol | | 2,000 | 2,000 | 2,000 | 2,000 | 2,000 |
| Adekanol^{®} UH-756VF (Fa. Adeka), | | 0,150 | 0,150 | 0,150 | 0,150 | 0,150 |
| ein Polyurethan-Assoziativverdicker | | | | | | |
| Deionisiertes Wasser | | 1,000 | 1,000 | 1,000 | 1,000 | 1,000 |
| Russpaste | | 4,300 | 4,300 | 4,300 | 4,300 | 4,300 |
| Blaupaste | | 6,900 | 6,900 | 6,900 | 6,900 | 6,900 |
| Rotpaste | | 0,230 | 0,230 | 0,230 | 0,230 | 0,230 |
| Deionisiertes Wasser | | 1,000 | 1,000 | 1,000 | 1,000 | 1,000 |
| Tris(2-butoxyethyl)phosphat (Fa. Solvay) | | 3,000 | 3,000 | 3,000 | 3,000 | 3,000 |
| Deionisiertes Wasser | | 9,000 | 9,000 | 9,000 | 9,000 | 9,000 |

| Interferenzpigment -Schlämme | | | | | | |
|---|---|---|---|---|---|---|
| PU-Mikrogel-Dispersion gemäß Herstellbeispiel | **D1** | **2,200** | | | | |
| PU-Mikrogel-Dispersion gemäß Herstellbeispiel | **D2** | | **2,222** | | | |
| PU-Mikrogel-Dispersion gemäß Herstellbeispiel | **D4** | | | **2,200** | | |
| PU-Mikrogel-Dispersion gemäß Herstellbeispiel | **D5** | | | | **2,233** | |
| PU-Dispersion gemäß Herstellbeispiel | **VD4** | | | | | **2,217** |
| Iriodin^{®} 9119 Polarweiß SW (Fa. Merck), ein | | 1,000 | 1,000 | 1,000 | 1,000 | 1,000 |
| silber weißes Interferenzpigment; Glimmer, beschichtet mit Rutil (TiO₂) | | | | | | |
| | | | | | | |
| Iriodin^{®} 9225 SQB Rutil Perlblau SW (Fa. Merck), ein blaues Interferenzpigment; Glimmer, beschichtet mit Rutil (TiO₂) | | 0,060 | 0,060 | 0,060 | 0,060 | 0,060 |
| | | | | | | |
| | | | | | | |

| ORGANISCHE PHASE | | | | | | |
|---|---|---|---|---|---|---|
| Butylglykol | | 0,360 | 0,360 | 0,360 | 0,360 | 0,360 |
| Handelsübliches Aluminiumpigment | | 0,360 | 0,360 | 0,360 | 0,360 | 0,360 |
| STAPA Hydrolux 200 (Fa. Eckart Effect Pigments) | | | | | | |
| in einem Lösungsmittelgemisch aus wasserstoffbehandeltem Naphtha, leichte aromatische Lösungs-mittelnaphtha (Erdöl) und Butylglykol | | 0,360 | 0,360 | 0,360 | 0,360 | 0,360 |
| Hydroxyfunktioneller Polyester, hergestellt gemäß | | 0,018 | 0,018 | 0,018 | 0,018 | 0,018 |
| Beispiel D, Seite 10, der DE 4009858 C2 | | | | | | |
| 10%ige Lösung von N,N-Dimethylethanolamin | | | | | | |
| (Fa. BASF SE) in Wasser (zur Einstellung von pH-Wert und Spritzviskosität) | | | | | | |

Die Herstellung der eingesetzten Russpaste, Blaupaste und Rotpaste wurde bereits unter Tabelle 1 beschrieben.

### Vergleich zwischen den erfindungsgemäßen Wasserbasislacken BL-A1 bis BL-A4 mit den Wasserbasislacken BL-V1 und BL-V2 in Hinblick auf Feststoffgehalt, Volumenfestkörper, pH-Wert und Viskosität

Zuerst wurden Feststoffgehalt, Volumenfestkörper, pH-Wert und Viskosität der erfindungsgemäß hergestellten Wasserbasislacke BL-A1 bis BL-A4 ohne Schichtsilikat-Verdicker dem Standard-Wasserbasislack BL-V1, der einen Schichtsilikat-Verdicker enthielt, gegenübergestellt. Als zweiter Vergleich wurde der Wasserbasislack BL-V2 enthaltend die Polyurethan-Harnstoff-Dispersion VD4 herangezogen, der ebenso frei von Schichtsilikat-Verdicker war, aber wie Vergleichs-Wasserbasislack BL-V1 im Gegensatz zu den erfindungsgemäß hergestellten Wasserbasislacken keine erfindungsgemäße Dispersion (PD) enthielt. Die Ergebnisse sind in Tabelle 3 dargestellt.

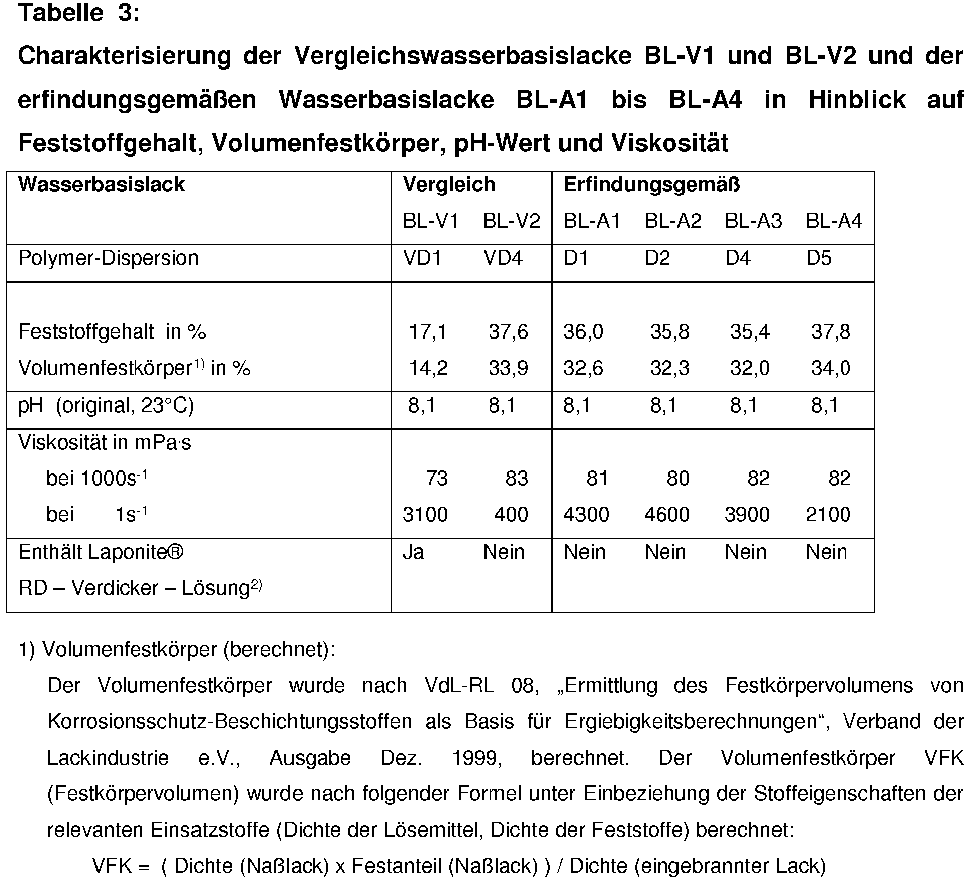

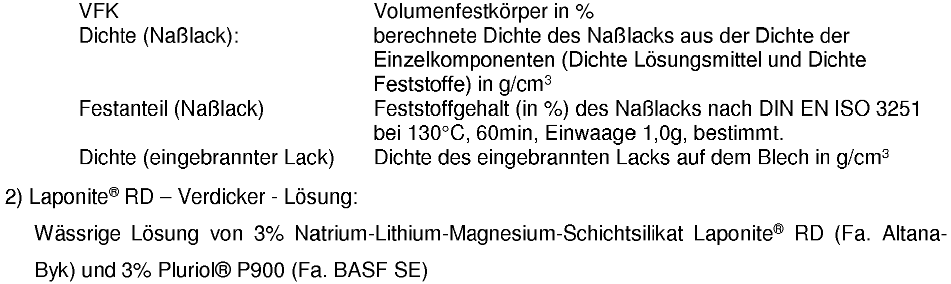

Die Ergebnisse in Tabelle 3 zeigen, dass die erfindungsgemäßen Basislacke ein ausgezeichnetes rheologisches Verhalten mit einem sehr hohen Festkörper vereinen. Während die Viskosität bei hoher Scherbelastung im für die Spritzapplikation richtigen, das heißt eher niedrigen Bereich liegt (Spritzviskosität), ist die Viskosität bei niedriger Scherbelastung (repräsentativ für den Lack nach der Applikation auf dem Substrat) deutlich höher, sodass eine angemessen Stabilität insbesondere gegenüber Läufern besteht. Während der Basislack BL-V1 ein entsprechend vorteilhaftes rheologisches Profil hat, jedoch hinsichtlich der Feststoffgehalts deutliche Nachteile aufweist, besitzt der Basislack BL-V2 kein akzeptables rheologisches Verhalten (deutlich zu niedrige Viskosität bei niedriger Scherbelastung).

### Vergleichsversuche zwischen den erfindungsgemäßen Wasserbasislacken BL-A1 bis BL-A4 mit den Wasserbasislacken BL-V1 und BL-V2 in Hinblick auf Läufer- und Kocherstabilität, Nadelstichgrenze und Nadelstichanzahl

Zur Bestimmung der Läufer-, Kocher-, Nadelstichgrenze und Nadelstichanzahl wurden Mehrschichtlackierungen unter Einsatz der Wasserbasislacke (BL-V1, BL-V2 sowie BL-A1 bis BL-A4 hergestellt. Die Mehrschichtlackierungen wurden mit den Wasserbasislacken nach der folgenden allgemeinen Vorschrift hergestellt:
Ein mit einer gehärteten Füllerlackierung beschichtetes Stahlblech der Abmessungen 30 cm x 50 cm wurde an einer Längskante mit einem Klebstreifen versehen, um nach der Beschichtung die Schichtdickendifferenzen ermitteln zu können. Der Wasserbasislack wurde keilförmig elektrostatisch appliziert. Die resultierende Wasserbasislackschicht wurde während einer Minute bei Raumtemperatur abgelüftet und anschließend während 10 Minuten im Umluftofen bei 70°C getrocknet. Auf die getrocknete Wasserbasislackschicht wurde ein von der BASF Coatings GmbH kommerziell erhältlicher Zweikomponenten-Klarlack ProGloss^{®} (FF99-0345) appliziert. Die resultierende Klarlackschicht wurde während 20 Minuten bei Raumtemperatur abgelüftet. Anschließend wurden Wasserbasislackschicht und Klarlackschicht in einem Umluftofen 20 Minuten bei 140°C gemeinsam gehärtet. Die Schichtdicke der gehärteten Klarlackschicht war über das gesamte Blech konstant (± 1 µm) bei einer Klarlackschichtdicke von 35 bis 45 µm.

Im Falle der Bestimmung der Kochergrenze, Nadelstichgrenze und Nadelstichanzahl wurden die Bleche waagerecht im Umluftofen getrocknet und gehärtet und visuell die Kocher- und Nadelstichgrenze ermittelt, indem die resultierende Schichtdicke der keilförmig ansteigenden Basislackschicht bestimmt wurde, ab der erstmals Kocher bzw. Nadelstiche auftraten. Darüber hinaus wurde bei der Nadelstichanzahl die Anzahl der Nadelstiche ermittelt, die auf dem beschichteten Blech mit der Kantenlänge 30 cm x 50 cm auftraten.

Im Falle der Ermittlung der Läufergrenze wurden Lochbleche gleicher Dimension aus Stahl eingesetzt, die Bleche wie oben beschrieben beschichtet und die applizierten Lacke wie oben beschrieben getrocknet sowie gehärtet, wobei allerdings jeweils nach Wasserbasislack- und Klarlackapplikation die Bleche senkrecht im Ofen aufgestellt wurden.

Die Schichtdicke, ab welcher Läufer auftreten, wird als Läufergrenze bezeichnet und wurde visuell ermittelt.

Die Tabelle 4 gibt einen Überblick über die Ergebnisse der Bestimmung der Läufergrenze, Kochergrenze, Nadelstichgrenze und der Nadelstichanzahl:
Während Wasserbasislack BL-V1 ein Schichtsilikat-Verdicker Laponite^{®} RD enthielt, waren alle weiteren Wasserbasislacke frei von dieser Verdickerkomponente.

Während die Vergleichswasserbasislacke BL-V1 und BL-V2 keine vernetzten Partikel aufwiesen, enthielten die erfindungsgemäß hergestellten Wasserbasislacke BL-A1 bis BL-A4 erfindungsgemäße Dispersionen (PD).

**Tabelle 4:**

| **Ergebnisse der Bestimmung der Läufergrenze, Kochergrenze, Nadelstichgrenze und der Nadelstichanzahl der Mehrschichtlackierungen auf Basis der Wasserbasislacke BL-A1 bis BL-A4 und BL-B1 bis BL-B2** | | | | | | |
|---|---|---|---|---|---|---|
| Wasserbasislack | Vergleich | | Erfindungsgemäß | | | |
| | BL-V1 | BL-V2 | BL-A1 | BL-A2 | BL-A3 | BL-A4 |
| Polyurethandispersion | VD1 | VD4 | D1 | D2 | D4 | D5 |
| Enthält Laponite^{®} | Ja | Nein | Nein | Nein | Nein | Nein |
| RD - Verdicker - Lösung¹⁾ | | | | | | |
| Läufergrenze in µm ²⁾ | 23 | 8 | > 60 | > 60 | > 60 | > 60 |
| Kochergrenze in µm ³⁾ | 12 | 14 | 39 | 40 | 35 | 31 |
| Nadelstichgrenze in µm ⁴⁾ | 16 | 13 | 36 | 36 | 36 | 30 |
| Nadelstichzahl ⁵⁾ | 17 | > 100 | 12 | 15 | 14 | 20 |

1) Laponite^{®} RD - Verdicker - Lösung:
   Wässrige Lösung von 3% Natrium-Lithium-Magnesium-Schichtsilikat Laponite^{®} RD (Fa. Altana-Byk) und 3% Pluriol^{®} P900 (Fa. BASF SE)
2) Läufergrenze in µm: Schichtdicke, ab weiche Läufer auftreten
3) Kochergrenze in µm, ab welcher Schichtdicke Kocher auftreten
4) Nadelstichgrenze in µm: Schichtdicke der Basislackschicht, ab der Nadelstiche auftreten nach Applikation eines Basislackkeils und einer konstanten Schicht eines Zweikomponentenklarlacks und gemeinsamer Härtung im Umluftofen bei 140°C, 20 min
5) Nadelstichanzahl: Anzahl der Nadelstiche ab Nadelstichgrenze des beschichteten Blechs mit Kantenlänge 30 cm x 50 cm

Die Ergebnisse belegen, dass der Einsatz der erfindungsgemäßen Dispersionen (PD) in den Wasserbasislacken BL-A1 bis BL-A4 zur Herstellung von Mehrschichtlackierungen im Vergleich zum Einsatz der Wasserbasislacke BL-V1 und BL-V2 deutliche Vorteile hinsichtlich aller bewerteten optischen Eigenschaften aufweist.

### Vergleichsversuche zwischen den erfindungsgemäßen Wasserbasislacken BL-A1 bis BL-A4 mit den Wasserbasislacken BL-V1 und BL-V2 in Hinblick auf Haftungseigenschaften auf Basis von Gitterschnitt- und Steinschlag-Ergebnissen

Zur Bestimmung der Haftungseigenschaften wurden Mehrschichtlackierungen mit den Vergleichswasserbasislacken BL-V1 und BL-V2 und den erfindungsgemäßen Wasserbasislacken BL-A1 bis BL-A4 nach folgender, allgemeinen Vorschrift hergestellt:

### Originallackierung

Als Substrat diente ein Blech der Abmessungen 10 cm x 20 cm, welches eine gehärtete Füllerlackierung eines handelsüblichen Füllers mit einer Schichtdicke von 30 ± 3 µm aufwies. Bei der Herstellung dieses Substrats wurde der Füller über einen Zeitraum von 10 Minuten bei 80°C zwischengetrocknet und anschließend bei 150°C / 14 Minuten bzw. alternativ bei 190°C / 30 Minuten eingebrannt.

Auf dieses unterschiedlich eingebrannte Substrat wurde zunächst jeweils der Wasserbasislack pneumatisch mit einer Zielschichtdicke von 14 ± 2 µm appliziert. Nach 1 Minute Ablüften bei Raumtemperatur wurden der Wasserbasislack über 10 Minuten bei 70 °C im Umluftofen zwischengetrocknet. Anschließend wurde der von der BASF Coatings GmbH kommerziell erhältliche Zweikomponenten-Klarlack ProGloss^{®} (FF99-0345) mit einer Zielschichtdicke von 40 ± 5 µm ebenfalls pneumatisch appliziert und nach 20 Minuten Ablüften bei Raumtemperatur Basislack und Klarlack gemeinsam bei 125°C / 20 Minuten (unterbrannte Originallackierung) bzw. alternativ bei 160°C / 30 Minuten (überbrannte Originallackierung) im Umluftofen eingebrannt. Es resultierten Mehrschichtlackierungen, die gemäß Herstellbedingungen 1 oder 2 hergestellt wurden (vergleiche Tabelle 5.1).

### Reparaturlackierung

Auf die Originallackierung (überbrannt und unterbrannt) wurde nach Abkühlen auf Raumtemperatur zuerst wiederum der Wasserbasislack mit einer Zielschichtdicke von 14 ± 2 µm pneumatisch appliziert und nach 1 Minute Ablüften bei Raumtemperatur der Wasserbasislack über 10 Minuten bei 70 °C im Umluftofen zwischengetrocknet. Anschließend wurde der von der BASF Coatings GmbH kommerziell erhältliche Zweikomponenten-Klarlack ProGloss^{®} (FF99-0345) mit einer Zielschichtdicke von 40 ± 5 µm ebenfalls pneumatisch appliziert und nach 20 Minuten Ablüften bei Raumtemperatur Basislack und Klarlack gemeinsam bei 125°C / 20 Minuten (unterbrannte Reparaturlackierung) bzw. alternativ bei 160°C / 30 Minuten (überbrannte Reparaturlackierung) im Umluftofen eingebrannt.

Es resultierte jeweils eine über- bzw. unterbrannte Doppellackierung, die im Folgenden als über- beziehungsweise unterbrannte Reparaturlackierung oder auch als Mehrschichtlackierungen hergestellt gemäß Herstellbedingungen 3 und 4 bezeichnet werden (vergleiche Tabelle 5.1).

Tabelle 5.1 fasst die Unterschiede der einzelnen Mehrschichtaufbauten hinsichtlich der Herstellbedingungen, insbesondere Einbrennbedingungen, nochmals zusammen.

**Tabelle 5.1**

| **Herstellbedingungen für die Mehrschichtaufbauten der Bleche 1 bis 4** | | | | | | | |
|---|---|---|---|---|---|---|---|
| Herstellbedingung | | Mehrschichtaufbau | | | | | |
| | | Füller | | Basislack / Klarlack | | Basislack / Klarlack | |
| 1 | Originallackierung (unterbrannt) | 150°C | 14 min | 125°C | 20 min | | |
| 2 | Originallackierung (überbran nt) | 190°C | 30 min | 160°C | 30 min | | |
| 3 | Reparaturlackierung (unterbrannt) | 150°C | 14 min | 125°C | 20 min | 125°C | 20 min |
| 4 | Reparaturlackierung (überbran nt) | 190°C | 30 min | 160°C | 30 min | 160°C | 30 min |

Zur Beurteilung der Haftungseigenschaften dieser Mehrschichtlackierungen wurden diese der Gitterschnitt- und Steinschlagprüfungen unterzogen.

Der Gitterschnitttest wurde nach DIN 2409 an unbelasteten Proben durchgeführt. Die Beurteilung der Ergebnisse des Gitterschnitttests wurde nach DIN EN ISO 2409 vorgenommen (Note 0 bis 5; 0 = bester Wert, 5 = schlechtester Wert).

Der Steinschlagtest wurde nach DIN EN ISO 20567-1, Verfahren B, durchgeführt. Die Beurteilung der Ergebnisse des Steinschlagtests erfolgte nach DIN EN ISO 20567-1 (Werte ≤ 1,5 in Ordnung, Werte > 1,5 nicht in Ordnung).

In Tabelle 5.2 wurden die Ergebnisse der Gitterschnitt- und Steinschlagprüfungen zusammengestellt.

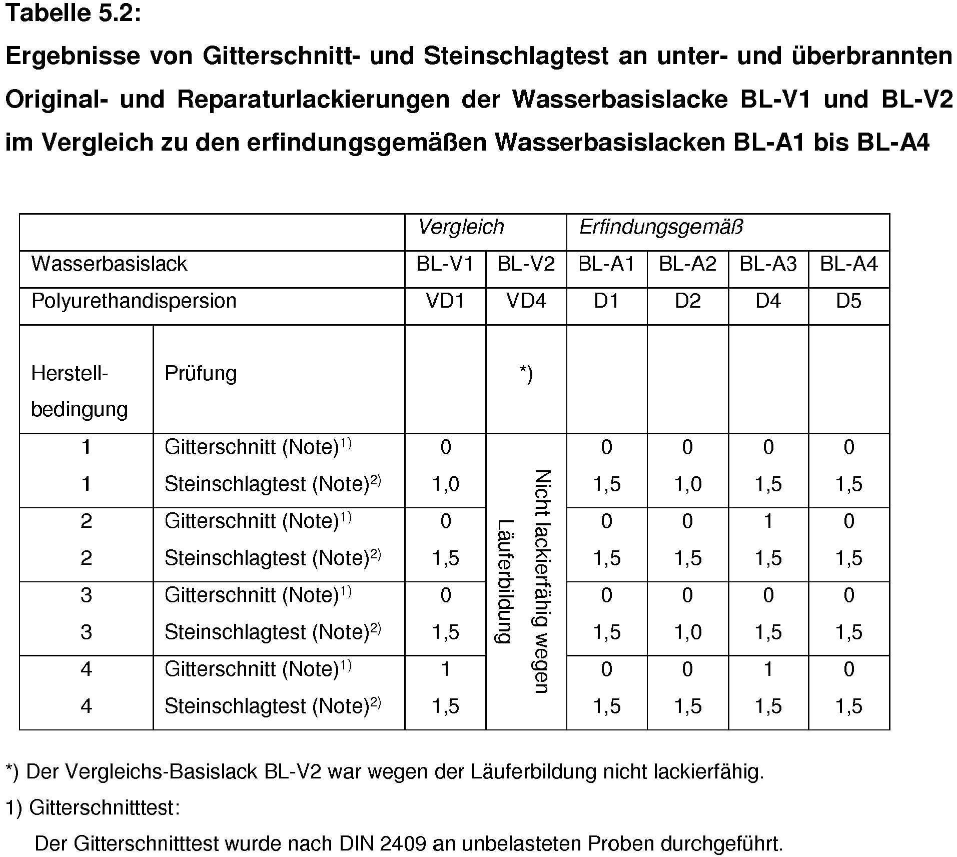

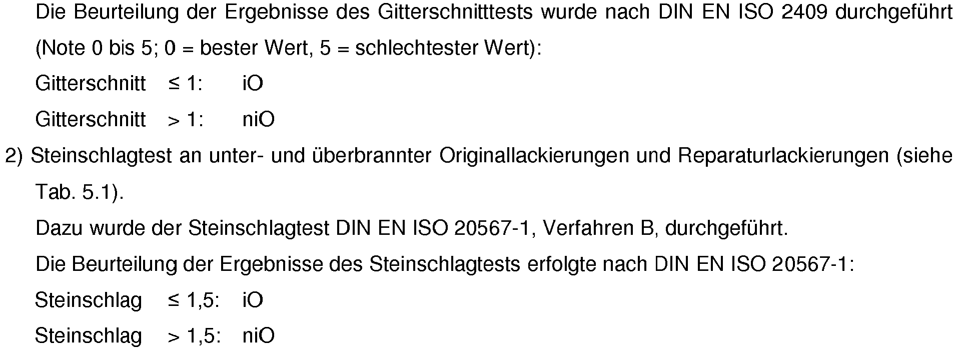

Die Ergebnisse bestätigen, dass der Einsatz erfindungsgemäßer Polyurethan-Polyharnstoff-Mikrogel-Dispersionen in Wasserbasislacken ohne Schichtsilikat-Verdicker keine Haftungsprobleme nach sich zieht. Vielmehr wird ein vergleichbar gutes, teilweise sogar verbessertes Haftungsniveau erreicht, als bei Mehrschichtlackierungen, die unter Einsatz des Standard-Wasserbasislacks BL-V1 mit Schichtsilikat-Verdicker hergestellt wurden.

### Vergleich der erfindungsgemäßen, silberblauen Wasserbasislacke BL-A1 und BL-A2 mit dem Standard-Wasserbasislack BL-V1 enthaltend Schichtsilikat-Verdicker, welche direkt als farbgebende Schicht auf einen gehärteten Füller aufgetragen wurden, in Hinblick auf winkelabhängige Farbtonwerte

Zur Bestimmung der aus den verschiedenen Wasserbasislacken resultierenden winkelabhängigen Farbtonwerte wurden Mehrschichtlackierungen nach der folgenden allgemeinen Vorschrift hergestellt:
Ein mit einer Standard-KTL (Cathoguard^{®} 500 der Firma BASF Coatings GmbH) beschichtetes Stahlblech der Abmessungen 10 x 20 cm wurde mit einem Standard-Füller (SecuBloc mittelgrau der Firma BASF Coatings GmbH) bei einer Zielschichtdicke von 25 - 35 µm beschichtet. Nach 10 Minuten Ablüften bei Raumtemperatur sowie Zwischentrocknen des wässrigen Füllers über einen Zeitraum von 10 Minuten bei 70 °C wurde dieser bei einer Temperatur von 160 °C über einen Zeitraum von 30 Minuten eingebrannt.

Die Wasserbasislacke BL-A1, BL-A2 und BL-V1 wurden auf den so beschichteten Stahltafeln mittels Zweifachauftrag appliziert. Die Applikation im ersten Schritt erfolgte elektrostatisch mit einer Zielschichtdicke von 8 - 11 µm, im zweiten Schritt wurde nach einer Ablüftzeit von 3 Minuten und 40 Sekunden bei Raumtemperatur pneumatisch mit einer Zielschichtdicke von 3 - 5 µm appliziert. Die resultierende Wasserbasislackschicht wurde anschließend nach erneuter Ablüftzeit bei Raumtemperatur von 4 Minuten und 30 Sekunden im Umluftofen für 5 Minuten bei 70 °C getrocknet.

Auf die getrocknete Wasserbasislackschicht wurde ein von der BASF Coatings GmbH kommerziell erhältlicher Zweikomponenten-Klarlack ProGloss^{®} (FF99-0345) appliziert. Die resultierende Klarlackschicht wurde während 20 Minuten bei Raumtemperatur abgelüftet. Anschließend wurden Wasserbasislackschicht und Klarlackschicht in einem Umluftofen 20 Minuten bei 140°C gemeinsam gehärtet.

Die Schichtdicke der gehärteten Klarlackschicht war über das gesamte Blech konstant (± 1 µm) bei einer Klarlackschichtdicke von 40 bis 45 µm.

Die so erhaltenen Mehrschichtlackierungen wurden mit Hilfe eines Spektralphotometers der Firma X-Rite (X-Rite MA68 Multi-Angle Spectrophotometer) vermessen. Die Oberfläche wird mit einer Lichtquelle beleuchtet und unter verschiedenen Winkeln eine spektrale Detektion im sichtbaren Bereich durchgeführt. Aus den spektralen Messwerten können, unter Einbeziehung der Normspektralwerte sowie des Reflektionsspektrums der eingesetzten Lichtquelle, Farbwerte im CIE L*a*b*-Farbraum berechnet werden, wobei L* die Helligkeit, a* den Rot-Grün-Wert und b* den Gelb-Blau-Wert charakterisieren. Dieses Verfahren ist für Metall-Flakes enthaltende Materialien in der ASTM E2194-12 beschrieben.

In Tabelle 6 sind die jeweiligen Farbtonwerte für die verschiedenen Lacke angegeben, wobei die Werte des BL-V1 als Referenzwert genutzt wurden. Bei den angegebenen Werten handelt es sich um CIE L*a*b*-Werte.

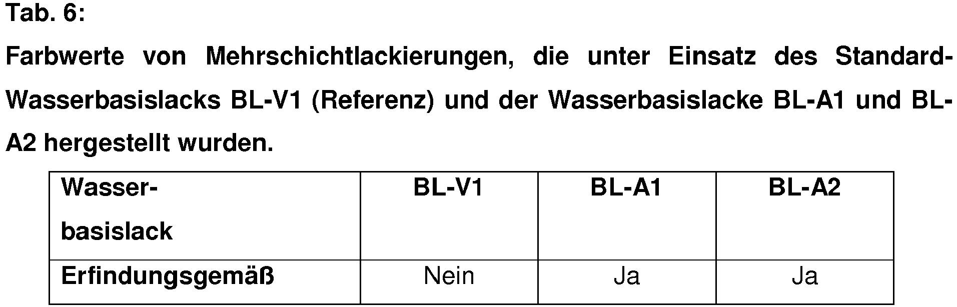

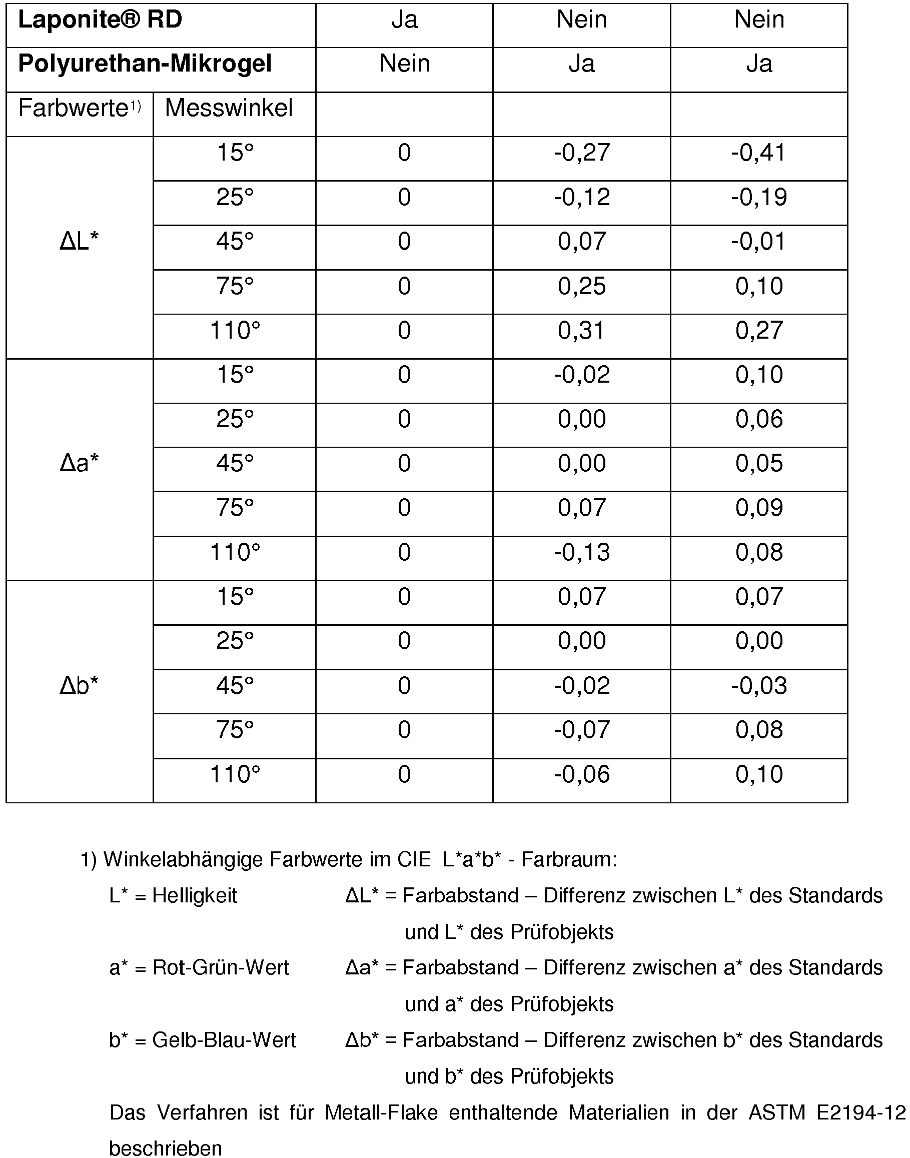

Die Farbtonwerte der erfindungsgemäßen Wasserbasislacke sind nahezu identisch mit denen des Standard-Wasserbasislacks, die Abweichungen liegen in bei Lackierungsprozessen auftretenden Schwankungsbreiten. Alle Mehrschichtlackierungen weisen einen ähnlichen visuellen Eindruck auf und waren frei von jeglichen Störstellen.

## Patentansprüche

1. Wässrige Polyurethan-Polyharnstoff-Dispersion (PD) mit in der Dispersion enthaltenen Polyurethan-Polyharnstoff-Partikeln mit einer mittleren Teilchengröße von 40 bis 2000 nm (Messmethode siehe Beschreibung) und einem Gelanteil von mindestens 50 (Messmethode siehe Beschreibung) erhältlich durch
(I) Herstellung einer Zusammensetzung (Z) enthaltend, jeweils bezogen auf die Gesamtmenge der Zusammensetzung (Z),
(Z.1) 15 bis 65 Gew.-% mindestens eines Isocyanatgruppen-haltigen Intermediats mit maskierten primären Aminogruppen, dessen Herstellung die Umsetzung
(Z.1.1) mindestens eines Isocyanatgruppen-haltigen Polyurethan-Präpolymers enthaltend anionische und/oder in anionische Gruppen überführbare Gruppen mit
(Z.1.2) mindestens einem Polyamin enthaltend mindestens zwei maskierte primäre Aminogruppen und mindestens eine freie sekundäre Aminogruppe
durch Additionsreaktion von Isocyanatgruppen aus (Z.1.1) mit freien sekundären Aminogruppen aus (Z.1.2) umfasst,
(Z.2) 35 bis 85 Gew.-% mindestens eines organischen Lösemittels, welches bei einer Temperatur von 20°C eine Löslichkeit in Wasser von höchstens 38 Gew.-% (Messmethode siehe Beschreibung) besitzt,
(II) Dispergierung der Zusammensetzung (Z) in wässriger Phase und
(III) zumindest teilweise Entfernung des mindestens einen organischen Lösemittels (Z.2) aus der unter (II) erhaltenen Dispersion.

2. Wässrige Polyurethan-Polyharnstoff-Dispersion nach Anspruch 1, **dadurch gekennzeichnet, dass** das Präpolymer (Z.1.1) Carbonsäuregruppen enthält.

3. Wässrige Polyurethan-Polyharnstoff-Dispersion nach Anspruch 1 oder 2, **dadurch gekennzeichnet, dass** die maskierten primären Aminogruppen des Polyamins (Z.1.2) mit Ketonen maskiert sind.

4. Wässrige Polyurethan-Polyharnstoff-Dispersion nach Anspruch 1 bis 3, **dadurch gekennzeichnet, dass** das Polyamin (Z.1.2) ein oder zwei freie sekundäre Aminogruppen sowie zwei maskierte primäre Aminogruppen besitzt.

5. Wässrige Polyurethan-Polyharnstoff-Dispersion nach Anspruch 4, **dadurch gekennzeichnet, dass** das Polyamin (Z.1.2) aus ein oder zwei freien sekundären Aminogruppen, zwei maskierten primären Aminogruppen sowie aliphatischgesättigten Kohlenwasserstoffgruppen besteht.

6. Wässrige Polyurethan-Polyharnstoff-Dispersion nach Anspruch 1 bis 5, **dadurch gekennzeichnet, dass** bei der Umsetzung des Präpolymers (Z.1.1) mit dem Polyamin (Z.1.2) die molaren Mengen von Isocyanatgruppen von (Z.1.1) und Aminogruppen von (Z.1.2) der Bedingung [n (Isocyanatgruppen von (Z.1.1)) - n (freie sekundäre Aminogruppen von (Z.1.2))] / n (maskierte primäre Aminogruppen von (Z.1.2)) = 1,2/1 bis 4/1, bevorzugt 1,5/1 bis 3/1, ganz besonders bevorzugt 1,8/1 bis 2,2/1, genügen.

7. Wässrige Polyurethan-Polyharnstoff-Dispersion nach Anspruch 1 bis 6, **dadurch gekennzeichnet, dass** der Anteil des Intermediats (Z.1) an der Zusammensetzung (Z) von 35 bis 52,5 Gew.-% beträgt.

8. Wässrige Polyurethan-Polyharnstoff-Dispersion nach Anspruch 1 bis 7, **dadurch gekennzeichnet, dass** das Lösemittel (Z.2) Methylethylketon ist.

9. Wässrige Polyurethan-Polyharnstoff-Dispersion nach Anspruch 1 bis 8, **dadurch gekennzeichnet, dass** sie 25 bis 55 Gew.-% Polyurethan-Polyharnstoff-Polymer und 45 bis 75 Gew.-% Wasser enthält, wobei der Gesamtanteil aus Polyurethan-Polyharnstoff-Polymer und Wasser mindestens 90 Gew.-% beträgt.

10. Verfahren zur Herstellung einer wässrigen Polyurethan-Polyharnstoff-Dispersion (PD) mit in der Dispersion enthaltenen Polyurethan-Polyharnstoff-Partikeln mit einer mittleren Teilchengröße von 40 bis 2000 nm (Messmethode siehe Beschreibung) und einem Gelanteil von mindestens 50 % (Messmethode siehe Beschreibung) welches die folgenden Schritte in der angegebenen Reihenfolge umfasst:
(I) Herstellung einer Zusammensetzung (Z) enthaltend, jeweils bezogen auf die Gesamtmenge der Zusammensetzung (Z),
(Z.1) 15 bis 65 Gew.-% mindestens eines Isocyanatgruppen-haltigen Intermediats mit maskierten primären Aminogruppen, dessen Herstellung die Umsetzung
(Z.1.1) mindestens eines Isocyanatgruppen-haltigen Polyurethan-Präpolymers enthaltend anionische und/oder in anionische Gruppen überführbare Gruppen mit
(Z.1.2) mindestens einem Polyamin enthaltend mindestens zwei maskierte primäre Aminogruppen und mindestens eine freie sekundäre Aminogruppe
durch Additionsreaktion von Isocyanatgruppen aus (Z.1.1) mit freien sekundären Aminogruppen aus (Z.1.2) umfasst,
(Z.2) 35 bis 85 Gew.-% mindestens eines organischen Lösemittels, welches bei einer Temperatur von 20°C eine Löslichkeit in Wasser von höchstens 38 Gew.-% (Messmethode siehe Beschreibung) besitzt,
(II) Dispergierung der Zusammensetzung (Z) in wässriger Phase und
(III) zumindest teilweise Entfernung des mindestens einen organischen Lösemittels (Z.2) aus der unter (II) erhaltenen Dispersion.

11. Pigmentierter wässriger Basislack enthaltend eine Dispersion gemäß einem der Ansprüche 1 bis 9.

12. Pigmentierter wässriger Basislack nach Anspruch 11, **dadurch gekennzeichnet, dass** er einen Festkörper von 30 bis 50 % aufweist.

13. Pigmentierter wässriger Basislack nach Anspruch 11 oder 12, **dadurch gekennzeichnet, dass** er zudem mindestens ein von dem in der Dispersion (PD) enthaltenen Polymer unterschiedliches hydroxyfunktionelles Polymer sowie ein Melaminharz enthält.

14. Verfahren zur Herstellung einer Mehrschichtlackierung, bei dem
(1) ein wässriger Basislack auf ein Substrat aufgebracht wird,
(2) aus dem in Stufe (1) aufgebrachten Lack ein Polymerfilm gebildet wird,
(3) auf die so erhaltene Basislackschicht ein Klarlack aufgebracht wird und anschließend
(4) die Basislackschicht zusammen mit der Klarlackschicht gehärtet wird,
**dadurch gekennzeichnet, dass** der in Stufe (1) eingesetzte wässrige Basislack ein Basislack gemäß einem der Ansprüche 11 bis 13 ist.

15. Mehrschichtlackierung, die nach dem Verfahren gemäß Anspruch 14 hergestellt wurde.

16. Verwendung einer Dispersion gemäß einem der Ansprüche 1 bis 9 zur Verbesserung der optischen Eigenschaften, insbesondere der Stabilität gegen Nadelstiche und Kocher, von Basislackschichten in Mehrschichtlackierungen.

## Claims

1. Aqueous polyurethane-polyurea dispersion (PD) having polyurethane-polyurea particles present in the dispersion, having an average particle size of 40 to 2000 nm (measurement method: see Description), and having a gel fraction of at least 50 (measurement method: see Description), obtainable by
(I) preparing a composition (Z) comprising, based in each case on the total amount of the composition (Z),
(Z.1) 15 to 65 wt% of at least one intermediate containing isocyanate groups and having blocked primary amino groups, its preparation comprising the reaction
(Z.1.1) of at least one polyurethane prepolymer containing isocyanate groups and comprising anionic groups and/or groups which can be converted into anionic groups, with
(Z.1.2) at least one polyamine comprising at least two blocked primary amino groups and at least one free secondary amino group, by addition reaction of isocyanate groups from (Z.1.1) with free secondary amino groups from (Z.1.2),
(Z.2) 35 to 85 wt% of at least one organic solvent which possesses a solubility in water of not more than 38 wt% at a temperature of 20°C (measurement method: see Description),
(II) dispersing the composition (Z) in aqueous phase, and
(III) at least partly removing the at least one organic solvent (Z.2) from the dispersion obtained in (II).

2. Aqueous polyurethane-polyurea dispersion according to Claim 1, **characterized in that** the prepolymer (Z.1.1) comprises carboxylic acid groups.

3. Aqueous polyurethane-polyurea dispersion according to Claim 1 or 2, **characterized in that** the blocked primary amino groups of the polyamine (Z.1.2) are blocked with ketones.

4. Aqueous polyurethane-polyurea dispersion according to Claim 1 to 3, **characterized in that** the polyamine (Z.1.2) possesses one or two free secondary amino groups and also two blocked primary amino groups.

5. Aqueous polyurethane-polyurea dispersion according to Claim 4, **characterized in that** the polyamine (Z.1.2) consists of one or two free secondary amino groups, two blocked primary amino groups, and also aliphatically saturated hydrocarbon groups.

6. Aqueous polyurethane-polyurea dispersion according to Claim 1 to 5, **characterized in that**, in the reaction of the prepolymer (Z.1.1) with the polyamine (Z.1.2), the molar amounts of isocyanate groups from (Z.1.1) and amino groups from (Z.1.2) satisfy the condition [n (isocyanate groups from (Z.1.1)) - n (free secondary amino groups from (Z.1.2))] / n (blocked primary amino groups from (Z.1.2)) = 1.2/1 to 4/1, preferably 1.5/1 to 3/1, very preferably 1.8/1 to 2.2/1.

7. Aqueous polyurethane-polyurea dispersion according to Claim 1 to 6, **characterized in that** the fraction of the intermediate (Z.1) in the composition (Z) is from 35 to 52.5 wt%.

8. Aqueous polyurethane-polyurea dispersion according to Claim 1 to 7, **characterized in that** the solvent (Z.2) is methyl ethyl ketone.

9. Aqueous polyurethane-polyurea dispersion according to Claim 1 to 8, **characterized in that** it comprises 25 to 55 wt% of polyurethane-polyurea polymer and 45 to 75 wt% of water, the total fraction of polyurethane-polyurea polymer and water being at least 90 wt%.

10. Process for preparing an aqueous polyurethane-polyurea dispersion (PD) having polyurethane-polyurea particles present in the dispersion, having an average particle size of 40 to 2000 nm (measurement method: see Description), and having a gel fraction of at least 50% (measurement method: see Description), said process comprising the following steps in the stated order:
(I) preparing a composition (Z) comprising, based in each case on the total amount of the composition (Z),
(Z.1) 15 to 65 wt% of at least one intermediate containing isocyanate groups and having blocked primary amino groups, its preparation comprising the reaction
(Z.1.1) of at least one polyurethane prepolymer containing isocyanate groups and comprising anionic groups and/or groups which can be converted into anionic groups, with
(Z.1.2) at least one polyamine comprising at least two blocked primary amino groups and at least one free secondary amino group, by addition reaction of isocyanate groups from (Z.1.1) with free secondary amino groups from (Z.1.2),
(Z.2) 35 to 85 wt% of at least one organic solvent which possesses a solubility in water of not more than 38 wt% at a temperature of 20°C (measurement method: see Description),
(II) dispersing the composition (Z) in aqueous phase, and
(III) at least partly removing the at least one organic solvent (Z.2) from the dispersion obtained in (II).

11. Pigmented aqueous basecoat material comprising a dispersion according to any of Claims 1 to 9.

12. Pigmented aqueous basecoat material according to Claim 11, **characterized in that** it has a solids content of 30% to 50%.

13. Pigmented aqueous basecoat material according to Claim 11 or 12, **characterized in that** it further comprises a melamine resin and also at least one hydroxyfunctional polymer which is different from the polymer present in the dispersion (PD).

14. Method for producing a multicoat paint system, in which
(1) an aqueous basecoat material is applied to a substrate,
(2) a polymer film is formed from the coating material applied in stage (1),
(3) a clearcoat material is applied to the resulting basecoat film, and then
(4) the basecoat film is cured together with the clearcoat film,
**characterized in that** the aqueous basecoat material used in stage (1) is a basecoat material according to any of Claims 11 to 13.

15. Multicoat paint system produced by the method according to Claim 14.

16. Use of a dispersion according to any of Claims 1 to 9 to improve the optical properties, more particularly the stability with respect to pinholes and pops, of basecoat films in multicoat paint systems.

## Revendications

1. Dispersion aqueuse de polyuréthane-polyurée (PD) comportant des particules de polyuréthane-polyurée contenues dans la dispersion, ayant une granulométrie moyenne de 40 à 2 000 nm (méthode de mesure : voir la description) et une teneur en gel d'au moins 50 (méthode de mesure : voir la description), pouvant être obtenue par
(I) fabrication d'une composition (Z) contenant, dans chaque cas par rapport à la quantité totale de la composition (Z),
(Z.1) 15 à 65 % en poids d'au moins un intermédiaire contenant des groupes isocyanate, ayant des groupes amino primaires masqués, dont la préparation comprend la réaction
(Z.1.1) d'au moins un prépolymère de polyuréthane contenant des groupes isocyanate, contenant des groupes anioniques ou pouvant être convertis en des groupes anioniques, avec
(Z.1.2) au moins une polyamine contenant au moins deux groupes amino primaires masqués et au moins un groupe amino secondaire libre, par une réaction d'addition de groupes isocyanate de (Z.1.1) avec des groupes amino secondaires libres de (Z.1.2),
(Z.2) 35 à 85 % en poids d'au moins un solvant organique, qui présente à une température de 20 °C une solubilité dans l'eau d'au plus 38 % en poids (méthode de mesure : voir la description),
(II) dispersion de la composition (Z) dans une phase aqueuse et
(III) élimination au moins partielle de l'au moins un solvant organique (Z.2) de la dispersion obtenue en (II).

2. Dispersion aqueuse de polyuréthane-polyurée selon la revendication 1, **caractérisée en ce que** le prépolymère (Z.1.1) contient des groupes acide carboxylique.

3. Dispersion aqueuse de polyuréthane-polyurée selon la revendication 1 ou 2, **caractérisée en ce que** les groupes amino primaires masqués de la polyamine (Z.1.2) sont masqués par des cétones.

4. Dispersion aqueuse de polyuréthane-polyurée selon les revendications 1 à 3, **caractérisée en ce que** la polyamine (Z.1.2) possède un ou deux groupes amino secondaires libres ainsi que deux groupes amino primaires masqués.

5. Dispersion aqueuse de polyuréthane-polyurée selon la revendication 4, **caractérisée en ce que** la polyamine (Z.1.2) est constituée d'un ou deux groupes amino secondaires libres, de deux groupes amino primaires masqués ainsi que de groupes hydrocarbonés à saturation aliphatique.

6. Dispersion aqueuse de polyuréthane-polyurée selon les revendications 1 à 5, **caractérisée en ce que**, lors de la réaction du prépolymère (Z.1.1) avec la polyamine (Z.1.2), les quantités molaires des groupes isocyanate de (Z.1.1) et des groupes amino de (Z.1.2) satisfont à la condition [n (groupes isocyanate de (Z.1.1)) - n (groupes amino secondaires libres de (Z.1.2))] / n (groupes amino primaires masqués de (Z.1.2)) = 1,2/1 à 4/1, de préférence 1,5/1 à 3/1, d'une manière tout particulièrement préférée 1,8/1 à 2,2/1.

7. Dispersion aqueuse de polyuréthane-polyurée selon les revendications 1 à 6, **caractérisée en ce que** la proportion de l'intermédiaire (Z.1) dans la composition (Z) est de 35 à 52,5 % en poids.

8. Dispersion aqueuse de polyuréthane-polyurée selon les revendications 1 à 7, **caractérisée en ce que** le solvant (Z.2) est la méthyléthylcétone.

9. Dispersion aqueuse de polyuréthane-polyurée selon les revendications 1 à 8, **caractérisée en ce qu'**elle contient 25 à 55 % en poids d'un polymère polyuréthane-polyurée et 45 à 75 % en poids d'eau, la proportion totale du polymère de polyuréthane-polyurée et de l'eau étant d'au moins 90 % en poids.

10. Procédé de fabrication d'une dispersion aqueuse de polyuréthane-polyurée (PD) ayant des particules de polyuréthane-polyurée contenues dans la dispersion, ayant une granulométrie moyenne de 40 à 2 000 nm (méthode de mesure : voir la description) et une proportion de gel d'au moins 50 % (méthode de mesure : voir la description), qui comprend les étapes suivantes dans l'ordre indiqué :
(I) fabrication d'une composition (Z) contenant, dans chaque cas par rapport à la quantité totale de la composition (Z),
(Z.1) 15 à 65 % en poids d'au moins un intermédiaire contenant des groupes isocyanates, ayant des groupes amino primaires masqués, dont la préparation comprend la réaction
(Z.1.1) d'au moins un prépolymère de polyuréthane contenant des groupes isocyanate, contenant des groupes anioniques ou pouvant être convertis en des groupes anioniques, avec
(Z.1.2) au moins une polyamine contenant au moins deux groupes amino primaires masqués et au moins un groupe amino secondaire libre, par une réaction d'addition de groupes isocyanate de (Z.1.1) avec des groupes amino secondaires libres de (Z.1.2),
(Z.2) 35 à 85 % en poids d'au moins un solvant organique, qui présente à une température de 20 °C une solubilité dans l'eau d'au plus 38 % en poids (méthode de mesure : voir la description),
(II) dispersion de la composition (Z) dans une phase aqueuse et
(III) élimination au moins partielle de l'au moins un solvant organique (Z.2) de la dispersion obtenue en (II).

11. Vernis de base pigmenté à l'eau contenant une dispersion selon l'une des revendications 1 à 9.

12. Vernis de base pigmenté à l'eau selon la revendication 11, **caractérisé en ce qu'**il présente une teneur en extrait sec de 30 à 50 %.

13. Vernis de base pigmenté à l'eau selon la revendication 11 ou 12, **caractérisé en ce qu'**il contient en outre au moins un polymère à fonctionnalité hydroxy, différent du polymère contenu dans la dispersion (PD) ainsi qu'une résine de mélamine.

14. Procédé de fabrication d'un système de peinture multicouche, dans lequel
(1) on applique sur un subjectile un vernis de base à l'eau,
(2) on forme un film polymère à partir du vernis appliqué dans l'étape (1),
(3) on applique sur la couche de vernis de base ainsi obtenue un vernis transparent, et enfin
(4) on durcit la couche de vernis de base en même
temps que la couche de vernis transparent, **caractérisé en ce que** le vernis de base à l'eau utilisé dans l'étape (1) est un vernis de base selon l'une des revendications 11 à 13.

15. Système de peinture multicouche, qui a été fabriqué par le procédé selon la revendication 14.

16. Utilisation d'une dispersion selon l'une des revendications 1 à 9 pour améliorer les propriétés optiques, en particulier la stabilité vis-à-vis des trous d'épingle et des bulles, des couches de vernis de base dans les systèmes de peinture multicouches.
